(19) Europäisches Patentamt
European Patent Office
Office européen des brevets

(11) EP 1 998 329 A2

(12) **EUROPEAN PATENT APPLICATION**

(43) Date of publication:
**03.12.2008 Bulletin 2008/49**

(51) Int Cl.:
***G11B 7/256*** *(2006.01)* ***G11B 7/246*** *(2006.01)*

(21) Application number: **08009976.5**

(22) Date of filing: **30.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **01.06.2007 JP 2007147344**

(71) Applicant: **Fujifilm Corporation**
**Tokyo 106-0031 (JP)**

(72) Inventors:
- **Watanabe Kousuke**
  **c/o Fujifilm Corporation**
  **Kanagawa 250-0193 (JP)**
- **Katayama Kazutoshi**
  **c/o Fujifilm Corporation**
  **Kanagawa 250-0001 (JP)**
- **Takahashi Keita**
  **c/o Fujifilm Corporation**
  **Kanagawa 258-8577 (JP)**
- **Hashizume Taro**
  **c/o Fujifilm Corporation**
  **Kanagawa 250-0001 (JP)**
- **Horimai Kiyoshi**
  **c/o Fujifilm Corporation**
  **Kanagawa 250-0001 (JP)**

(74) Representative: **Klunker . Schmitt-Nilson . Hirsch**
**Winzererstrasse 106**
**80797 München (DE)**

(54) **Optical information recording medium and method of recording information**

(57) The optical information recording medium comprises a reflective layer, a recording layer, a barrier layer, and a cover layer in this order on a surface of a support, and a layer formed by curing an ultraviolet radiation-curable composition between the barrier layer and the cover layer, the layer having a glass transition temperature of equal to or lower than 25˚C. The surface of the support has pregrooves with a track pitch of 50 to 500 nm. The recording layer ranges in thickness from 1 to 100 nm on the lands and from 5 to 150 nm on the grooves, and comprises at least one azo dye compound selected from the group consisting of an azo compound and an azo metal complex compound comprising an azo compound and a metal ion or metal oxide ion, with an attenuation coefficient of 0.15 to 0.3 at a wavelength of 405 nm.

EP 1 998 329 A2

## Description

BACKGROUND OF THE INVENTION

FIELD OF THE INVENTION

The present invention relates to an optical information recording medium, more particularly, a Blu-ray type optical information recording medium, permitting the recording and reproducing of information with a short-wavelength laser beam. The present invention further relates to a method of recording information on the optical information recording medium.

DISCUSSION OF THE BACKGROUND

The recordable CD (CD-R) and recordable DVD (DVD-R) have been known as optical information recording media permitting the "write-once" recording of information with a laser beam.
In contrast to the recording of information on a CD-R, which is conducted with a laser beam in the infrared range (normally, at a wavelength of about 780 nm), the recording of information on a DVD-R is conducted with a visible light laser beam (with a wavelength of about 630 to 680 nm). Since a recording laser beam of shorter wavelength is employed for a DVD-R than for a CD-R, the DVD-R has an advantage of being able to record at higher density than on a CD-R. Thus, the status of the DVD-R as a high-capacity recording medium has to some degree been ensured in recent years.
Networks, such as the Internet, and high-definition television have recently achieved widespread popularity. With high-definition television (HDTV) broadcasts near at hand, demand is growing for high-capacity recording media for recording image information both economically and conveniently. However, the CD-R and DVD-R do not afford recording capacities that are adequate to handle future needs. Accordingly, to increase the recording density by using a laser beam of even shorter wavelength than that employed in a DVD-R, the development of high-capacity disks capable of recording with laser beams of short wavelength for example, equal to or shorter than 440 nm) is progressing. For example, an optical recording disk known as the "Blu-ray Disk" (also referred to as "BD", hereinafter) employing a blue laser of 405 nm has been proposed.
For example, Japanese Unexamined Patent Publication (KOKAI) Heisei Nos. 11-310728 and No. 11-130970, Japanese Unexamined Patent Publication (KOKAI) Nos. 2002-274040 and 2000-168237 propose the use of azo metal complex dyes as dye compounds incorporated in the recording layer in DVD-R optical disks. However, these azo metal complex dyes have absorption waveforms corresponding to red lasers, and do not afford adequate recording characteristics in recording with short wavelength laser beams (of, for example, 405 nm).
Accordingly, in optical recording disks employing short wavelength laser beams (for example, a blue laser beam of 405 nm), investigation is being conducted in an attempt to shorten the absorption wavelength of the azo metal complexes employed in DVD-Rs. Such investigation is discloses in, for example, Japanese Unexamined Patent Publication (KOKAI) Nos. 2001-158862 and 2006-142789, Japanese Unexamined Patent Publication (KOKAI) No. 2006-306070 or English language family member EP 1 864 822 A1, Japanese Unexamined Patent Publication (KOKAI) No. 2005-297406 or English language family member US 2005/0227178 A1, and Japanese Unexamined Patent Publication (KOKAI) No. 2005-297407 or English language family member US 2005/0226135 A1. The use of metal-containing azo dyes as recording dyes and the optimization of the refractive indexes, attenuation coefficients, thermal decomposition starting temperatures, and the like of these dyes are also being investigated. Such investigation is disclosed in Japanese Unexamined Patent Publication (KOKAI) No. 2007-26541 or English language family member US 2006/0204706 A1.
The track pitch in the above-mentioned Blu-ray disk is generally narrower than that in conventional recordable optical disks. In addition, the Blu-ray disk has a layer structure differing from that of conventional recordable optical disks, in the form of a reflective layer and a recording layer sequentially present on a support, with a relatively thin layer having light-passing properties (generally referred to as a "cover layer") being adhered by means of an adhesive layer over the recording layer. Since the Blu-ray disk employs a structure differing from that of conventional recordable optical disks and employs a recording laser beam of shortened wavelength, as set forth above, there is a problem in that adequate recording and reproduction characteristics cannot be achieved with the recording dyes employed in conventional recordable optical information recording media such as CD-Rs and DVD-Rs. Above-described Japanese Unexamined Patent Publication (KOKAI) Nos. 2001-158862, 2006-142789, 2006-306070, 2005-297406 and 2005-297407 propose the use of azo metal complexes as recording layer dyes in information recording by irradiation of short-wavelength laser beams. However, we conducted research, revealing that the azo metal complexes described in Japanese Unexamined Patent Publication (KOKAI) Nos. 2001-158862, 2006-142789, 2006-306070, 2005-297406 and 2005-297407 do not necessarily afford adequate recording characteristics (2T CNR) in optical information recording media of the above-described layer structure, nor do they provide adequate reproduction durability.
Japanese Unexamined Patent Publication (KOKAI) No. 2007-26541 proposes the improvement of recording

characteristics by changing the shape of the recording layer by focusing on irradiating the laser beam onto a Blu-ray medium from a different direction from that employed in conventional recordable optical disks. Specifically, Japanese Unexamined Patent Publication (KOKAI) No. 2007-26541 describes achieving good recording characteristics and reproduction durability by specifying the values of the physical properties of the dye in a metal-containing azo dye employed as recording layer dye in an optical recording medium having a recording layer of special morphology achieved by rendering the recording layer thinner than the groove depth (a dye layer is contained in groove indentation portions) and rendering the dye film thickness of groove protrusion portions nearly 0 by adjusting the dye coating concentration and dye solution coating condition. However, the method for forming a special recording layer described in Japanese Unexamined Patent Publication (KOKAI) No. 2007-26541 differs from the method for forming recording layers in conventional CD-Rs and DVD-Rs, and manufacturing is difficult.

SUMMARY OF THE INVENTION

An aspect of the present invention provides for an optical information recording medium of Blu-ray disk structure that can exhibits good recording characteristics during recording by irradiation of a short-wavelength laser beam and is easy to manufacture.

A recording layer capable of recording information by irradiation of a laser beam is present in the optical information recording medium. In this context, the phrase, "capable of recording information by irradiation of a laser beam" means that the optical characteristics of portions of the recording layer that are irradiated with a laser beam change. The change in optical characteristics are thought to be imparted as portions of the recording layer that are irradiated with a laser beam absorb the beam, undergoing a localized rise in temperature that produces a physical or chemical change (for example, forms pits). Pits may be generated, for example, by forming voids in the recording layer through the decomposition of dyes. Information recorded in the recording layer can be read (reproduced), for example, by irradiating a laser beam of the same wavelength as the laser beam used in recording and detecting the difference in optical characteristics such as reflectance between portions (recorded portions) of the recording layer in which the optical characteristics have changed and portions (unrecorded portions) in which they have not. As set forth above, Japanese Unexamined Patent Publication (KOKAI) No. 2007-26541 proposes specifying the values of the physical properties (refractive index, absorption coefficient, weight reduction starting temperature, and the like) of a metal-containing azo dye to achieve good recording performance in a recording layer of special morphology. However, we conducted research, revealing that the metal-containing azo dye described in Japanese Unexamined Patent Publication (KOKAI) No. 2007-26541 does not afford good recording and reproduction characteristics or good reproduction durability in Blu-ray disks manufactured under ordinary coating conditions. This is because recording and reproduction characteristics are greatly affected, not just by the physical properties of the dye, but also by the structure of the medium, so dyes that afford good recording and reproduction characteristics in a medium of given structure do not necessarily afford similarly good recording and reproduction characteristics in a medium of another structure.
Accordingly, we conducted extensive research into obtaining an optical information recording medium of Blu-ray disk structure that was capable of affording good recording characteristics and reproduction durability during recording by irradiation of a short-wavelength laser beam, without major change to the medium structure such as that made in in Japanese Unexamined Patent Publication (KOKAI) No. 2007-26541. As a result, we discovered that the above-stated optical information recording medium was obtained by employing a recording layer dye that had an attenuation coefficient falling within a range of 0.15 to 0.3 at a wavelength of 405 nm in the form of an azo compound that did not form a complex with metal ions or metal oxide ions and/or an azo metal complex compound, and using a soft layer comprised of ultraviolet-curing resin as the bonding layer that bonded the barrier layer to the cover layer; the present invention was devised on that basis.

An aspect of the present invention relates to an optical information recording medium comprising a recording layer on a surface of a support, wherein the surface of the support has pregrooves comprised of plural grooves and lands positioned between adjacent grooves, the pregrooves have a track pitch ranging from 50 to 500 nm, a reflective layer, the recording layer, a barrier layer, and a cover layer are positioned in this order on the surface of the support, and a layer formed by curing an ultraviolet radiation-curable composition is positioned between the barrier layer and the cover layer, the layer having a glass transition temperature of equal to or lower than 25˚C, the recording layer ranges in thickness from 1 to 100 nm on the lands and from 5 to 150 nm on the grooves, the recording layer comprises at least one azo dye compound selected from the group consisting of an azo compound and an azo metal complex compound comprising an azo compound and a metal ion or metal oxide ion, and the azo dye compound has an attenuation coefficient ranging from 0.15 to 0.3 at a wavelength of 405 nm.

The azo dye compound may have a refractive index ranging from 1.45 to 1.75 at a wavelength of 405 nm.

The azo dye compound may have a thermal decomposition property such that a mass reduction rate is equal to or greater than 10 percent in a main reduction process in thermal mass spectrometry.

The azo dye compound may exhibit a total quantity of heat generated in the main reduction process ranging

from -200 to 500 J/g.

The azo dye compound may have a thermal decomposition temperature ranging from 250 to 350˚C.

The metal ion comprised in the azo metal complex compound may be a copper ion.

In the he optical information recording medium, a ratio of the thickness on the lands and the thickness on the grooves, the thickness on the lands/the thickness on the grooves, of the recording layer may range from 0.1 to 1.

The ultraviolet radiation-curable composition may comprise 20 to 99 weight parts of monofunctional (meth) acrylate and 1 to 80 weight parts of polyfunctional (meth)acrylate per 100 weight parts of the ultraviolet radiation-curable composition.

In the optical information recording medium, information may be recorded by irradiation of a laser beam having a wavelength ranging from 390 to 440 nm.

A further aspect of the present invention relates to a method of recording information onto the recording layer comprised in the above optical information recording medium by irradiation of a laser beam having a wavelength ranging from 390 to 440 nm onto the optical information recording medium.

The present invention permits economical production of an optical information recording medium affording excellent recording characteristics in high-density recording by irradiation of a short-wavelength laser beam.

Other exemplary embodiments and advantages of the present invention may be ascertained by reviewing the present disclosure and the accompanying drawings.

## BRIEF DESCRIPTION OF THE DRAWINGS

The present invention will be described in the following text by the exemplary, non-limiting embodiments shown in the figures, wherein:

Fig. 1 is a drawing descriptive of a method of measuring a mass reduction rate in a main reduction process in thermal mass spectrometry.
Fig. 2 is a schematic sectional view of an example of the optical information recording medium of the present invention.
Fig. 3 shows the TG/TDA measurement result of Example compound (M-9).
Fig. 4 shows the TG/TDA measurement result of Example compound (M-39).
Fig. 5 shows the TG/TDA measurement result of Example compound (M-50).
Fig. 6 shows the TG/TDA measurement result of Example compound (C-1).
Fig. 7 shows the DSC measurement result of Example compound (M-9).
Fig. 8 shows the DSC measurement result of Example compound (M-39).
Fig. 9 shows the DSC measurement result of Example compound (M-50).
Fig. 10 shows the DSC measurement result of Example compound (C-1).
Fig. 11 shows the relation between the C/N ration in 2T recording and the recording power in Examples 4, 5 and Comparative Example 1.
Fig. 12 is a drawing descriptive of the 9T signal waveform.
Fig. 13 shows the 9T signal waveform in Example 3.
Fig. 14 shows the 9T signal waveform in Example 4.
Fig. 15 shows the 9T signal waveform in Example 5.
Fig. 16 shows the 9T signal waveform in Comparative Example 1.

Explanations of symbols in the drawings are as follows:

10A First optical information recording medium
12 Support
14 Recording layer
16 Cover layer
18 Light reflective layer
20 Barrier layer
22 Bonding layer
42 First objective lens
44 Hard coat layer
46 Laser beam

## DETAILED DESCRIPTIONS OF THE EMBODIMENTS

The following preferred specific embodiments are, therefore, to be construed as merely illustrative, and non-limiting to the remainder of the disclosure in any way whatsoever. In this regard, no attempt is made to show structural details of the present invention in more detail than is necessary for fundamental understanding of the present invention; the description taken with the drawings making apparent to those skilled in the art how several forms of the present invention may be embodied in practice.

OPTICAL INFORMATION RECORDING MEDIUM

The optical information recording medium of the present invention comprises a recording layer on a surface of a support. The surface of the support has pregrooves comprised of plural grooves and lands positioned between adjacent grooves, the pregrooves have a track pitch ranging from 50 to 500 nm. The optical information recording medium of the present invention comprises a reflective layer, the recording layer, a barrier layer, and a cover layer in this order on the surface. The recording layer ranges in thickness from 1 to 100 nm on the lands and from 5 to 150 nm on the grooves. The present invention can yield good recording characteristics in optical information recording media of the above Blu-ray disk structure:

(1) by using a recording layer dye in the form of at least one azo dye compound selected from the group consisting of (i) an azo compound and (ii) an azo metal complex compound comprising an azo compound and a metal ion or metal oxide ion, the azo dye compound having an attenuation coefficient ranging from 0.15 to 0.3 at a wavelength of 405 nm; and

(2) by providing a layer having a glass transition temperature of equal to or lower than 25˚C, formed by curing an ultraviolet radiation-curable composition, between the barrier layer and the cover layer.

We presume the reasons for which this combination can achieve excellent recording characteristics as follows:

When a recording layer comprising the above azo dye compound is irradiated with a laser beam, the azo dye compound can absorb the laser beam to generate heat. This heat is thought to thermally decompose the dye skeleton or its substituent, thereby generating gas which then forms voids within pits. In the recording layer comprising the above compound, the refractive index of portions that have not been irradiated with a laser beam is generally about 1.3 to 1.9, while the refractive index of portions in which voids have been formed by irradiation with a laser beam is about 1.0, greatly differing from that of portions that have not been irradiated. This is thought to make it possible to achieve a large refractive index difference and enhance recording characteristics. In this context, the use of an azo dye compound with an attenuation coefficient ranging from 0.15 to 0.3 at a wavelength of 405 nm is thought to improve the formation of voids. However, when forming voids in a recording layer by irradiation of a laser beam as set forth above, the formation of voids is normally accompanied by deformation of the recording layer. When this deformation of the recording layer is impeded, the voids do not form properly and it becomes difficult to achieve adequate recording characteristics. For example, in an optical information recording medium sequentially comprised of a support, a reflective layer, a recording layer, a barrier layer, a bonding layer, and a cover layer, the support and the reflective layer generally have greater rigidity than the bonding layer and the barrier layer. Thus, when voids are formed, the recording layer pushes upward on the barrier layer; when the bonding layer positioned between the barrier layer and the cover layer has suitable flexibility, the concave deformation is generated in the bonding layer. When the bonding layer positioned between the barrier layer and the cover layer deforms readily in this manner, the formation of voids in the recording layer is not impeded, and pits can be properly formed. In the optical information recording medium of the present invention, the bonding layer, which has a glass transition temperature of equal to or lower than 25˚C and is thus flexible, can readily deform during void formation, permitting good void formation and the achievement of excellent recording characteristics.
Furthermore, the optical information recording medium of the present invention can afford good reproduction durability.
Further, the recording layer of the optical information recording medium of the present invention can be formed by the same method as the method used to form the recording layer in conventional CD-Rs, DVD-Rs, and the like. Further, forming the bonding layer from an ultraviolet radiation-curable composition can simplify the device that is required to bond with the cover layer and shorten the bonding time, permitting inexpensive manufacturing.
Further, by employing the azo dye compound with an attenuation coefficient ranging from 0.15 to 0.3 in the recording layer, the optical information recording medium having both excellent recording characteristics and reproduction durability can be obtained.
According to the present invention as set forth above, the optical information recording medium affording good recording characteristics, reproduction durability and excellent productivity can be obtained.

Fig. 2 shows an example of the optical information recording medium of the present invention. The first optical information recording medium 10A shown in Fig. 2 is comprised of first light reflective layer 18, first recordable layer 14, barrier layer 20, bonding layer 22, and cover layer 16, in that order on first support 12. The materials constituting the support and the other layers employed in the present invention will be sequentially described below.

Support

Any of the various materials conventionally employed as support materials for optical information recording media may be selected for use as the support employed in the present invention. A transparent disk-shaped support is preferably employed as the support.
Specific examples are glass, acrylic resins such as polycarbonate and polymethyl methacrylate, vinyl chloride resins such as polyvinyl chloride and vinyl chloride copolymers, epoxy resins, amorphous polyolefins, polyesters, and metals such as aluminum. They may be employed in combination as desired.
Of the above materials, thermoplastic resins such as amorphous polyolefins and polycarbonates are preferable, and polycarbonates are particularly preferable, from the perspectives of resistance to humidity, dimensional stability, low cost, and the like. When employing these resins, the support can be manufactured by injection molding.
The thickness of the support generally falls within a range of 0.7 to 2 mm, preferably a range of 0.9 to 1.6 mm, and more preferably, within a range of 1.0 to 1.3 mm.
To enhance smoothness and increase adhesive strength, an undercoating layer can be formed on the surface of the support on the side on which the light reflective layer, described further below, is positioned.
Plural pregrooves (guide grooves) comprised of plural grooves and lands positioned between adjacent grooves are formed on the surface of the support on which the recording layer is formed. These pregrooves are provided to achieve a higher recording density than in CD-Rs and DVD-Rs. For example, the optical information recording medium of the present invention is suited to use as a medium for a blue laser.
The track pitch of the pregrooves ranges from 50 to 500 nm. The upper limit is preferably equal to or lower than 420 nm, more preferably equal to or lower than 370 nm, and further preferably, equal to or lower than 330 nm. The lower limit is preferably equal to or higher than 100 nm, more preferably equal to or higher than 200 nm, and further preferably, equal to or higher than 260 nm. When the track pitch is equal to or higher than 50 nm, pregrooves can be correctly formed, avoiding crosstalk. At equal to or lower than 500 nm, high-density recording can be conducted.
The track pitch of the pregrooves is preferably equal to or higher than 100 nm and equal to or lower than 420 nm, more preferably equal to or higher than 200 nm and equal to or lower than 370 nm, and further preferably, equal to or higher than 260 nm and equal to or lower than 330 nm.
The groove width (viz., a width at the half of a depth) of the pregrooves preferably ranges from 25 to 250 nm. The upper limit is preferably equal to or lower than 240 nm, more preferably equal to or lower than 230 nm, and further preferably, equal to or lower than 220 nm. The lower limit is preferably equal to or higher than 50 nm, more preferably equal to or higher than 80 nm, and further preferably, equal to or higher than 100 nm. When the groove width of the pregrooves is equal to or higher than 25 nm, adequate transfer of grooves is possible during molding and a rise in the error rate during recording can be inhibited. At equal to or lower than 250 nm as well, adequate transfer of grooves is possible during molding and it is possible to avoid crosstalk due to widening of pits formed during recording.
The groove width of the pregrooves is preferably equal to or higher than 50 nm and equal to or lower than 240 nm, more preferably equal to or higher than 80 nm and equal to or lower than 230 nm, and further preferably, equal to or higher than 100 nm and equal to or lower than 220 nm.
The groove depth of the pregrooves preferably ranges from 5 to 150 nm. The upper limit is preferably equal to or lower than 85 nm, more preferably equal to or lower than 80 nm, and further preferably, equal to or lower than 75 nm. The lower limit is preferably equal to or higher than 10 nm, more preferably equal to or higher than 20 nm, and still more preferably, equal to or higher than 28 nm. When the groove depth of the pregrooves is equal to or higher than 5 nm, an adequate degree of recording modulation can be achieved; at equal to or lower than 150 nm, high reflectance can be achieved.
The groove depth of the pregrooves is preferably equal to or higher than 10 nm and equal to or lower than 85 nm, more preferably equal to or higher than 20 nm and equal to or lower than 80 nm, and further preferably, equal to or higher than 28 nm and equal to or lower than 75 nm.
The upper limit of the groove tilt angle at the half of a depth of the pregrooves is preferably equal to or less than 80°, more preferably equal to or less than 75°, further preferably equal to or less than 70°, and still more preferably, equal to or less than 65°. The lower limit is preferably equal to or more than 20°, more preferably equal to or more than 30°, and still more preferably, equal to or more than 40°.
When the groove tilt angle of the pregrooves is equal to or more than 20°, an adequate tracking error signal amplitude can be achieved, and at equal to or less than 80°, molding properties are good.

Reflective layer

The reflective layer can be formed, for example, by vacuum vapor depositing, by sputtering, or by ion plating a light reflective substance with high reflectance for the laser beam on the support. The thickness of the light reflective layer normally ranges from 10 to 300 nm, and preferably ranges from 20 to 200 nm. The reflectance is preferably equal

to or greater than 70 percent.

Examples of light reflective substances of high reflectance are: metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, Bi, and stainless steel. These reflective substances may be employed singly, in combinations of two or more, or as alloys. Of these, Cr, Ni, Pt, Cu, Ag, Au, A1 and stainless steel are preferable. Au, Ag, A1 and alloys thereof are further preferable, and Au, Ag and alloys thereof are most preferable.

<u>Recording layer</u>

The optical information recording medium of the present invention comprises at least one azo dye compound having an attenuation coefficient ranging from 0.15 to 0.30 at a wavelength of 405 nm. The above azo dye compound makes it possible to achieve a large refractive index difference in the short wavelength region. Through combination with the bonding layer, described further below, excellent recording characteristics by irradiation of a short-wavelength laser beam in particular can be achieved. In the present invention, the term "azo dye compounds" includes (i) azo compounds and (ii) azo metal complex compounds comprising an azo compound and a metal ion or metal oxide ion.

The attenuation coefficient of the azo dye compound at a wavelength of 405 nm ranges from 0.15 to 0.3. Hereinafter, the attenuation coefficient at a wavelength of 405 nm will be referred to as attenuation coefficient k.

The optical information recording medium of the present invention sequentially comprises a support, having a surface in which are formed pregrooves comprised of plural grooves and lands positioned between adjacent grooves; a reflective layer formed on this surface; a recording layer; a barrier layer; and a cover layer. The track pitch of the pregrooves ranges from 50 to 500 nm. The recording layer ranges in thickness from 1 to 100 nm on the lands and ranges from 5 to 150 nm on the grooves. In the optical information recording medium of the above-described structure, azo dye compounds having attenuation coefficients exceeding 0.3 result in an excessively low refractive index, making it difficult to achieve practical recording and reproduction characteristics. By contrast, azo dye compounds having attenuation coefficients of less than 0.15 result in inadequate recording sensitivity, making it difficult to achieve sensitivity suited to practical use. From the perspectives of recording sensitivity (specifically, 2T C/N in 5 mW recording) and reproduction durability, attenuation coefficient k is preferably $0.17 \leq k \leq 0.3$, more preferably $0.18 \leq k \leq 0.29$, and further preferably, $0.19 \leq k \leq 0.28$.

Further, the azo dye compound preferably has a refractive index ranging from 1.45 to 1.75 at a wavelength of 405 nm. Hereinafter, the refractive index for light with a wavelength of 405 nm will be referred to as refractive index n. With an azo dye compound having a refractive index n of equal to or higher than 1.45, recording by irradiation of a short-wavelength laser beam can yield a good 2T CNR. When refractive index n is higher than 1.75, it becomes difficult to achieve good tracking suitability in an optical information recording medium of the above structure. From the perspective of the C/N ratio of the recording signal and tracking suitability, refractive index n of the azo dye compound is preferably $1.45 \leq n \leq 1.70$, more preferably $1.46 \leq n \leq 1.67$, and further preferably, $1.47 \leq n \leq 1.65$.

Refractive index n and attenuation coefficient k are values that can be determined by measurement analysis with a spectral ellipsometer (Model M-2000, made by J. A. Woollam Japan Corp.), for example, of a dye film formed with a coating liquid prepared by dissolving the azo dye compound in a suitable solvent. For example, 2 g of the azo dye compound can be dissolved in 100 mL of 2,2,2,3-tetrafluoropropanol to obtain a dye-containing coating liquid. The coating liquid can then be coated on a glass sheet 1.1 mm in thickness by spin coating at 23˚C and 50 percent RH while varying the rotational speed from 500 to 1,000 rpm to form a dye film, For the dye film thus formed, the above measuring device can then be used to measure the values of refractive index n and attenuation coefficient k.

From the perspectives of recording sensitivity and reproduction durability, the thermal decomposition temperature of the azo dye compound preferably ranges from 250 to 350˚C, more preferably ranges from 250 to 340˚C, further preferably ranges from 255 to 330˚C, and still more preferably, ranges from 260 to 320˚C.

In the present invention, the thermal decomposition temperature is a value obtained by TG/DTA measurement. As a specific example, the temperature can be raised by 10˚C/min over a range of 30 to 550˚C under an $N_2$ gas flow (flow rate 200 mL/min) with an EXSTAR 6000 made by Seiko Instruments, Inc. and the temperature at the point where the mass reduction rate reaches 10 percent adopted as the thermal decomposition temperature.

From the perspective of simultaneously achieving good recording signal CNR, tracking suitability, recording sensitivity, and reproduction durability, the refractive index, attenuation coefficient, and thermal decomposition temperature of the azo dye compound at 405 nm are preferably such that: $1.45 \leq n \leq 1.70$, $0.17 \leq k \leq 0.3$, with the thermal decomposition temperature being equal to or higher than 250˚C and equal to or lower than 340˚C; more preferably $1.46 \leq n \leq 1.67$, $0.18 \leq k \leq 0.29$, with the thermal decomposition temperature being equal to or higher than 255˚C and equal to or lower than 330˚C; and further preferably, $1.47 \leq n \leq 1.65$, $0.19 \leq k \leq 0.28$, with the thermal decomposition temperature being equal to or higher than 260˚C and equal to or lower than 320˚C.

To achieve good void formation in the recording layer and enhance recording characteristics, among the above azo dye compounds, an azo dye compound having a thermal decomposition property such that the mass reduction rate

is equal to or greater than 10 percent in the main reduction process in thermal mass spectrometry is preferably employed. The mass reduction results from thermal decomposition when the temperature of the compound is raised over a certain temperature range. Although this also depends on the type of compound, normally there will be a number of temperature ranges (mass reduction processes) exhibiting a large reduction in mass. In the present invention, the mass reduction process (reduction process) exhibiting the greatest amount of mass reduction is called the main reduction process. The mass reduction rate can be determined by the following method.

As shown in Fig. 1, the temperature of a compound of mass M0 is raised 10˚C/minute in a nitrogen atmosphere. As the temperature rises, the mass diminishes by minute increments along a nearly straight line a-b. When a certain temperature is reached, a sudden reduction in mass occurs along a nearly straight line c-d. As the rise in temperature continues, the sharp mass reduction ends and a mass reduction occurs along a nearly straight line e-f. Here, at the point of intersection of straight line a-b and c-d, the temperature is denoted by T1 (˚C) and the residual mass ratio relative to initial mass M0 is denoted by m1(%). At the point of intersection of straight line c-d and straight line e-f, the temperature is denoted by T2 (˚C) and the residual mass ratio relative to initial mass M0 is denoted by m2 (%). That is, the temperature at which reduction begins is T1 and the temperature at which reduction ends is T2 in the main reduction process. The mass reduction rate is given by (m1 - m2) (%).

The above mass reduction under a nitrogen atmosphere is thought to occur, not because of oxidation decomposition, but due to the generation of gas through the decomposition of substituents and/or skeletal decomposition of the dye. Thus, the greater the mass reduction rate, the greater the amount of gas generated by thermal decomposition, and the more advantageous void formation is thought to be. Incorporating azo dye compounds having a mass reduction rate of equal to or greater than 10 percent into the recording layer is thought to result in the generation of a large quantity of gas through irradiation by laser beam, permitting the proper formation of numerous pits. To enhance the degree of recording modulation and recording sensitivity, the use of azo dye compounds having a mass reduction rate of equal to or greater than 15 percent (preferably equal to or greater than 20 percent) is desirable. Among the azo dye compounds, azo dye compounds having a thermal decomposition property in the form of a mass reduction rate of equal to or greater than 20 percent during thermal decomposition at 150 to 400˚C are preferred, and those having a thermal decomposition property in the form of a mass reduction rate of equal to or greater than 25 percent during thermal decomposition at 200 to 400˚C are of even greater preference. The thermal decomposition property of the dye can be controlled by the types of substituents and the like incorporated onto the dye skeleton.

As a specific example, the mass reduction rate can be determined by raising the temperature by 10˚C/minute over a range of 30 to 550˚C under a $N_2$ gas flow (gas flow 200 mL/min) with an EXSTAR 6000 made by Seiko Instruments, Inc..

When the recording layer comprising the azo dye compound is irradiated with a laser beam, the portion of the recording layer irradiated by the laser beam undergoes a local rise in temperature, and the recording dye in that portion is thought to undergo thermal decomposition. Generally, organic substances either absorb or generate heat as their state changes prior to reaching the thermal decomposition temperature. When a large amount of heat is generated prior to reaching the thermal decomposition temperature, a large amount of energy is imparted to the gas that is generated during thermal decomposition. Thus, there is a risk that heat generated during the formation of a recording pit will affect earlier recording pits, deforming them. There is also a risk of difficulty in controlling the shape of the recording pits that are formed. On the other hand, if little heat is generated prior to thermal decomposition, little energy will be imparted to the gas generated during thermal decomposition, thereby reducing the effect on adjacent pits. However, when the quantity of heat generated is excessively low, there is a risk that pit formation will become difficult. Normally, the above-described main reduction process occurs in a temperature range immediately preceding the gas decomposition temperature. Thus, the total quantity of heat generated in the main reduction process, that is, the total amount of heat generated over the temperature range (T1 to T2 in Fig. 1) between the temperature at which reduction begins (T1 in Fig. 1) and the temperature at which reduction ends (T2 in Fig. 1) in the main reduction process, can be employed as an index of the change in mass during heat mode recording. The total quantity of heat generated (also referred to as "total heat generation Q", hereinafter) in the main reduction process of the azo dye compound preferablly falls within a range of -200 to 500 J/g. When total heat generation Q falls within this range, pits of desired shape can be properly formed, thereby yielding good recording and reproduction characteristics. The preferred range for Q is -200 to 450 J/g, with a range of -160 to 350 J/g being preferred.

Total heat generation Q can be determined by measuring the quantity of heat generated in the temperature range between the reduction starting temperature (T1 in Fig. 1) and the reduction ending temperature (T2 in Fig. 1) in the main reduction process by differential scanning calorimetry (DSC) with a DSC6200R made by Seiko Instruments, Inc., in thermal mass spectrometry. Generally, gas corresponding to the reduction in mass will vaporize during the thermal decomposition of an organic substance. Since the energy imparted to this gas is also included in Q, DSC measurement is conducted in a closed atmosphere. Specifically, DSC measurement can be conducted with the sample sealed in an SUS sealed container or the like.

The azo dye compound comprised in the recording layer will be described in greater detail below.

Azo compound

The azo compound in the present invention is defined as a compound having an acyclic azo group (-N=N-). Azo compounds that have acyclic azo groups and are capable of functioning as dyes can be employed. Any of the azo compounds denoted by general formula (A), general formula (B), and general formula (C) are particularly suited to use from the perspective of good recording characteristics.

General formula (A)

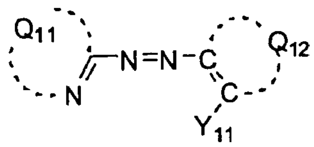

In general formula (A), $Q_{11}$ denotes an atom group forming a nitrogen-containing heterocyclic ring, $Q_{12}$ denotes an atom group forming a heterocyclic ring or a carbon ring, $Y_{11}$ denotes a group capable of coordinating with a metal ion or metal oxide ion.

General formula (B)

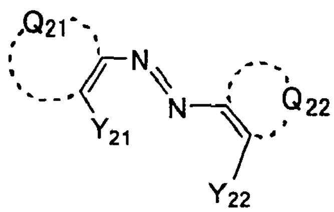

In general formula (B), $Q_{21}$ and $Q_{22}$ each independently denote an atom group forming a heterocyclic ring or a carbon ring, and $Y_{21}$ and $Y_{22}$ each independently denote a group capable of coordinating with a metal ion or metal oxide ion.

General formula (C)

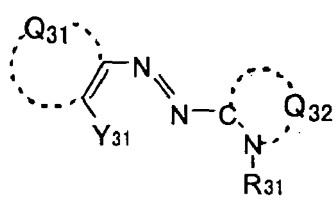

In general formula (C), $Q_{31}$ denotes an atom group forming a heterocyclic ring or carbon ring, $Q_{32}$ denotes an atom group forming a nitrogen-containing heterocyclic ring, $Y_{31}$ denotes a group capable of coordinating with a metal ion or metal oxide ion, and $R_{31}$ denotes a hydrogen atom or a substituent.

General formula (A) will be described below.

$Q_{11}$ denotes an atom group forming a nitrogen-containing heterocyclic ring. The nitrogen-containing heterocyclic ring formed by $Q_{11}$ is not specifically limited; examples are: pyrazole rings, pyrrole rings, imidazole rings, thiazole rings, isothiazole rings, oxazole rings, isooxazole rings, 1,2,4-thiadiazole rings, 1,3,4-thiadiazole rings, pyridine rings, pyrazine rings, pyrimidine rings, and pyridazine rings.

$Q_{12}$ denotes an atom group forming a heterocyclic ring or a carbon ring. When $Q_{12}$ forms a heterocyclic ring, it suffices for the ring formed by $Q_{12}$ to be a heterocyclic ring formed of one or more carbon atoms and hetero atoms (such as an oxygen atom, sulfur atom, and nitrogen atom); there is no specific limitation. Examples are: pyrazole rings,

pyrrole rings, furan rings, thiophene rings, imidazole rings, thiazole rings, isothiazole rings, oxazole rings, isooxazole rings, pyridine rings, pyrazine rings, pyrimidine rings, and pyridazine rings. These rings may be substituted, and may be condensed.

Partial structural formulas (C-1) to (C-7), given further below, are specific examples of the following partial structure in general formula (A):

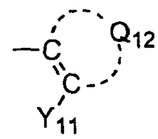

(C-1)

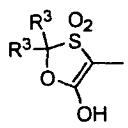

(C-2)

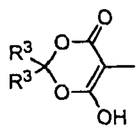

(C-3)

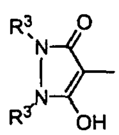

(C-4)

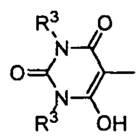

(C-5)

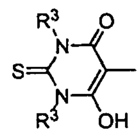

(C-6)

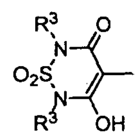

(C-7)

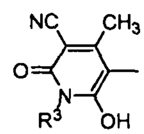

The above partial structural formulas are embodiments in which $Y^{11}$ in general formula

(A) is a hydroxyl group.

In the above formula, $R^3$ denotes a hydrogen atom or substituent; the plural $R^3$s may be identical or different from each other. $R^3$s may be joined together through a linking group. $R^3$ preferably denotes a substituent. The substituent is not specifically limited; examples are: alkyl groups (preferably having 1 to 30 carbon atoms, more preferably having 1 to 20 carbon atoms, further preferably having 1 to 10 carbon atoms, such as methyl groups, ethyl groups, isopropyl groups, tert-butyl groups, n-octyl groups, n-decyl groups, n-hexadecyl groups, cyclopropyl groups, cyclopentyl groups, and cyclohexyl groups), and aryl groups (preferably having 6 to 30 carbon atoms, more preferably having 6 to 20 carbon atoms, further preferably having 6 to 12 carbon atoms, such as phenyl groups, p-methylphenyl groups, naphthyl groups, anthranyl groups, pyridyl groups, thiazole groups, oxazole groups, and triazole groups).

When the ring formed by $Q_{12}$ denotes a carbon ring, a benzene ring is preferable.

The atom groups denoted by $Q_{11}$ and $Q_{12}$ may have substituents. From the perspective of solubility in the coating solvent, the presence of substituents is preferable. The substituents are not specifically limited; examples are: halogen atoms, alkyl groups (including cycloalkyl groups and bicycloalkyl groups), alkenyl groups (including cycloalkenyl groups and bicycloalkenyl groups), alkynyl groups, aryl groups, heterocyclic groups, cyano groups, hydroxyl groups, nitro groups, carboxyl groups, alkoxy groups, aryloxy groups, silyloxy groups, heterocyclic oxy groups, acyloxy groups, carbamoyloxy groups, alkoxycarbonyloxy groups, aryloxycarbonyloxy, amino groups (including anilino groups), acylamino groups, aminocarbonylamino groups, alkoxycarbonylamino groups, aryloxycarbonylamino groups, sulfamoylamino groups, alkyl and arylsulfonylamino groups, mercapto groups, alkylthio groups, arylthio groups, heterocyclic thio groups, sulfamoyl groups, sulfo groups, alkyl and arylsulfinyl groups, alkyl and arylsulfonyl groups, acyl groups, aryloxycarbonyl groups, alkoxycarbonyl groups, carbamoyl groups, aryl and heterocyclic azo groups, imido groups, phosphino groups phosphinyl groups, phosphinyloxy groups, phosphinylamino groups, and silyl groups.

More specific examples are: halogen atoms (such as chlorine atoms, bromine atoms, and iodine atoms), alkyl groups [linear, branched, or cyclic substituted or unsubstituted alkyl groups including alkyl groups (preferably alkyl groups having 1 to 30 carbon atoms such as methyl groups, ethyl groups, n-propyl groups, isopropyl groups, t-butyl groups, n-octyl groups, eicosyl groups, 2-chloroethyl groups, 2-cyanoethyl groups, and 2-ethylhexyl groups), cycloalkyl groups (preferably substituted or unsubstituted cycloalkyl groups having 3 to 30 carbon atoms such as cyclohexyl groups, cyclopentyl groups, and 4-n-dodecylcyclohexyl groups), bicycloalkyl groups (preferably substituted or unsubstituted bicycloalkyl groups having 5 to 30 carbon atoms, that is, monovalent groups obtained by removing a single hydrogen atom from a bicycloalkane having 5 to 30 carbon atoms, such as bicyclo[1,2,2]heptane-2-yl and bicyclo[2,2,2]octane-3-yl), and tricyclo structures and the lile having one or more additional rings; the alkyl groups in the description of substituents given below (such as the alkyl group in an alkylthio group) denote this same concept of an alkyl group]; alkenyl groups [linear, branched, or cyclic substituted or unsubstituted alkenyl groups including alkenyl groups (preferably

substituted or unsubstituted alkenyl groups having 2 to 30 carbon atoms, such as vinyl groups, allyl groups, prenyl groups, geranyl groups, and oleyl groups), cycloalkenyl groups (preferably substituted or unsubstituted cycloalkenyl groups having 3 to 30 carbon atoms, that is, monovalent groups obtained by removing a single hydrogen atom from a cycloalkene having 3 to 30 carbon atoms, such as 2-cyclopentene-l-yl and 2-cyclohexene-1-yl), bicycloalkenyl groups (substituted or unsubstituted bicycloalkenyl groups, preferably substituted or unsubstituted bicycloalkenyl groups having 5 to 30 carbon atoms, that is, monovalent groups obtained by removing a hydrogen atom from a bicycloalkene having a single double bond, such as bicyclo[2,2,1]hepto-2-ene-1-yl and bicyclo[2,2,2]-octo-2-ene-4-yl)]; alkynyl groups (preferably substituted or unsubstituted alkynyl groups having 2 to 30 carbon atoms such as ethynyl groups, propargyl groups, trimethylsilylethynyl groups, and aryl groups (preferably substituted or unsubstituted aryl groups having 6 to 30 carbon atoms, such as phenyl groups, p-tolyl groups, naphthyl groups, m-chlorophenyl groups, and o-hexadecanoylaminophenyl groups); heterocyclic groups (preferably monovalent groups obtained by removing a single hydrogen atom from a substituted or unsubstituted five or six-membered aromatic or nonaromatic heterocyclic compound; more preferably five or six-membered aromatic heterocyclic groups having 3 to 30 carbon atoms such as 2-furyl groups, 2-thienyl groups, 2-pyrimidinyl groups, and 2-benzothiazolyl groups); cyano groups; hydroxyl groups; nitro groups; carboxyl groups; alkoxy groups (preferably substituted or unsubstituted alkoxy groups having 1 to 30 carbon atoms, such as methoxy groups, ethoxy groups, isopropoxy groups, t-butoxy groups, n-octyloxy groups, and 2-methoxyethoxy groups); aryloxy groups (preferably substituted or unsubstituted aryloxy groups having 6 to 30 carbon atoms, such as phenoxy groups, 2-methylphenoxy groups, 4-t-butylphenoxy groups, 3-nitrophenoxy groups, and 2-tetradecanoylaminophenoxy groups); silyloxy groups (preferably silyloxy groups having 3 to 20 carbon atoms, such as trimethylsilyloxy groups and t-butyldimethylsilyloxy groups); heterocyclic oxy groups (preferably substituted or unsubstituted heterocyclic oxy groups having 2 to 30 carbon atoms, 1-phenyltetrazole-5-oxy groups, and 2-tetrahydropyranyloxy groups); acyloxy groups (preferably formyloxy groups, substituted or unsubstituted alkylcarbonyloxy groups having 2 to 30 carbon atoms, substituted or unsubstituted arylcarbonyloxy groups having 6 to 30 carbon atoms, such as formyloxy groups, acetyloxy groups, pivaloyloxy groups, stearoyloxy groups, benzoyloxy groups, and p-methoxyphenylcarbonyloxy groups); carbamoyloxy groups (preferably substituted or unsubstituted carbamoyloxy groups having 1 to 30 carbon atoms, such as N,N-dimethylcarbamoyloxy groups, N,N-diethylcarbamoyloxy groups, morpholinocarbonyloxy groups, N,N-di-n-octylaminocarbonyloxy groups, and N-n-octylcarbamoyloxy groups); alkoxycarbonyloxy groups (preferably substituted or unsubstituted alkoxycarbonyloxy groups having 2 to 30 carbon atoms, such as methoxycarbonyloxy groups, ethoxycarbonyloxy groups, t-butoxycarbonyloxy groups, and n-octylcarbonyloxy groups); aryloxycarbonyloxy groups (preferably substituted or unsubstituted aryloxycarbonyloxy groups having 7 to 30 carbon atoms, such as phenoxycarbonyloxy groups, p-methoxyphenoxycarbonyloxy groups, and p-n-hexadecyloxyphenoxycarbonyloxy groups); amino groups (preferably amino groups, substituted or unsubstituted alkylamino groups having 1 to 30 carbon atoms and substituted or unsubstituted anilino groups having 6 to 30 carbon atoms such as amino groups, methylamino groups, dimethylamino groups, anilino groups, N-methylanilino groups, and diphenylamino groups); acylamino groups (preferably formylamino groups, substituted or unsubstituted alkylcarbonylamino groups having 1 to 30 carbon atoms, and substituted or unsubstituted arylcarbonylamino groups having 6 to 30 carbon atoms, such as formylamino groups, acetylamino groups, pivaloylamino groups, lauroylamino groups, benzoylamino groups, and 3,4,5-tri-n-octyloxyphenylcarbonylamino groups); aminocarbonylamino groups (preferably substituted or unsubstituted aminocarbonylamino groups having 1 to 30 carbon atoms, such as carbamoylamino groups, N,N-dimethylaminocarbonylamino groups, N,N-diethylaminocarbonylamino groups, and morpholinocarbonylamino groups); alkoxycarbonylamino groups (preferably substituted or unsubstituted alkoxycarbonylamino groups having 2 to 30 carbon atoms, such as methoxycarbonylamino groups, ethoxycarbonylamino groups, t-butoxycarbonylamino groups, n-octadecyloxycarbonylamino groups, and N-methylmethoxycarbonylamino groups); aryloxycarbonylamino groups (preferably substituted or unsubstituted aryloxycarbonylamino groups having 7 to 30 carbon atoms, such as phenoxycarbonylamino groups, p-chlorophenoxycarbonylamino groups, and m-n-octyloxyphenoxycarbonylamino groups); sulfamoylamino groups (preferably substituted or unsubstituted sulfamoylamino groups having 0 to 30 carbon atoms, such as sulfamoylamino groups, N,N-dimethylaminosulfonylamino groups, and N-n-octylaminosulfonylamino groups); alkyl and arylsulfonylamino groups (preferably substituted or unsubstituted alkylsulfonylamino groups having 1 to 30 carbon atoms and substituted or unsubstituted arylsulfonylamino groups having 6 to 30 carbon atoms, such as methylsulfonylamino groups, butylsulfonylamino groups, phenylsulfonylamino groups, 2,3,5-trichlorophenylsulfonylamino groups, and p-methylphenylsuffonylamino groups); mercapto groups; alkylthio groups (preferably substituted or unsubstituted alkylthio groups having 1 to 30 carbon atoms, such as methylthio groups, ethylthio groups, and n-hexadecylthio groups); arylthio groups (preferably substituted or unsubstituted arylthio groups having 6 to 30 carbon atoms, such as phenylthio groups, p-chlorophenylthio groups, and m-methoxyphenylthio groups); heterocyclic thio groups (preferably substituted or unsubstituted heterocyclic thio groups having 2 to 30 carbon atoms, such as 2-benzothiazolylthio groups and 1-phenyltetrazole-5-ylthio groups); sulfamoyl groups (preferably substituted or unsubstituted sulfamoyl groups having 0 to 30 carbon atoms, such as N-ethylsulfamoyl groups, N-(3-dodecyloxypropyl) sulfamoyl groups, N,N-dimethylsulfamoyl groups, N-acetylsulfamoyl groups, N-benzoylsulfamoyl groups, N-(N'-phenylcarbamoyl)sulfamoyl groups); sulfo groups; alkyl and arylsulfinyl groups (preferably substituted or unsubstituted alkylsulfinyl groups having 1 to 30 carbon atoms and substituted or unsubstituted arylsulfinyl groups having 6 to 30 carbon atoms, such as methylsulfinyl groups, ethylsulfinyl groups, phenylsulfinyl groups, and p-methylphenylsulfinyl groups); alkyl and arylsulfonyl groups (preferably substituted or unsubstituted alkylsulfonyl groups having 1 to 30 carbon atoms and substituted or unsubstituted arylsulfonyl groups having 6 to 30 carbon atoms, such as methylsulfonyl groups, ethylsulfonyl groups, phenylsulfonyl groups, and p-methylphenylsulfonyl groups); acyl groups (preferably formyl groups, substituted or unsubstituted alkylcarbonyl groups having 2 to 30 carbon atoms, substituted or unsubstituted arylcarbonyl groups having 7 to 30 carbon atoms, and substituted or unsubstituted heterocyclic carbonyl groups having 4 to 30 carbon atoms and bound to carbonyl groups through carbon atoms, such as acetyl groups, pivaloyl groups, 2-chloroacetyl groups, stearoyl groups, benzoyl groups, p-n-octyloxyphenylcarbonyl groups, 2-pyridylcarbonyl groups, and 2-furylcarbonyl groups); aryloxycarbonyl groups (preferably substituted or unsubstituted aryloxycarbonyl groups having 7 to 30 carbon atoms, such as phenoxycarbonyl groups, o-chlorophenoxycarbonyl groups, m-nitrophenoxycarbonyl groups, and p-t-butylphenoxycarbonyl groups); alkoxycarbonyl groups (preferably substituted or unsubstituted alkoxycarbonyl groups having 2 to 30 carbon atoms, such as methoxycarbonyl groups, ethoxycarbonyl groups, t-butoxycarbonyl groups, and n-octadecyloxycarbonyl groups); carbamoyl groups (preferably substituted or unsubstituted carbamoyl groups having 1 to 30 carbon atoms, such as carbamoyl groups, N-methylcarbamoyl groups, N,N-dimethylcarbamoyl groups, N,N-di-n-octylcarbamoyl groups, and N-(methylsulfonyl)carbamoyl groups); aryl and heterocyclic azo groups (preferably substituted or unsubstituted arylazo groups having 6 to 30 carbon atoms and substituted or unsubstituted heterocyclic azo groups having 3 to 30 carbon atoms, such as phenylazo groups, p-chlorophenylazo groups, and 5-ethylthio-1,3,4-thiadiazole-2-ylazo groups); imido groups (preferably N-succinimide groups and N-phthalimide groups); phosphino groups (preferably substituted or unsubstituted phosphino groups having 2 to 30 carbon atoms, such as dimethylphosphino groups, diphenylphosphino groups, and methylphenoxyphosphino groups); phosphinyl groups (preferably substituted or unsubstituted phosphinyl groups having 2 to 30 carbon atoms, such as phosphinyl groups, dioctyloxyphosphinyl groups, and diethoxyphosphinyl groups); phosphinyloxy groups (preferably substituted or unsubstituted phosphinyloxy groups having 2 to 30 carbon atoms, such as diphenoxyphosphinyloxy groups, and dioctyloxyphosphinyloxy groups); phosphinylamino groups (preferably substituted or unsubstituted phosphinylamino groups having 2 to 30 carbon atoms, such as dimethoxyphosphinylamino groups and dimethylaminophosphinylamino groups); and silyl groups (preferably substituted or unsubstituted silyl groups having 3 to 30 carbon atoms, such as trimethylsilyl groups, t-butyldimethylsilyl groups, and phenyldimethylsilyl groups).

In those of the above functional groups that have a hydrogen atom, the hydrogen atom may be replaced with a substituent in the form of one of the above groups. Examples of such functional groups are alkylcarbonylaminosulfonyl groups, arylcarbonylaminosulfonyl groups, alkylsulfonylaminocarbonyl groups, and arylsulfonylaminocarbonyl groups. Examples are methylsulfonylaminocarbonyl groups, p-methylphenylsulfonylaminocarbonyl groups, acetylaminosulfonyl groups, and benzoylaminosulfonyl groups.

When a substituent is present on the group of atoms denoted by $Q_{12}$, from the viewpoint of sensitivity to blue semiconductor lasers, the substituent is not preferably included in any one from among hydroxyl groups, alkyloxy groups, aryloxy groups, thiol groups, alkylthio groups, arylthio groups, amino groups, alkylamino groups, and anilino groups. The substituent is preferably a halogen, nitro group, cyano group, substituted or unsubstituted alkyl group having 1 to 10 carbon atoms, substituted or unsubstituted aryl group having 6 to 20 carbon atoms, substituted or unsubstituted acyl group having 2 to 10 carbon atoms, substituted or unsubstituted alkoxycarbonyl group having 2 to 10 carbon atoms, substituted or unsubstituted aryloxycarbonyl group having 7 to 10 carbon atoms, substituted or unsubstituted alkylsulfonyl group having 1 to 10 carbon atoms, substituted or unsubstituted arylsulfonyl group having 6 to 10 carbon atoms, or substituted or unsubstituted alkoxysulfonyl group having 1 to 10 carbon atoms; preferably a cyano group, substituted or unsubstituted alkyl group having 1 to 10 carbon atoms, substituted or unsubstituted aryl group having 6 to 20 carbon atoms, substituted or unsubstituted acyl group having 2 to 10 carbon atoms, substituted or unsubstituted alkoxycarbonyl group having 2 to 10 carbon atoms, substituted or unsubstituted alkylsulfonyl group having 1 to 10 carbon atoms, or substituted or unsubstituted arylsulfonyl group having 6 to 10 carbon atoms; and more preferably, a substituted or unsubstituted alkyl group having 1 to 10 carbon atoms, a substituted or unsubstituted acyl group having 2 to 10 carbon atoms, a substituted or unsubstituted alkoxycarbonyl group having 2 to 10 carbon atoms, or a substituted or unsubstituted alkylsulfonyl group having 1 to 10 carbon atoms.

$Y_{11}$ denotes a group capable of coordinating with a metal ion or metal oxide ion. The group that is capable of coordinating with a metal ion or metal oxide ion is not specifically limited; examples are hydroxyl groups, thiol groups, amino groups, carboxyl groups, and sulfonic acid groups.

$Y_{11}$ preferably denotes a hydroxyl group, amino group (preferably an amino group, substituted or unsubstituted alkylamino group having 1 to 30 carbon atoms or a substituted or unsubstituted anilino group having 6 to 30 carbon atoms, such as an amino group, methylamino group, dimethylamino group, anilino group, N-methylanilino group, or diphenylamino group); acylamino group (preferably, a formylamino group, substituted or unsubstituted alkylcarbonylamino group having 1 to 30 carbon atoms, or substituted or unsubstituted arylcarbonylamino group having 6 to 30 carbon atoms, such as a formylamino group, acetylamino group, pivaloylamino group, lauroylamino group, benzoylamino group,

or 3,4,5-tri-n-octyloxyphenylcarbonylamino group); aminocarbonylamino group (such as a substituted or unsubstituted aminocarbonylamino group having 1 to 30 carbon atoms such as a carbamoylamino group, N,N-dimethylaminocarbonylamino group, N,N-diethylaminocarbonylamino group, or morpholinocarbonylamino group); alkoxycarbonylamino group (such as a substituted or unsubstituted alkoxycarbonylamino group having 2 to 30 carbon atoms such as a methoxycarbonylamino group, ethoxycarbonylamino group, t-butoxycarbonylamino group, n-octadecyloxycarbonylamino group, or N-methylmethoxycarbonylamino group); aryloxycarbonylamino group (such as a substituted or unsubstituted aryloxycarbonylamino group having 7 to 30 carbon atoms such as a phenoxycarbonylamino group, p-chlorophenoxycarbonylamino group, or m-n-octyloxyphenoxycarbonylamino group); sulfamoylamino group (such as a substituted or unsubstituted sulfamoylamino group having 0 to 30 carbon atoms such as a sulfamoylamino group, N,N-dimethylaminosulfonylamino group, or N-n-octylaminosulfonylamino group); or alkyl or arylsulfonylamino group (preferably a substituted or unsubstituted alkylsulfonylamino group having 1 to 30 carbon atoms or a substituted or unsubstituted arylsulfonylamino group having 6 to 30 carbon atoms such as a methylsulfonylamino group, butylsulfonylamino group, phenylsulfonylamino group, 2,3,5-trichlorophenylsulfonylamino group, or p-methylphenylsulfonylamino group).

When $Y_{11}$ is an amino group having a substituent, it is preferably a substituted or unsubstituted anilino group having 6 to 30 carbon atoms, substituted or unsubstituted acylamino group having 2 to 30 carbon atoms, substituted or unsubstituted arylcarbonylamino group having 6 to 30 carbon atoms, substituted or unsubstituted aminocarbonylamino group having 1 to 30 carbon atoms, substituted or unsubstituted alkoxycarbonylamino group having 2 to 30 carbon atoms, substituted or unsubstituted aryloxycarbonylamino group having 7 to 30 carbon atoms, substituted or unsubstituted sulfamoylamino group having 0 to 30 carbon atoms, substituted or unsubstituted alkylsulfonylamino group having 1 to 30 carbon atoms, or substituted or unsubstituted arylsulfonylamino group having 6 to 30 carbon atoms; more preferably a substituted or unsubstituted acrylamino group having 2 to 30 carbon atoms, substituted or unsubstituted arylcarbonylamino group having 6 to 30 carbon atoms, substituted or unsubstituted aminocarbonylamino group having 1 to 30 carbon atoms, substituted or unsubstituted alkoxycarbonylamino group having 2 to 30 carbon atoms, substituted or unsubstituted sulfamoylamino group having 0 to 30 carbon atoms, or substituted or unsubstituted alkylsulfonylamino group having 1 to 30 carbon atoms; further preferably a substituted or unsubstituted acylamino group having 2 to 30 carbon atoms, substituted or unsubstituted alkoxycarbonylamino group having 2 to 30 carbon atoms, substituted or unsubstituted alkylsulfonylamino group having 1 to 30 carbon atoms; and still more preferably, a substituted or unsubstituted acylamino group having 2 to 30 carbon atoms or a substituted or unsubstituted alkoxycarbonylamino group having 2 to 30 carbon atoms.

When $Y_{11}$ denotes an amino group having a substituent, the substituent may bond with the atom group denoted by $Q_{12}$ to form a ring; such cases are also desirable. Examples of the ring thus formed are five-membered rings comprising 1 to 3 nitrogen atoms and six-membered rings comprising 1 to 4 nitrogen atoms. Five-membered rings having two or three nitrogen atoms are desirable and five-membered rings having three nitrogen atoms are preferred. Specific desirable examples when a five-membered ring comprising three nitrogen atoms is formed are the condensed structures comprised in Example compounds (AZO-1) and (AZO-2) below.

Specific examples of the azo compound denoted by general formula (A) are given below; however, the present invention is not limited thereto.

(AZO-1)

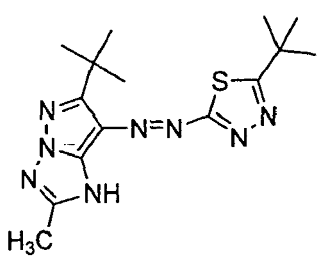

(AZO-2)

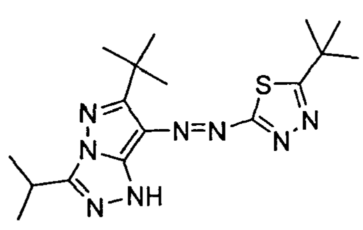

(A-1)

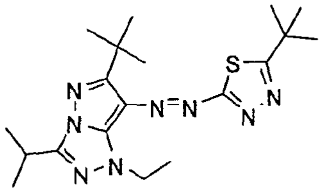

(A-2)

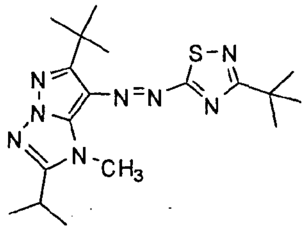

(A-3)

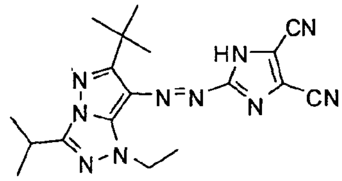

(A-4)

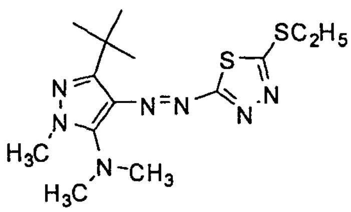

(A-5)

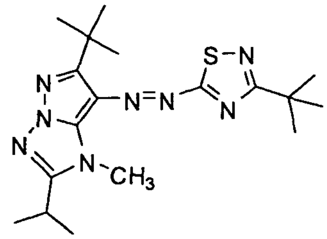

(A-6)

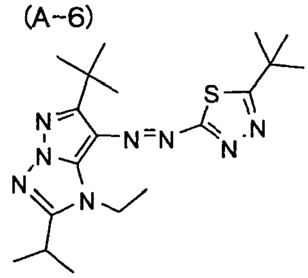

(A-7)

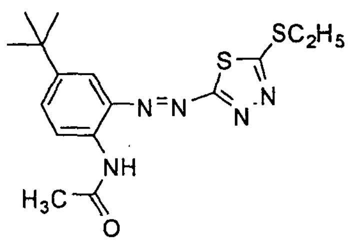

(A-8)

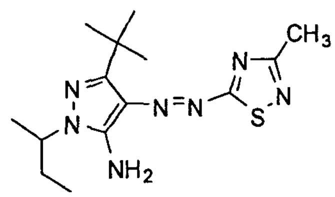

(A-9)

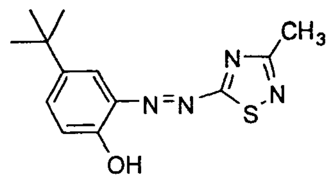

General formula (B) will be described below.

In general formula (B), $Q_{21}$ and $Q_{22}$ each independently denote an atom group forming a heterocyclic ring or a carbon ring. The details of $Q_{21}$ and $Q_{22}$ are as set forth above for $Q_{12}$ in general formula (A).

$Y_{21}$ and $Y_{22}$ each independently denote a group capable of coordinating with a metal ion or metal oxide ion. The details are identical to those set forth above for $Y_{11}$ in general formula (A).

Specific examples of the azo compounds denoted by general formula (B) are given below; however, the present invention is not limited thereto.

(B-1)

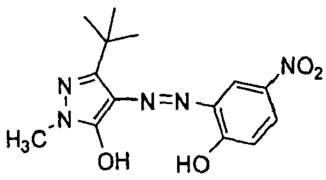

(B-2)

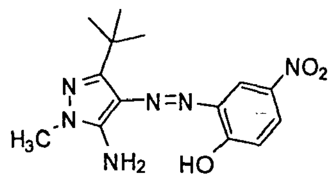

(B-3)

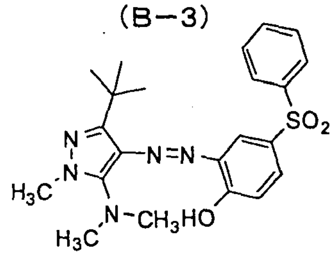

(B-4)

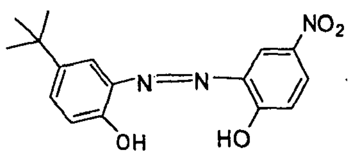

(B-5)

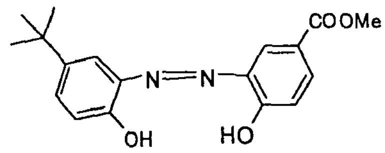

General formula (C) will be described below.

$Q_{31}$ denotes an atom group forming a heterocyclic ring or carbon ring. The details are as set forth above for $Q_{12}$ in general formula (A).

$Q_{32}$ denotes an atom group forming a nitrogen-containing heterocyclic ring. The nitrogen-containing heterocyclic group formed by $Q_{32}$ is preferably a ring denoted by one of partial structure formulas (q-1) to (q-4), more preferably the ring denoted by (q-1) or (q-2), and further preferably, the ring denoted by (q-1).

(q-1)

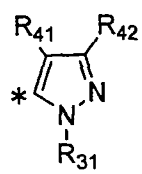

(q-2)

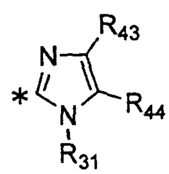

(q-3)

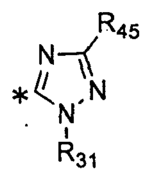

(q-4)

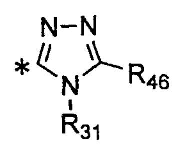

In the above formulas, * denotes the position of bonding with the -N=N- group. $R_{31}$ corresponds to $R_{31}$ in general formula (C), and $R_{41}$ to $R_{46}$ each independently denote a substituent.

$R_{31}$ in general formula (C) denotes a hydrogen atom or a substituent. The substituent denoted by $R_{31}$ is not specifically limited; preferable examples are substituents having a group that is capable of coordinating with a metal ion or metal oxide ion, with groups forming a nitrogen-containing heterocyclic ring being preferred. The nitrogen-containing heterocyclic ring is not specifically limited; examples are rings that form pyrazole rings, imidazole rings, thiazole rings, oxazole rings, 4,5-dihydroimidazole rings, 4,5-dihydrooxazole rings, 4,5-dihydrothiazole rings, 1,2,4-thiadiazole rings, 1,3,4-tiadiazole rings, 1,2,4-triazole rings, pyridine rings, pyrazine rings, pyrimidine rings, pyridazine rings, or 1,3,5-triazine rings. These rings may be further substituted and may be condensed.

The nitrogen-containing heterocyclic group is preferably a thiazole ring, oxazole ring, 1,2,4-thiadiazole ring, 1,3,4-thiadiazole ring, 1,2,4-triazole ring, pyridine ring, pyrazine ring, pyrimidine ring, pyridazine ring, or triazine ring; more preferably a thiazole ring, oxazole ring, pyridine ring, pyrazine ring, pyrimidine ring, pyridazine ring, or triazine ring; further preferably a thiazole ring, pyridine ring, pyrazine ring, or triazine ring; and still more preferably, a thiazole ring or pyridine ring.

When $R_{31}$ denotes a hydrogen atom, the hydrogen atom is preferably dissociated, with the nitrogen atom formerly bound to the hydrogen atom covalently bonding to a metal ion to form an azo metal complex.

$R^{41}$ to $R^{46}$ in partial structure formulas (q-1) to (q-4) above each independently denote a hydrogen atom or a substituent. $R^{41}$ to $R^{46}$ preferably denote substituents from the perspective of enhancement of solubility. These substituents are not specifically limited; examples are the substituents further substituting the atom groups denoted by $Q_{11}$ and $Q_{12}$ above.

$R^{41}$, $R^{43}$, and $R^{44}$ preferably denote groups selected from among substituted and unsubstituted carbon ring groups having 6 to 20 carbon atoms, substituted and unsubstituted heterocyclic groups having 6 to 20 carbon atoms, substituted and unsubstituted alkyloxycarbonyl groups having 2 to 10 carbon atoms, substituted and unsubstituted aryloxycarbonyl groups having 7 to 10 carbon atoms, substituted and unsubstituted alkylaminocarbonyl groups having 2 to 10 carbon atoms, substituted and unsubstituted anilinocarbonyl groups having 7 to 10 carbon atoms, substituted and unsubstituted alkylsulfonyl groups having 1 to 10 carbon atoms, substituted and unsubstituted arylsulfonyl groups having 6 to 10 carbon atoms, and cyano groups; more preferably denote groups selected from among substituted and unsubstituted alkyloxycarbonyl groups having 2 to 10 carbon atoms, substituted and unsubstituted aryloxycarbonyl groups having 7 to 10 carbon atoms, substituted and unsubstituted alkylsulfonyl groups having 1 to 10 carbon atoms, substituted and unsubstituted arylsulfonyl groups having 6 to 10 carbon atoms, and cyano groups; further preferably denote groups selected from among substituted and unsubstituted alkyloxycarbonyl groups having 2 to 10 carbon atoms,

substituted and unsubstituted aryloxycarbonyl groups having 7 to 10 carbon atoms, substituted and unsubstituted alkylsulfonyl groups having 1 to 10 carbon atoms, substituted and unsubstituted arylsulfonyl groups having 6 to 10 carbon atoms, and cyano groups; and still more preferably, denote cyano groups.

$R^{42}$, $R^{45}$, and $R^{46}$ preferably denote hydrogen atoms, substituted or unsubstituted alkyl groups having 1 to 10 carbon atoms, or substituted or unsubstituted aryl groups having 6 to 10 carbon atoms. From the perspective of solubility, they more preferably denote substituted or unsubstituted alkyl groups having 1 to 10 carbon atoms or substituted or unsubstituted aryl groups having 6 to 10 carbon atoms. The alkyl groups are preferably branched alkyl groups having 3 to 6 carbon atoms, more preferably tertiary alkyl groups having 4 to 6 carbon atoms.

$Y_{31}$ in general formula (C) denotes a group capable of coordinating with a metal ion or a metal oxide ion. The details are identical to those set forth for $Y_{11}$ in general formula (A) above.

Specific examples of the azo compound denoted by general formula (C) are given below. However, the present invention is not limited thereto.

(AZO-3)

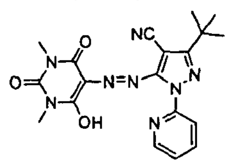

(AZO-4)

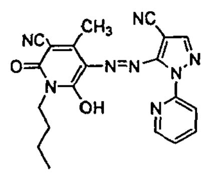

(AZO-5)

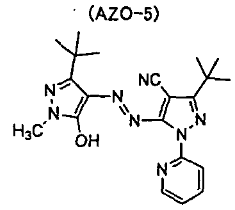

(A-15)

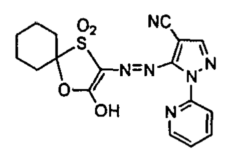

(A-19)

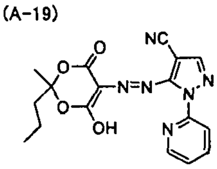

(AZO-6)

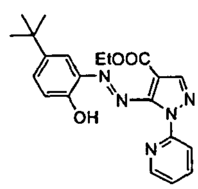

(AZO-7)

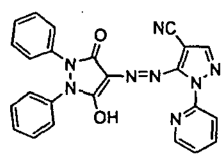

(AZO-8)

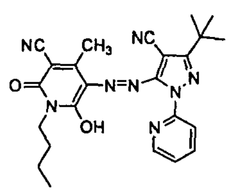

(AZO-9)

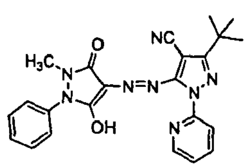

(AZO-10)

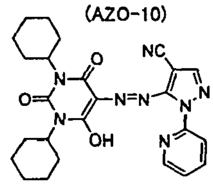

(AZO-11)

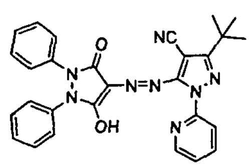

(AZO-12)

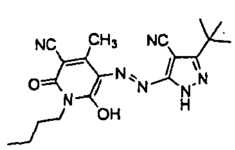

(AZO-13)

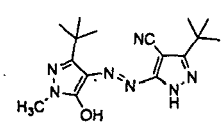

(AZO-14)

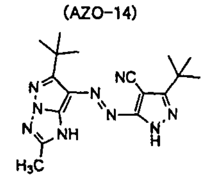

(AZO-15) (AZO-16) (AZO-17)

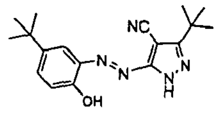
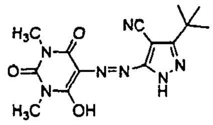
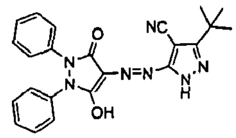

(AZO-18)

(AZO-19)

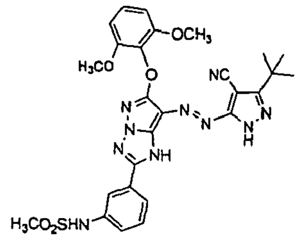
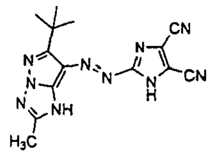

(C-1)

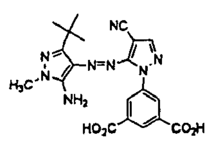

(C-2)

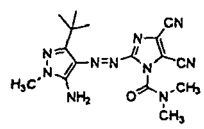

(C-3)

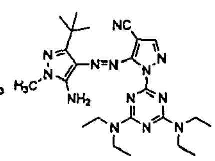

(C-4)

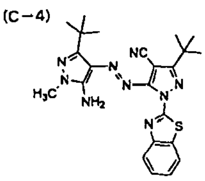

(C-5)

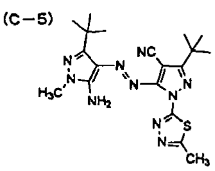

(C-6)

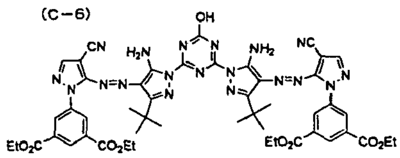

(C-7)

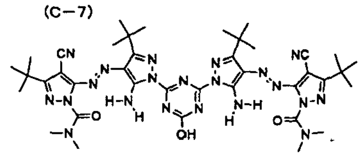

(C-8)

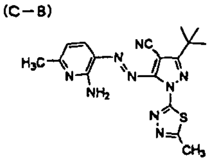

(C-9)

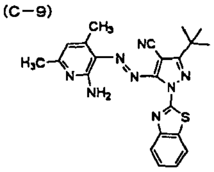

The azo compound described above is contained in the recording layer as a recording dye in a state in which a complex is not formed with a metal ion or metal oxide ion. Not containing a metal ion or metal oxide ion is desirable from the perspective of the effect on the environment and the human body. From the perspective of the stability and light resistance of the dye film, an azo compound denoted by general formula (C) is desirable as the above azo compound.

General formulas (A), (B), and (C) are only shown as the azo form in azo-hydrazone tautomeric equilibrium, but they may also be in the corresponding hydrazone form.

Azo metal complex compound

The above azo metal complex compound comprises an azo compound and a metal ion or metal oxide ion. The azo metal complex compound is a dye that is produced by reacting an azo compound and a metal ion or a metal oxide ion to form a coordinate bond between the azo compound and the metal ion.

From the perspective of excellent recording characteristics, an azo metal complex dye containing the azo dye denoted by general formula (A), (B), or (C) above and a metal ion or a metal oxide ion is particularly suited to use as the azo metal complex dye. In this case, in general formula (A), (B), or (C) that is the ligand of the azo metal complex dye, $Y_{11}$, $Y_{12}$, and $Y_{13}$ each comprise a hydrogen atom, and they preferably become an anionic group through the dissociation of a hydrogen atom during the formation of the azo metal complex dye.

Examples of the above metal ion are metal ions of Mg, Al, Si, Ca, Sc, Ti, V, Cr, Mn, Fe, Co, Ni, Cu, Zn, Ga, Ge, As, Sr, Y, Zr, Nb, Mo, Tc, Ru, Rh, Pd, Ag, Cd, In, Sn, Sb, Ba, Pr, Eu, Yb, Hf, Ta, W, Re, Os, Ir, Pt, Au, Hg, Tl, Pb, Bi, and Th. Of these, the ions of transition metal atoms are desirable. Examples of metal oxide ions are oxide ions of these metals.

The transition metal ions include the elements of groups IIIa to VIII and Ib of the Periodic Table of the Elements. They are elements having an incomplete d electron shell. The transition electron atoms are not specifically limited; Mn, Fe, Co, Ni, Cu, Zn, and Cr are preferable; Mn, Fe, Co, Ni, Cu, and Zn are more preferable; Mn, Fe, Co, Ni, and Cu are further preferable; and from the perspective of recording and reproduction characteristics, Mn, Fe, and Cu are of still greater preference.

Divalent and trivalent metal atoms are preferable and divalent metal atoms are more preferable as the metal ions. Examples of divalent and trivalent metals (denoted as metal ions) are: $Mn^{2+}$, $Fe^{2+}$, $Fe^{3+}$, $Co^{2+}$, $Co^{3+}$, $Ni^{2+}$, $Ni^{3+}$, $Cu^{2+}$, $Zn^{2+}$, $Cr^{3+}$, $Ru^{2+}$, $Rh^{3+}$, $Pd^{2+}$, $Ir^{3+}$, and $Pt^{2+}$; $Mn^{2+}$, $Fe^{2+}$, $Fe^{3+}$, $Co^{2+}$, $Co^{3+}$, $Ni^{2+}$, $Ni^{3+}$, $Cu^{2+}$, and $Zn^{2+}$ are preferable; $Mn^{2+}$, $Fe^{2+}$, $Co^{2+}$, $Co^{3+}$, $Ni^{2+}$, $Ni^{3+}$, $Cu^{2+}$ are more preferable; and $Mn^{2+}$, $Fe^{2+}$, and $Cu^{2+}$ are further preferable.

It is particularly preferable for the azo metal complex compound to contain a central metal ion in the form of a copper ion, iron ion, or manganese ion, with a copper ion being preferred.

The methods described in Japanese Unexamined Patent Publication (KOKAI) Showa No. 61-36362 and Japanese Unexamined Patent Publication (KOKAI) No. 2006-57076 are examples of common methods of synthesizing the azo dyes of general formulas (A) to (C). However, this is not by way of limitation; other acids and reaction solvents may be employed, and the coupling reactions may be conducted in the presence of bases (such as sodium acetate, pyridine, and sodium hydroxide). Examples of methods of synthesizing azo compounds that are suitable for use in the present invention are given below. The various azo compounds suited for use in the present invention can be synthesized by similar methods.

Synthesis example-1

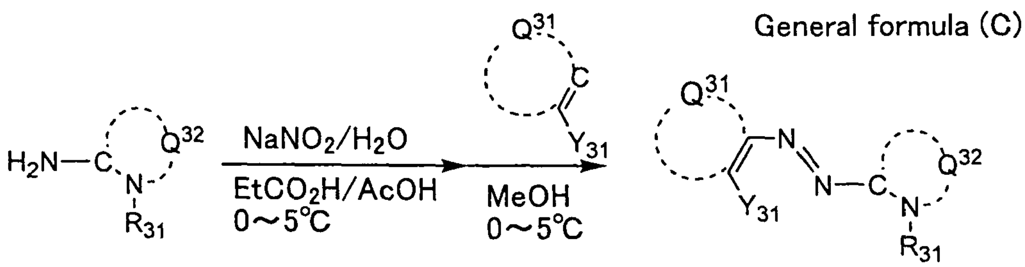


Synthesis example-2

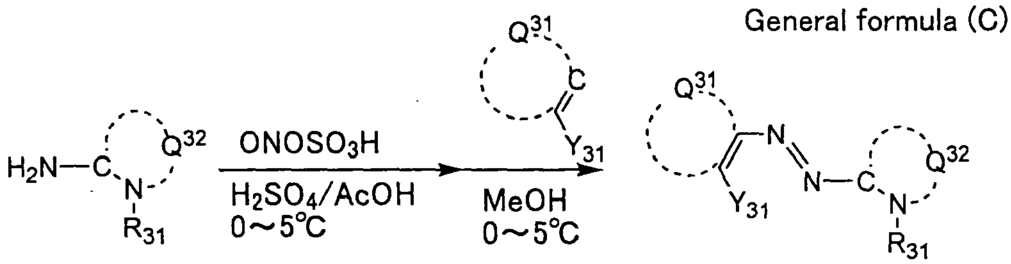

Synthesis example-3

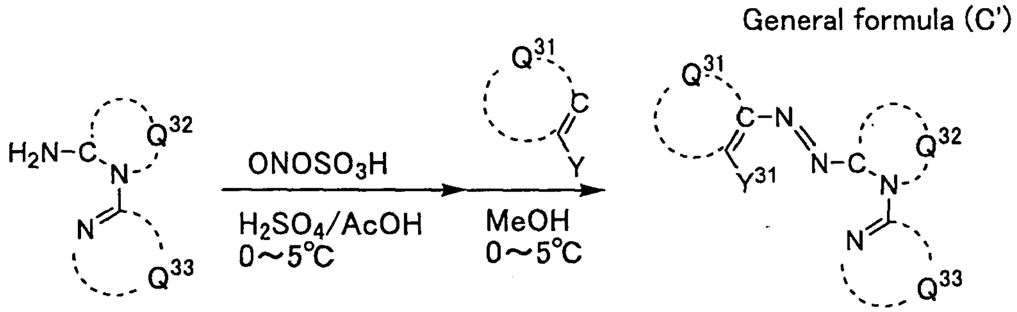


[$Q^{33}$: Atom group forming a nitrogen-containing heterocycle]

An example of a common method of reacting an azo compound with a metal ion (or metal oxide ion) to obtain a metal azo chelate dye is the method of stirring the azo compound and metal salt (including metal complex and metal oxide salt) in an organic solvent, in water, or in a mixed solution thereof, in the presence of a base. Neither the type of metal salt, type of base, type of organic solvent or mixture thereof, nor the reaction temperature is limited. An example of a method of synthesizing an azo metal complex dye suitable for use in the present invention is given below.

An example of the synthesis of an azo metal complex dye comprised of the above azo compound and metal ion (or metal oxide ion) is given below. Methanol is described as the reaction solvent below, but the reaction solvent is not limited to methanol. The reaction solvent is preferably an alcohol capable of dissolving the metal ion. Triethylamine is described as the base below, but the base is not limited to triethylamine. The dotted line linking M to the nitrogen atom denotes a coordination bond, but the compound would be the same even if the coordination bond were not present and there were no bond. The various azo metal complex dyes comprised of various azo compounds and metal ions (or metal oxide ions) that are suitable for use in the present invention can all be synthesized by the similar method.

Synthesis example-4

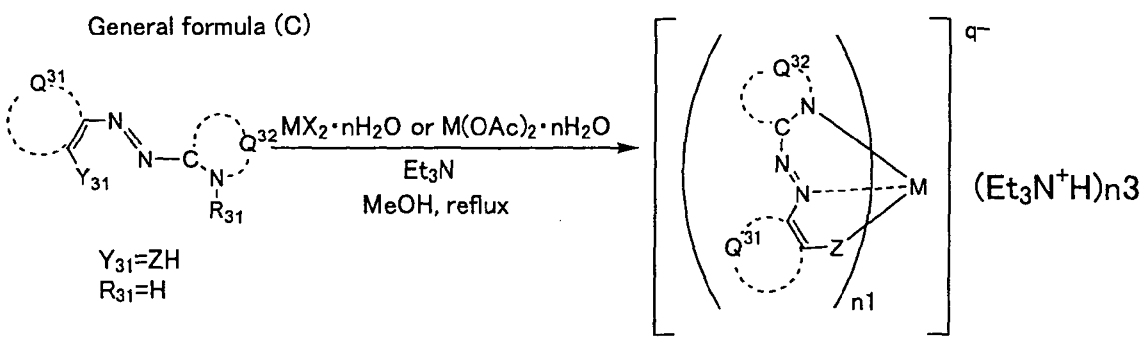


In the above synthesis example-4, Z denotes an oxygen atom, sulfur atom, or bivalent linking group denoted by $NR^{36}$; $R^{36}$ denotes a hydrogen atom or substituent; q denotes 1 or 2; n1 denotes an integer ranging from 1 to 3; and n3 denotes the same number as q. The triethylammonium cation of the azo metal complex dye obtained by the above synthesis method can be subjected to a cation exchange reaction in solvent.

In the above synthesis method, the azo dye is reacted with a Co salt, Ni salt, Mn salt, Fe salt, or the like to obtain the above azo metal complex dye.

By reacting the compound denoted by general formula (C) in which $Q^{32}$ forms a pyrazole ring with a copper salt such as copper acetate monohydrate, copper chloride dehydrate, and copper sulfate pentahydrate) in the same synthesis method as described above, polynuclear copper azo complex comprising multiple copper ions within a molecule can be synthesized. Examples of the polynuclear copper azo complex are pentanuclear copper complex formed by five coppers and four azo compounds and dinuclear copper complex formed by two coppers and two azo compounds. Which complex is formed depends on the azo compound that will become a ligand, a base employed and the like. As for the complex, the main peak or fragment can be confirmed by various mass spectrometers such as MALDI-MS, ESI-MS, and FAB-MS. For example, a peak of a compound in which two coppers bind to two azo ligands from which a proton

has been dissociated, a peak of a compound in which three coppers bind to two azo ligands from which a proton has been dissociated, a peak of a compound in which four coppers bind to two azo ligands from which a proton has been dissociated, and the like may be observed. When employing a base in the reaction, a complex comprising a base can be obtained. The structure of the above polynuclear copper azo complex can be analyzed by various analysis method (such as X-ray structural analysis, ICP-OES (ICP optical emission spectrometry), elemental analysis, ESR (electron spin resonance) and the like.

An azo metal complex can be synthesized by a similar method for general formula (C'), as well. When $Y_{31}$ denotes an -OH group, the reaction can be conducted under conditions where a base is not present, but it is preferable that the reaction is conducted under conditions where a base is present.

Synthesis example-6

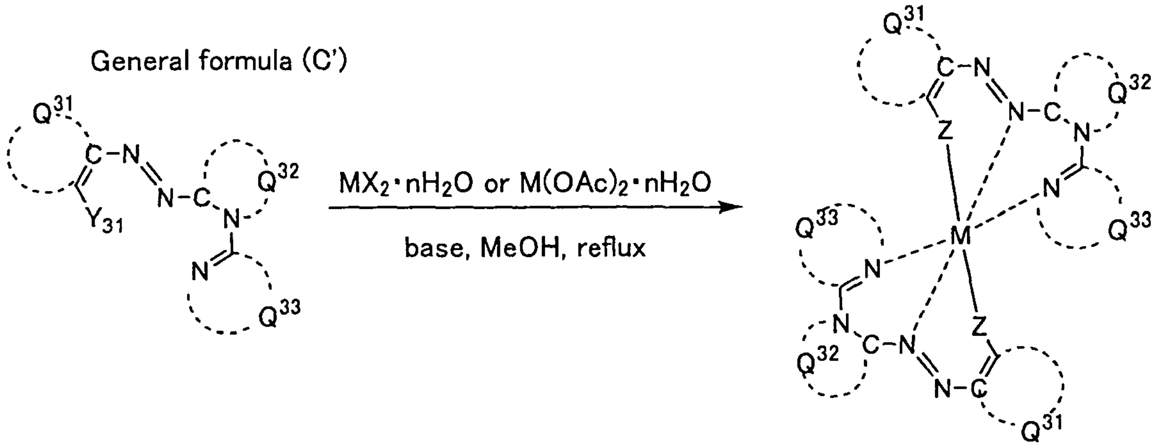


[$Y_{31}$=ZH, $Q_{33}$: Atom group forming a nitrogen-containing heterocycle]

The base is preferably an organic base, examples of which are: primary to tertiary amines having 1 to 30 carbon atoms (such as triethylamine, diisopropylamine, pyrrolidine, N-methylpyrrolidine, and n-butylamine); amidines (such as DBU (1,8-diazabicyclo[5.4.0]-7-undecene) and DBN (1,5-diazabicyclo[4.3.0]-5-nonene); guanidines (such as tetramethylguanidine); nitrogen-containing heterocycles (such as pyridine and imidazole); and tetrabutylammoniumhydroxide. The organic solvent is preferably a primary to tertiary amine having 1 to 30 carbon atoms, more preferably a primary to tertiary amine having 1 to 20 carbon atoms, further preferably a primary to tertiary amine having 1 to 10 carbon atoms, and still more preferably, a secondary or tertiary amine having 1 to 10 carbon atoms.

Specific examples of azo metal complex dyes suitable for use as recording dyes in the optical information recording medium of the present invention are given below. However, the present invention is not limited thereto.

Specific examples suitable for use as the recording dye in the optical information recording medium of the present invention are described below. However, the present invention is not limited thereto.

(M-1)

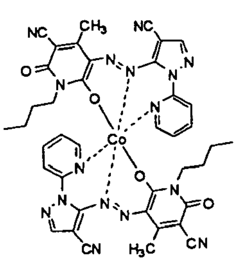

(M-2)

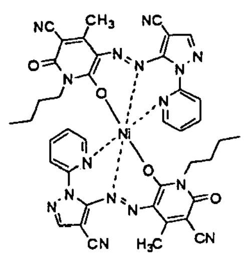

(M-3)

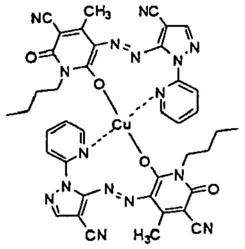

(M-4)

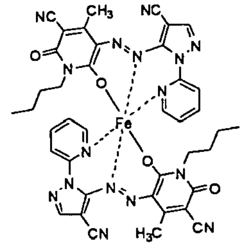

(M-5)

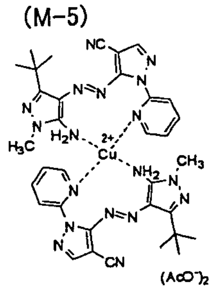

(M-6)

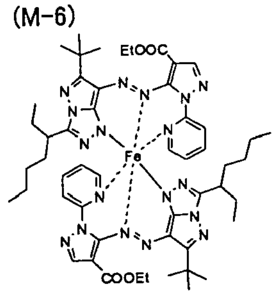

(M-7)

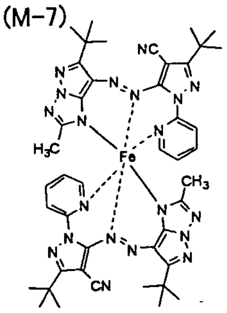

(M-8)

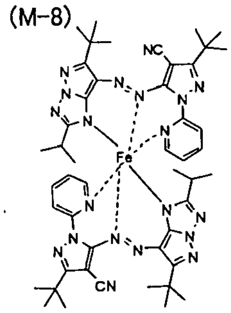

(M-9)

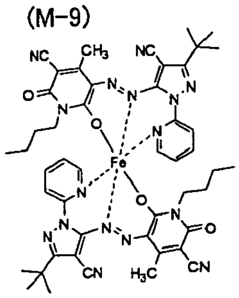

(M-10)

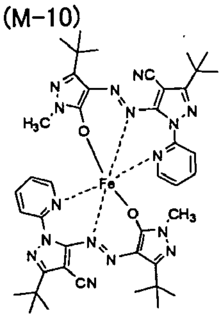

(M-11)

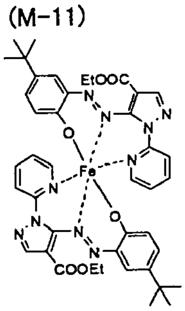

(M-12)

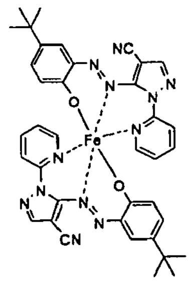

(M-13)

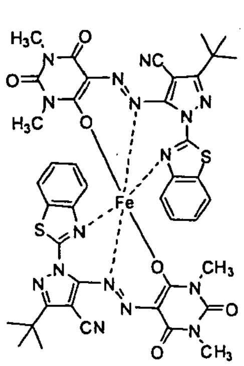

(M-14)

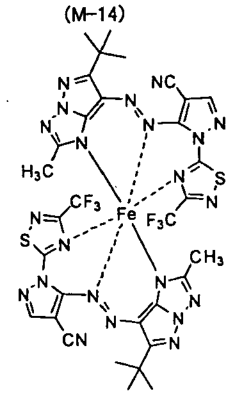

(M-15)

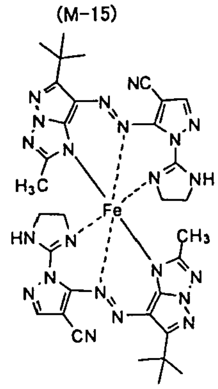

(M-16)

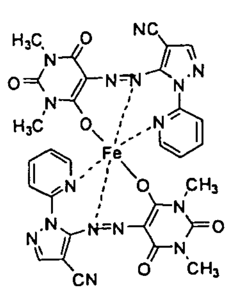

(M-17)

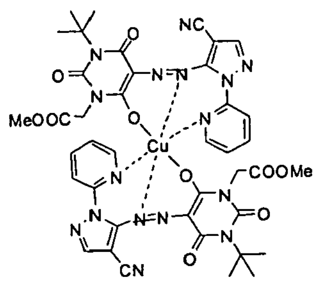

(M-18)

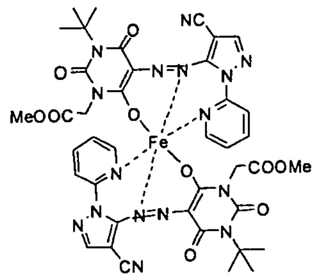

(M-19)

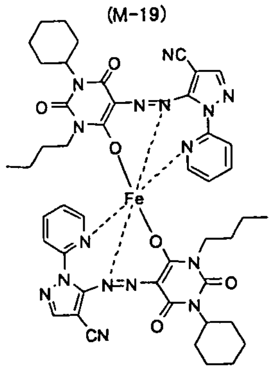

(A-20)

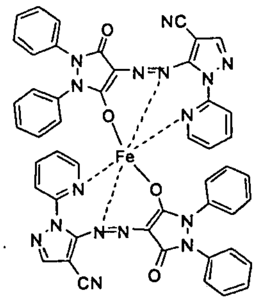

(A-21)

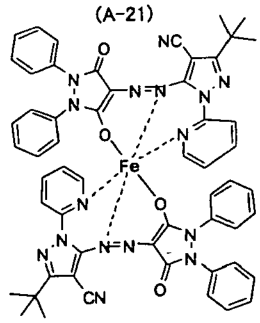

(A-22)

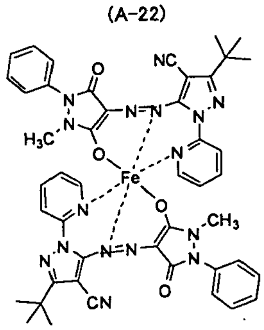

(M-23)

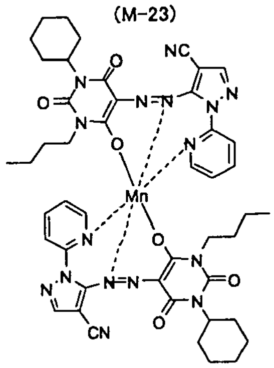

(M-24)

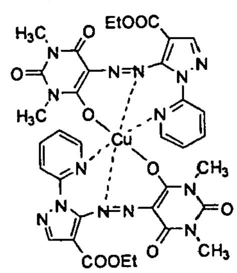

(M-25)

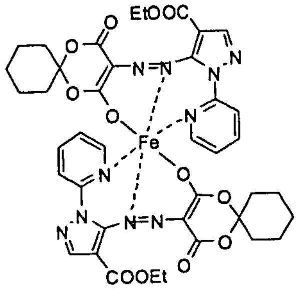

(M-26)

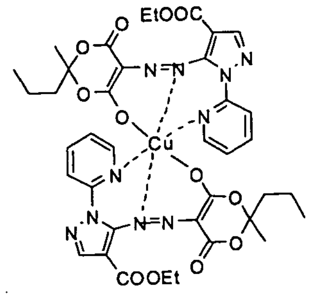

(M-27)

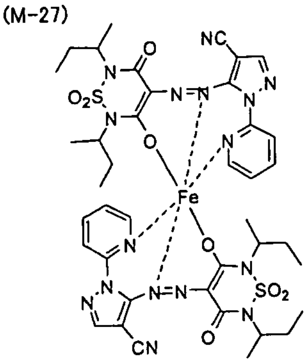

(M-28)

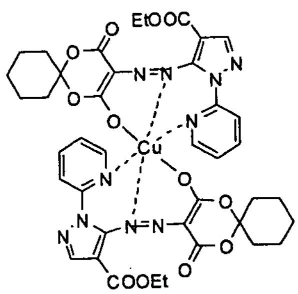

(M-29)

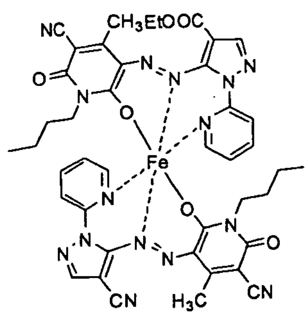

(M-30)

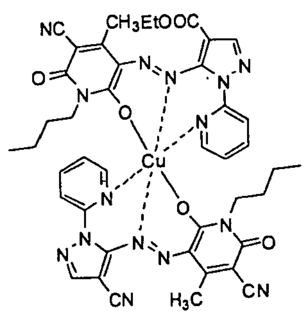

(M-31)

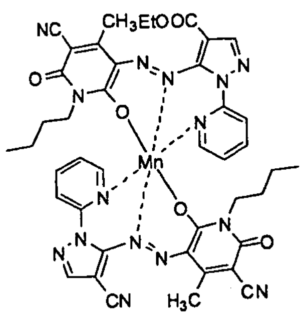

(M-32)

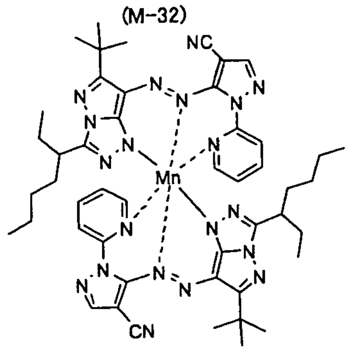

(M-33)

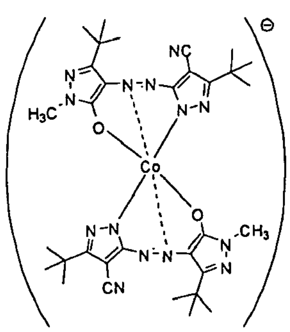

(M-34)

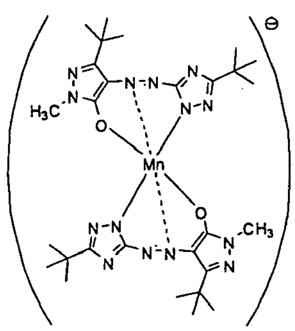

(M-35)

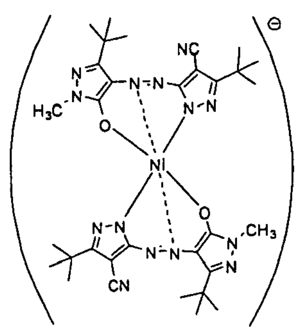

(M-36)

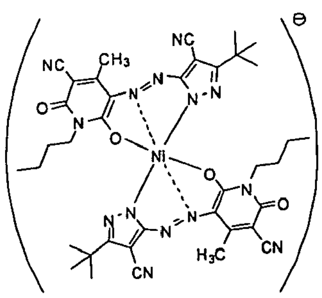

(M-37)

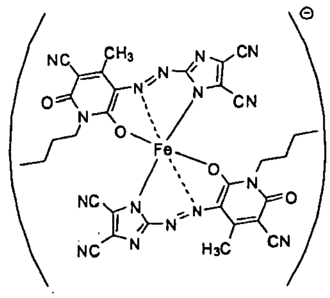

(M-38)

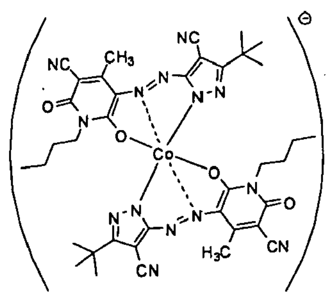

Examples of polynuclear copper azo complex comprising multiple copper ions within a molecule that can be synthesized by reacting the compound denoted by general formula (C) in which $Q^{32}$ forms a pyrazole ring with a copper salt are described below, of which coordination structure may vary depending on types of the starting material azo dye compound and the base. Since it is difficult to determine all coordination structures of the azo complex, the starting materials such as a ligand, copper salt, base and the like are shown below. However, the fact that the azo complex is polynuclear complex can be confirmed by various analysis method described above.

Table 1

| Example compound | Copper salt | Azo compound | Base or mixture employed |
|---|---|---|---|
| (M-39) | $Cu(CH_3COO)_2 \cdot H_2O$ | 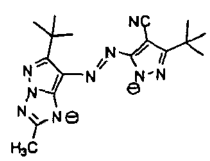 | $Et_3N$ |
| (M-40) | $Cu(CH_3COO)_2 \cdot H_2O$ | 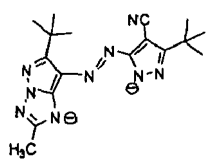 | 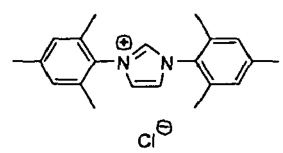 |
| (M-41) | $Cu(CH_3COO)_2 \cdot H_2O$ | 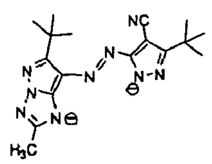 | 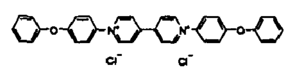 |
| (M-42) | $Cu(CH_3COO)_2 \cdot H_2O$ | 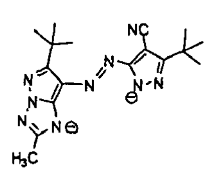 | 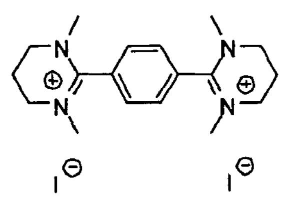 |
| (M-43) | $Cu(CH_3COO)_2 \cdot H_2O$ | 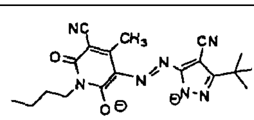 | 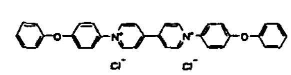 |

(continued)

| Example compound | Copper salt | Azo compound | Base or mixture employed |
|---|---|---|---|
| (M-44) | $Cu(CH)COO)_2 \cdot H_2O$ | 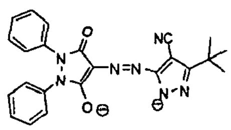 | 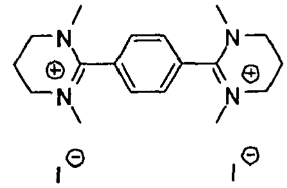 |
| (M-45) | $Cu(CH_3COO)_2 \cdot H_2O$ | 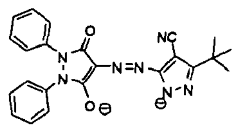 | 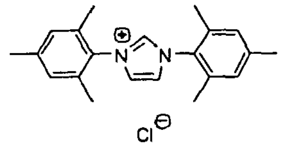 |
| (M-46) | $Cu(CH_3COO)_2 \cdot H_2O$ | 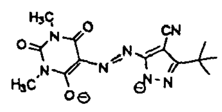 | 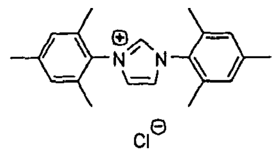 |
| (M-47) | $Cu(CH_3COO)_2 \cdot H_2O$ | 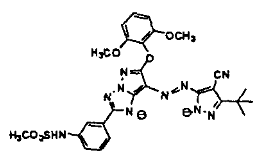 | $Et_3N$ |
| (M-48) | $Cu(CH)COO)_2 \cdot H_2O$ | 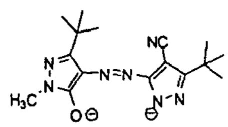 | 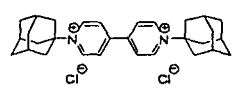 |
| (M-49) | $Cu(CH_3COO)_2 \cdot H_2O$ | 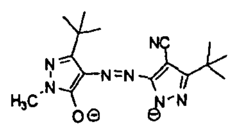 | 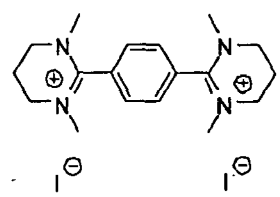 |
| (M-50) | $Cu(CH)COO)_2 \cdot H_2O$ | 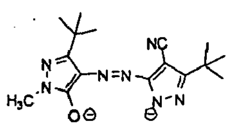 | $Et_3N$ |
| (M-51) | $Cu(CH_3COO)_2 \cdot H_2O$ | 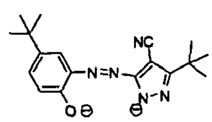 | 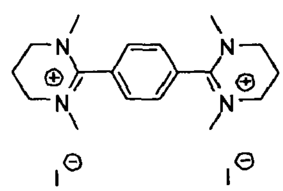 |
| (M-52) | $Cu(CH_3COO)_2 \cdot H_2O$ | 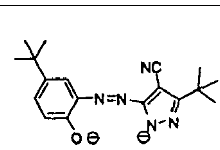 | 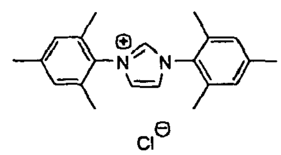 |

(continued)

| Example compound | Copper salt | Azo compound | Base or mixture employed |
|---|---|---|---|
| (M-53) | $Cu(CH_3COO)_2 \cdot H_2O$ | 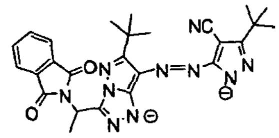 | $Et_3N$ |

One or a combination of two or more of the above azo dye compounds may be employed as the recording layer dye in the recording layer. Dyes other than the above-described azo dye compound may be employed in combination. Desirable examples of such dyes that may be employed in combination are those exhibiting absorbance in the short wavelength range of equal to or shorter than 440 nm. Such dyes are not specifically limited; examples are azo dyes, azo metal complex dyes, phthalocyanine dyes, oxonol dyes, and cyanine dyes.

The quantity of the recording layer dye employed ranges, by way of example, from 1 to 100 weight percent, preferably from 50 to 100 weight percent, and more preferably, from 75 to 100 weight percent, of the total weight of the recording layer. When the above azo dye compound and some other dyes are employed in combination as the recording layer dye, the ratio of the above azo dye compound to the total quantity of dye is preferably equal to or greater than 1 weight percent, more preferably 10 to 100 weight percent, and further preferably, 50 to 100 weight percent.

The formation of the recording layer will be described below.

The recording layer can be formed by dissolving the dye, with or without a binder or the like, in a suitable solvent to prepare a coating liquid, after which the coating liquid is then applied on a reflective layer, described further below, to form a coating, and the coating is dried. The recordable recording layer may be a monolayer or multilayered. A recording layer of multilayered structure can be formed by repeating the process of coating the coating liquid multiple times.

The concentration of the dye in the coating liquid generally ranges from 0.01 to 15 weight percent, preferably ranges from 0.1 to 10 weight percent, more preferably ranges from 0.5 to 5 weight percent, and still more preferably, ranges from 0.5 to 3 weight percent.

Examples of the solvent employed in the preparation of the coating liquid are: esters such as butyl acetate, ethyl lactate, and cellosolve acetate; ketones such as methyl ethyl ketone, cyclohexanone, and methyl isobutyl ketone; chlorinated hydrocarbons such as dichloromethane, 1,2-dichloroethane, and chloroform; amides such as dimethylformamide; hydrocarbons such as methyl cyclohexane; ethers such as tetrahydrofuran, ethyl ether, and dioxane; alcohols such as ethanol, n-propanol, isopropanol, n-butanol, and diacetone alcohol; fluorine-based solvents such as 2,2,3,3-tetrafluoro-1-propanol; and glycol ethers such as ethylene glycol monomethyl ether, ethylene glycol monoethyl ether, and propylene glycol monomethyl ether.

These solvents can be used singly or in combinations of two or more based on the solubility of the dye employed. Various additives such as binders, oxidation inhibitors, UV-absorbing agents, plasticizers, and lubricants can be added to the coating liquid as needed.

Examples of coating methods are spraying, spin coating, dipping, roll coating, blade coating, the doctor roll method, and screen printing.

In the course of coating, the temperature of the coating liquid prefrably ranges from 23 to 50˚C, more preferably from 24 to 40˚C, and further preferably, from 23 to 38˚C.

The thickness of the recordable recording layer ranges from 1 to 100 nm on lands and from 5 to 150 nm on grooves. The thickness on lands (protruding portions of the above-described support) is preferably equal to or less than 70 nm, more preferably equal to or less than 50 nm, and further preferably, equal to or less than 30 nm. The lower limit is preferably equal to or greater than 5 nm, more preferably equal to or greater than 10 nm.

The thickness of the recordable recording layer on grooves (concave portions of the above-described support) is preferably equal to or less than 100 nm, more preferably equal to or less than 50 nm. The lower limit is preferably equal to or greater than 10 nm, more preferably equal to or greater than 20 nm.

The ratio of the thickness of the recordable recording layer on lands to the thickness of the recordable recording layer on grooves ((thickness of recording layer on lands)/(thickness of recording layer on grooves)) is preferably equal to or greater than 0.1, more preferably equal to or greater than 0.13, further preferably equal to or greater than 0.15, and still more preferably, equal to - or greater than 0.17. The upper limit is preferably equal to or less than 1, more preferably equal to or less than 0.9, further preferably equal to or less than 0.85, and still more preferably, equal to or less than 0.8.

Various antifading agents may be incorporated into the recording layer to enhance the resistance to light of the recording layer. Examples of antifading agents are organic oxides and singlet oxygen quenchers. The compounds described in Japanese Unexamined Patent Publication (KOKAI) Heisei No. 10-151861 are desirable organic oxides for

use as antifading agents. Singlet oxygen quenchers that are described in known publications such as patent specifications may be employed. Specific examples are described in Japanese Unexamined Patent Publication (KOKAI) Showa Nos. 58-175693, 59-81194, 60-18387, 60-19586, 60-19587, 60-35054, 60-36190, 60-36191, 60-44554, 60-44555, 60-44389, 60-44390, 60-54892, 60-47069, and 63-209995; Japanese Unexamined Patent Publication (KOKAI) Heisei No. 4-25492; Japanese Examined Patent Publication (KOKOKU) Heisei Nos. 1-38680 and 6-26028; German Patent No. 350399; and the Journal of the Japanese Chemical Society, October Issue, 1992, p. 1141. The compound denoted by general gormula (I) below is an example of a desirable singlet oxygen quencher.

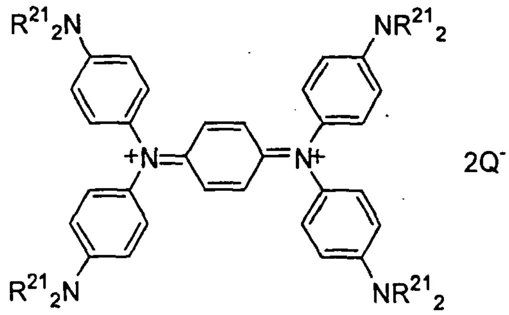

· · · (I)

In general formula (I), $R^{21}$ denotes an optionally substituted alkyl group and $Q^-$ denotes an anion.

In general formula (I), $R^{21}$ preferably denotes an optionally substituted alkyl group having 1 to 8 carbon atoms, more preferably an unsubstituted alkyl group having 1 to 6 carbon atoms. Examples of substituents on the alkyl group are: halogen atoms (such as F and Cl), alkoxy groups (such as methoxy groups and ethoxy groups), alkylthio groups (such as methylthio groups and ethylthio groups), acyl groups (such as acetyl groups and propionyl groups), acyloxy groups (such as acetoxy groups and propionyloxy groups), hydroxy groups, alkoxycarbonyl groups (such as methoxycarbonyl groups and ethoxycarbonyl groups), alkenyl groups (such as vinyl groups), and aryl groups (such as phenyl groups and naphthyl groups). Of these, halogen atoms, alkoxy groups, alkylthio groups, and alkoxycarbonyl groups are preferable. Preferable examples of the anion denoted by $Q^-$ are: $ClO_4^-$, $AsF_6^-$, $BF_4^-$, and $SbF_6^-$.

Examples of the compound denoted by general formula (I) (Compound Nos. I-1 to I-8) are given in Table 2.

Table 2

| Compound No. | $R^{21}$ | $Q^-$ |
|---|---|---|
| I-1 | $CH_3$ | $ClO^{4-}$ |
| I-2 | $C_2H_5$ | $ClO^{4-}$ |
| I-3 | n-$C_3H_7$ | $ClO^{4-}$ |
| I-4 | n-$C_4H_9$ | $ClO^{4-}$ |
| I-5 | n-$C_5H_{11}$ | $ClO^{4-}$ |
| I-6 | n-$C_4H_9$ | $SbF^{6-}$ |
| I-7 | n-$C_4H_9$ | $BF^{4-}$ |
| I-8 | n-$C_4H_9$ | $AsF^{6-}$ |

The quantity of the above-described antifading agent, such as a singlet oxygen quencher, normally falls within a range of 0.1 to 50 weight percent, preferably a range of 0.5 to 45 weight percent, more preferably a range of 3 to 40 weight percent, and further preferably, a range of 5 to 25 weight percent of the quantity of dye.

Bonding layer

In the optical information recording medium of the present invention, a layer (bonding layer) formed by curing an ultraviolet-curable composition is present between the barrier layer and cover layer. The glass transition temperature of the bonding layer is equal to or lower than 25°C. When the glass transition temperature of the bonding layer is higher than 25°C, deformation of the bondihng layer accompanying the formation of voids in the recording layer does not readily

take place, making it difficult to achieve adequate recording characteristics. To achieve excellent recording characteristics, it is preferable for the glass transition temperature of the bonding layer to be equal to or lower than 0˚C, more preferably equal to or lower than -10˚C. From the perspective of storage properties, it is preferable for the glass transition temperature of the bonding layer to be equal to higher than -100˚C. That is, the glass transition temperature of the bonding layer employed in the present invention preferably falls within a range of 25 to -100˚C, more preferably 0 to -100˚C, and still more preferably, -10 to -100˚C.

The glass transition temperature (Tg) in the present invention denotes the maximum value of the tangent of loss angle (tan δ) calculated based on dynamic viscoelastic behavior measured in tension mode or shear mode at a frequency of 1 Hz by a dynamic viscoelasticity measuring apparatus (such as a DVA-200 made by IT Instrument Control Co., Ltd.). In addition to the above-described glass transition temperature obtained from dynamic viscoelastic behavior, the glass transition temperature obtained by differential scanning calorimetry (DSC) (also referred to as the "glass transition temperature (DSC)" hereinafter) is also known. The glass transition temperature of the bonding layer employed in the present invention is preferably equal to or lower than 10˚C, more preferably from -15 to -125˚C, and further preferably, from -35 to -125˚C as a glass transition temperature (DSC).

The glass transition temperature of the bonding layer can be controlled through the formulation of the ultraviolet radiation-curable composition employed to form the bonding layer, and the type, curing conditions, and the like of the ultraviolet radiation-curable compound contained in this composition.

In the present invention, the storage modulus of elasticity can be used as an index of the hardness of the bonding layer in the same manner as the glass transition temperature. The storage modulus of elasticity E' of the bonding layer in tension mode at 30˚C is preferably equal to or lower than 30 MPa, more preferably equal to or lower than 15 MPa, and further preferably, equal to or lower than 10 MPa. From the perspective of storage properties, the storage modulus of elasticity of the bonding layer is preferably equal to or higher than 0.001 MPa. That is, the storage modulus of elasticity of the bonding layer preferably falls within a range of 30 to 0.001 MPa, more preferably 15 to 0.010 MPa, and further preferably, 10 to 0.015 MPa. The storage modulus of elasticity G' of the bonding layer in shear mode at 30˚C is preferably equal to or lower than 10 MPa, more preferably equal to or lower than 5 MPa, and still more preferably, equal to or lower than 3.3 MPa. From the perspective of storage properties, the storage modulus of elasticity of the bonding layer is preferably equal to or higher than 0.00033 MPa. That is, the storage modulus of elasticity of the bonding layer preferably falls within a range of 10 to 0.00033 MPa, more preferably 5 to 0.0033 MPa, and further preferably, 3.3 to 0.005 MPa. The relational expression E' = 3G' is generally known to hold true when there is no change in volume during deformation. The storage modulus of elasticity, in the same manner as the glass transition temperature, can be obtained from dynamic viscoelastic behavior measured at a frequency of 1 Hz with a dynamic viscoelasticity measuring apparatus (such as a DVA-200 made by IT Instrument Control Co., Ltd.). The tangent of loss angle (tan δ) obtained based on dynamic viscoelastic behavior when measured in tension mode or shear mode at 30˚C preferably falls within a range of 2.0 to 0.001, more preferably a range of 1.5 to 0.002, and further preferably, a range of 1.0 to 0.003.

Ultraviolet radiation-curable composition

The ultraviolet radiation-curable composition employed to form the recording layer is a coating liquid comprising an ultraviolet radiation-curable compound and various optional components, described further below.

Polymerizable monomer components such as monofunctional (meth)acrylates and polyfunctional (meth)acrylates can be employed as the ultraviolet radiation-curable component. These may be employed singly or in combinations of two or more. Further, the acrylate of general formula (A) below and the methacrylate of general formula (B) below are referred to as (meth)acrylate; similarly, an acrylic acid and methacrylic acid are referred to as (meth)acrylic acid in the present invention.

General formula (A)

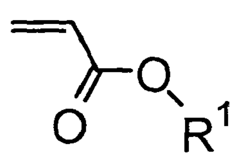

General formula (B)

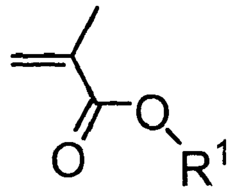

[In general formulas (A) and (B), $R^1$ denotes a subustituent.]

Examples of polymerizable monomers suitable for use in the present invention are given below. Examples of monofunctional (meth)acrylates are (meth)acrylates of general formulas (A) and (B) where substituent $R^1$ denotes a substituent such as a methyl group, ethyl group, propyl group, butyl group, sec-butyl group, tert-butyl group, pentyl group, hexyl group, heptyl group, 2-ethylhexyl group, octyl group, nonyl group, dodecyl group, hexadecyl group, octadecyl group, cyclohexyl group, benzyl group, methoxyethyl group, butoxyethyl group, phenoxyethyl group, nonylphenoxyethyl group, tetrahydrofurfuryl group, glycidyl group, 2-hydroxyethyl group, 2-hydroxypropyl group, 3-chloro-2-hydroxypropyl group, dimethylaminoethyl group, diethylaminoethyl group, nonylphenoxyethyltetrahydrofurfuryl group, caprolactone-modified tetrahydrofurfuryl group, isobomyl group, dicyclopentanyl group, dicyclopentenyl group, dicyclopentenyloxyethyl, or (meth)acrylic acid.

Preferable examples are those in which substituent $R^1$ denotes a butyl group, pentyl group, hexyl group, heptyl group, 2-ethylhexyl group, octyl group, nonyl group, or dodecyl group, more preferably a monomer in the form of butyl acrylate, hexyl acrylate, 2-ethylhexyl acrylate, octyl acrylate, nonyl acrylate, or dodecyl methacrylate.

Examples of the polyfunctional (meth)acrylate are 1,3-butylene glycol, 1,4-butanediol, 1,5-pentanediol, 3-methyl-1,5-pentanediol, 1,6-hexanediol, neopentyl glycol, 1,8-octanediol, 1,9-nonanediol, tricyclodecanedimethanol, ethylene glycol, polyethylene glycol, propylene glycol, dipropylene glycol, tripropylene glycol, polypropylene glycol, and other diacrylates; di(meth)acrylate of tris(2-hydroxyethyl)isocyanurate; di(meth)acrylate of diol obtained by adding 4 or more moles of ethylene oxide or propylene oxide to 1 mole of neopentyl glycol; di(meth)acrylate of diol obtained by adding 2 moles of ethylene oxide or propylene oxide to 1 mole of bisphenol A; trimethylolpropane tri(meth)acrylate; di- or tri(meth)acrylate obtained by adding 3 or more moles of ethylene oxide or propylene oxide to 1 mole of trimethylolpropane; di(meth)acrylate of diol obtained by adding 4 or more moles of ethylene oxide or propylene oxide to 1 mole of bisphenol A; tris(2-hydroxyethyl)isocyanurate tri(meth)acrylatte; tri(meth)acrylate obtained by adding 3 or more moles of ethylene oxide or propylene oxide to 1 mole of tris(2-hydroxyethyl)isocyanurate; pentaerythritol tri- or tetra(meth) acrylate; tri- or tetra(meth)acrylate obtained by adding 4 or more moles ethylene oxide or propylene oxide to one mole of pentaerythritol; poly(meth)acrylate of dipentaerythritol; poly(meth)acrylate obtained by adding 6 or more moles of ethylene oxide or propylene oxide to 1 mole of dipentaerythritol; caprolactone-modified tris[(meth)acryloxyethyl]isocyanurate; poly(meth)acrylate of alkyl-modified dipentaerythritol; poly(meth)acrylate of caprolactone-modified dipentaerythritol; hydroxypivalic acid neopentyl glycol diacrylate; caprolactone-modified hydroxypivalic acid neopentyl glycol diacrylate; ethylene oxide-modified phosphoric acid (meth)acrylate; and ethylene oxide-modified alkylated phosphoric acid (meth)acrylate.

Di(meth)acrylate of diol obtained by adding 4 or more moles of ethylene oxide or propylene oxide to 1 mole of bisphenol A, di- or tri(meth)acrylate of triols obtained by adding 3 or more moles of ethylene oxide or propylene oxide to 1 mole of trimethylolpropane, tri(meth)acrylate obtained by adding 3 moles or more of ethylene oxide or propylene oxide to 1 mole of tris(2-hydroxyethyl)isocyanurate, tri- or tetra(meth)acrylate obtained by adding 4 or more moles of ethylene oxide or propylene oxide to 1 mole of pentaerythritol, and poly(meth)acrylate obtained by adding 6 or more moles of ethylene oxide or propylene oxide to 1 mole of dipentaerythritol are preferred; and di(meth)acrylate of diol obtained by adding 4 or more moles of ethylene oxide or propylene oxide to 1 mole of bisphenol A, di- or tri(meth)acrylate of diol obtained by adding 3 or more moles of ethylene oxide or propylene oxide to 1 mole of trimethylolpropane, and tri- or tetra(meth)acrylate obtained by adding 4 or more moles of ethylene oxide or propylene oxide to 1 mole of pentaerythritol are of even greater preference.

N-vinyl-2-pyrrolidone, acryloyl morpholine, vinyl imidazole, N-vinylcaprolactam, N-vinylformamide, vinyl acetate, (meth)acrylic acid, (meth)acrylamide, N-hydroxymethylacrylamide, and N-hydroxyethylacrylamide, and their alkylether compounds can also be employed.

Polymerizable oligomers can also be employed as the ultraviolet radiation-curable compound. Examples of polymerizable oligomers are polyester (meth)acrylate, polyether (meth)acrylate, epoxy (meth)acrylate, and urethane (meth)acrylate.

To obtain a bonding layer with a glass transition temperature of equal to or lower than 25°C, 20 to 99 weight

parts of monofunctional (meth)acrylate and 1 to 80 weight parts of polyfunctional (meth)acrylate, preferably 30 to 99 weight parts of monofunctional (meth)acrylate and 1 to 70 weight parts of polyfunctional (meth)acrylate, and more preferably, 40 to 99 weight parts of monofunctional (meth)acrylate and 1 to 60 weight parts of polyfunctional (meth) acrylate, can be employed per 100 weight parts of ultraviolet radiation-curable composition. Still more preferably, trifunctional or higher (meth)acrylate constitutes less than 5 weight parts of the above-described polyfunctional (meth) acrylate.

Normally, photopolymerization initiators can be added to the ultraviolet radiation-curable composition. Any photopolymerization initiator may be employed that is capable of curing the ultraviolet radiation-curable compound, such as polymerizable monomers and/or polymerizable oligomers employed; there is no specific limitation. A molecule-cleaving or hydrogen-removing photopolymerization initiator is suitably employed in the present invention.

Examples of suitable photopolymerization initiators are: benzoinisobutylether, 2,4-diethylthioxanthone, 2-isopropylthioxanthone, 2-chlorothioxanthone, benzyl, 2,2-dimethoxy-2-phenylacetophenone, 2,4,6-trimethylbenzoyldiphenylphosphinoxide, 2-benzyl-2-dimethylamino-1-(4-morpholinophenyl)butane-1-one, and bis(2,6-dimethoxybenzoyl)-2,4,4-trimethylpentylphosphine oxide. The following may be additionally employed in combination as molecule-cleaving photopolymerization initiators: 1-hydroxycyclohexylphenylketone, benzoyl ethyl ether, benzyl dimethyl ketal, 2-hydroxy-2-methyl-1-phenylpropane-1-one, 1-(4-isopropylphenyl)-2-hydroxy-2-methylpropane-1-one, and 2-methyl-4'-(methylthio)-2-morpholinopropiophenone. The following may be additionally employed in combination as hydrogen-removing polymerization initiators: benzophenone, 4-phenylbenzophenone, isophthalophenone, and 4-benzoyl-4'-methyldiphenylsulfide.

Preferable examples are 2,4-diethylthioxanthone, 2-isopropylthioxanthone, 2-chlorothioxanthone, 2,2-dimethoxy-2-phenylacetophenone, 2,4,6-trimethylbenzoyldiphenylphosphinoxide, 1-hydroxycyclohexylphenylketone, 2-methyl-4'-(methylthio)-2-morpholinopropiophenone, and 4-phenylbenzophenone. Preferred examples are 2-isopropylthioxanthone, 2,4,6-trimethylbenzoyldiphenylphosphinoxide, 1-hydroxycyclohexylphenylketone, 2-methyl-4'-(methylthio)-2-morpholinopropiophenone, and 4-phenylbenzophenone.

A sensitizing agent in the form of an amine that does not cause an addition polymerization reaction to occur with the above-described polymerizable components may be employed in combination with the above-described photopolymerization initiator; examples are: triethylamine, methyldiethanolamine, triethanolamine, p-diethylaminoacetophenone, p-dimethylaminoacetophenone, p-dimethylaminoethyl benzoate, p-dimethylaminoisoamyl benzoate, N,N-dimethylbenzylamine, and 4,4'-bis(diethylamino)benzophenone. The above photopolymerization initiator and sensitizing agent are both desirably selected to have good solubility in the curing components and to not block the transmission of ultraviolet radiation.

An ultraviolet radiation-curable composition that is liquid at from ordinary temperature to 40˚C is preferably employed. It is preferable not to employ a solvent; when one is employed, the quantity should be kept to a bare minimum. When coating the composition by a spin coating, it is preferably prepared to a viscosity of 20 to 1,000 mPa·s, more preferably prepared to 30 to 700 mPa·s, and further preferably prepared to 40 to 500 mPa·s.

A polymer with a weight average molecular weight of equal to or greater than 10,000 can be employed as a thickening agent to adjust the viscosity. A small quantity of a polymer of relatively high molecular weight, that is, a polymer having a weight average molecular weight of equal to or greater than 100,000, preferably a polymer having a weight average molecular weight of equal to or greater than 1 million, is desirably employed to achieved the desired viscosity.

As needed, other additives in the form of thermal polymerization inhibitors; oxidation-preventing agents such as hindered phenols, hindered amines, and phosphides; plasticizers; silane coupling agents such as epoxy silanes, mercaptosilanes, and (meth)acrylic silanes; and the like can be blended into the ultraviolet radiation-curable composition to enhance various characteristics. These additives are desirably selected for use based on good solubility in the curable components and not .blocking the transmission of ultraviolet radiation. Commercially available product can be employed as the above ultraviolet radiation-curable compound. SD-661 made by Dainippon Ink and Chemicals, Inc. is a specific example.

The details of the ultraviolet radiation-curable composition employed to form the bonding layer are as set forth above. The method of forming the bonding layer is not specifically limited. However, it is desirable to coat a prescribed quantity of ultraviolet radiation-curable composition on the surface (bonding surface) of the barrier layer, position a cover layer thereover, uniformly spread the bonding agent between the bonding surface and the cover layer by spin coating, and irradiate the bonding agent from the cover layer side with ultraviolet radiation to cure it. The level of irradiation preferably exceeds 200 $mJ/cm^2$, more preferably ranging from 200 to 2,000 $mJ/cm^2$. For example, a 4.2-inch spiral lamp made by Xenon Corporation may be employed as the UV lamp in curing. It is desirable to suitably set the distance between the surface of the lamp and the surface of the sample during irradiation with ultraviolet radiation.

To move the medium that has been coated with the ultraviolet radiation-curable composition toward the UV irradiation position (for example, displacing it from a spin table to a UV irradiation table), the support is desirably held by the outer circumference portion or inner circumference portion of the medium, lifted, and moved. When the medium

is supported and lifted by a method such as suction, the medium may be deformed or bubbles may be entrained in the bonding layer due to the ultraviolet radiation-curable composition being uncured, becoming a source of defects and film thickness fluctuation in the bonding layer. When the support is supported by the outer circumference and moved, the support member is desirably regularly cleaned. On the outer circumference portion, uncured ultraviolet radiation-curable composition that is cut off during spin coating will sometimes adhere to the outer rim portion or adhere to the support member. When displacement is conducted multiple times with the same support member, there is a possibility of adhesion of the support member to the medium, creating defects.
Further, at the UV irradiation position (for example, on a UV irradiation table), the spot at which the medium is supported may be selected from among one or more portion on the inner circumference portion, outer circumference portion, and middle circumference portion of the support (medium). A plate-shaped support member may be used to provide uniform support over the entire surface. When supporting multiple spots, the support height can be varied at each spot. For example, when just the inner circumference is supported, the unsupported outer circumference portion of the medium may sag under its own weight, and when cured in that shape, warping of the medium may be present following curing. In that case, the outer circumference portion can also be supported to prevent sagging, thereby preventing warping following curing, and the height of the various support members can be adjusted, which can be anticipated to have the effect of adjusting the cured shape of the medium.
Curing with ultraviolet radiation is preferably conducted so that the gel ratio of the cured coating is equal to or higher than 90 percent, more preferably equal to or higher than 92 percent, further preferably equal to or higher than 95 percent, and still more preferably, 100 percent. The gel ratio is an index of the degree of curing; the greater the number, the further curing has advanced. At equal to or higher than 90 percent, curing can be determined to have advanced adequately. The gel ratio can be determined by the following method.
A test piece is cut from a coating that has been subjected to curing for use as a sample in measuring the gel ratio. The weight of the sample (denoted as "W1" hereinafter) is determined, the sample is immersed in a methyl ethyl ketone solution weighing 100 times the weight of W1, and the mixture is heated for 8 hours in a heating furnace at 80˚C to dissolve out the uncured portion. Following heating, the supernatant solution is removed within 10 minutes, naturally dried for 48 hours or more in a 25˚C, 50 percent RH environment, and dried with heating for 3 hours at 100˚C in a heating furnace to obtain a sample from which the uncured portion has been dissolved out. The weight (denoted as "W2" hereinafter) following dissolution of the uncured portion is then measured. The supernatant solution can be removed by aspiration with a pipet while the solution is standing calmly. About 80 to 90 percent of the supernatant solution is removed, and the remainder is naturally dried and heat dried to induce evaporation. The gel ratio can be calculated by the following equation from W1 and W2 described above.

$$\text{Gel ratio (\%)} = 100 - (W1 - W2)/W1 \times 100$$

The thickness of the bonding layer preferably falls within a range of 0.1 to 100 micrometers, more preferably a range of 0.5 to 50 micrometers, and further preferably, a range of 1 to 30 micrometers. Barrier layer
The barrier layer can be provided to enhance the storage properties of the recording layer, enhance adhesion between the recording layer and cover layer, adjust the reflectance, adjust thermal conductivity, and the like.
The material employed in the barrier layer is a material that passes the beam employed in recording and reproducing; it is not specifically limited beyond being able to perform this function. For example, it is generally desirable to employ a material with low permeability to gas and moisture, a material that does not corrode upon contact with a reflective layer material such as an Ag alloy; and a material that does not corrode in a hot, humid environment. A material that is also a dielectric is preferred.
Specifically, materials in the form of nitrides, oxides, carbides, and sulfides of Zn, Si, Ti, Te, Sn, Mo, Ge, Nb, Ta and the like are preferable. $MoO_2$, $GeO_2$, TeO, $SiO_2$, $TiO_2$, ZuO, $SnO_2$, $ZnO\text{-}Ga_2O_3$, $Nb_2O_5$, and $Ta_2O_5$ are preferable and $SnO_2$, $ZnO\text{-}Ga_2O_3$, $SiO_2$, $Nb_2O_5$, and $Ta_2O_5$ are more preferable.
The barrier layer can be formed by vacuum film-forming methods such as vacuum vapor deposition, DC sputtering, RF sputtering, and ion plating. Of these, sputtering is preferred.
The thickness of the barrier layer preferably falls within a range of 1 to 200 nm, more preferably within a range of 2 to 100 nm, and further preferably, within a range of 3 to 50 nm.

Cover layer

The cover layer is adhered through the bonding agent onto a barrier layer.
The cover layer is not specifically limited, other than that it be a film of transparent material. An acrylic resin such as a polycarbonate or polymethyl methacrylate; a vinyl chloride resin such as polyvinyl chloride or a vinyl chloride copolymer;

an epoxy resin; amorphous polyolefin; polyester; or cellulose triacetate is preferably employed. Of these, the use of polycarbonate or cellulose triacetate is more preferable.

The term "transparent" means having a transmittance of equal to or greater than 80 percent for the beam used in recording and reproducing. In the optical information recording medium of the present invention, the ultraviolet radiation-curable composition coated on the barrier layer is desirably cured by irradiation of ultraviolet radiation through the cover layer. Thus, it is desirable for the cover layer to pass ultraviolet radiation. Specifically, to ensure curing of the ultraviolet radiation-curable resin, the cover layer preferably has a transmittance of equal to or greater than 80 percent for the ultraviolet radiation that is irradiated for curing the ultraviolet radiation-curable composition.

The cover layer may further contain various additives so long as they do not compromise the effect of the present invention. For example, UV-absorbing agents may be incorporated to cut light with the wavelength of equal to or shorter than 400 nm and/or dyes may be incorporated to cut light with the wavelength of equal to or longer than 500 nm. As for the physical surface properties of the cover layer, both the two-dimensional roughness parameter and three-dimensional roughness parameter are preferably equal to or less than 5 nm.

From the perspective of the degree of convergence of the beam employed in recording and reproducing, the birefringence of the cover layer is preferably equal to or lower 10 nm.

The thickness of the cover layer can be suitably determined based on the NA or wavelength of the laser beam irradiated in recording and reproducing, the wavelength of the ultraviolet radiation that is irradiated for curing the ultraviolet radiation-curable composition, and the like. In the present invention, the thickness preferably falls within a range of 0.01 to 0.5 mm, more preferably a range of 0.05 to 0.12 mm.

The total thickness of the cover layer and the bonding layer is preferably 0.09 to 0.11 mm, more preferably 0.095 to 0.105 mm.

A protective layer (hard coating layer 44 in the embodiment shown in Fig. 2 described further below) may be provided on the incident light surface of the cover layer during manufacturing of the optical information recording medium to prevent scratching of the incident light surface.

The cover layer may be formed by spin coating UV-curing resin.

Other layers

The optical information recording medium of the present invention may optionally comprise other layers in addition to the above-described essential layers so long as the effect of the present invention is not compromised. Examples of such optional layers are a label layer having a desired image that is formed on the back of the support (the reverse unformed side from the side on which the recordable recording layer is formed) and a boundary layer positioned between the reflective layer and the recording layer. The label layer may be formed from UV-curing resin, thermosetting resin, or heat-drying resin.

Each of the above-described essential layers and optional layers may have a single-layer or multilayer structure.

Information can be recorded onto the recording layer by irradiating the optical information recording medium of the present information with a laser beam. The recording of information on the optical information recording medium is conducted by changing the optical characteristics of portions of the recording layer that have been irradiated by laser beam. This changing of optical characteristics is thought to be accomplished by absorption of the beam by portions of the recording layer that are irradiated with a laser beam, causing a localized rise in temperature that produces physical or chemical changes (such as forming pits). The reading (reproduction) of information that has been recorded on the recording layer can be achieved, for example, by irradiating a laser beam of the same wavelength as the laser beam employed in recording and detecting the difference in optical characteristics, such as reflectance, between portions in which the optical characteristics of the recording layer have been changed (recorded portions) and those in which they have not (unrecorded portions). As set forth above, in the present invention, the recording of information is desirably conducted by irradiating a laser beam to thermally decompose the above-described azo dye compound, thereby causing the gas that is generated to form voids in pits. Preferably, the above-described azo dye compound heats up as it absorbs the laser beam, and the heat thus generated decomposes substituents in the azo dye compound or the dye skeleton thereof, generating gas. This then can form voids in the recording layer, generating a large difference in refractive index between portions in which voids have been formed by laser beam irradiation and portions that have not been irradiated by laser beam, which is thought to enhance recording characteristics. The wavelength of the laser beam is preferably 390 to 440 nm. The details of information recording on the optical information recording medium of the present invention.are described below.

METHOD OF RECORDING INFORMATION

The present invention further relates to a method of recording information onto the recording layer comprised in the optical information recording medium of the present invention by irradiation of a laser beam having a wavelength

ranging from 390 to 400 nm onto the optical information recording medium.

The recording beam is a laser beam with a wavelength of 390 to 440 nm. A semiconductor laser beam having an oscillation wavelength falling within a range of equal to or shorter than 440 nm is suitable for use as a recording beam. A blue-violet semiconductor laser beam having an oscillation wavelength falling within a range of 390 to 440 nm (preferably 390 to 415 nm) and a blue-violet SHG laser beam having a core oscillation wavelength of 425 nm obtained by halving the wavelength of an infrared semiconductor laser beam having a core oscillation wavelength of 850 nm with an optical waveguide device are examples of preferable light sources. In particular, a blue-violet semiconductor laser beam having an oscillation wavelength of 390 to 415 nm is preferably employed from the perspective of recording density. The information that is thus recorded can be reproduced by directing the semiconductor laser beam from the cover layer side while rotating the optical information recording medium at the same constant linear speed as in the recording, and detecting the reflected beam.

Specifically, information can be recorded on the optical information recording medium shown in Fig. 2 in the following manner.

First, while rotating the optical information recording medium at a constant linear speed (such as 0.5 to 10 m/s) or constant angular speed, recording laser beam 46 such as a semiconductor laser beam is irradiated from the cover layer 16 side through first object lens 42 (for example, having an aperture number NA of 0.85). As a result of irradiation by laser beam 46, recordable recording layer 14 can absorb laser beam 46, locally raising the temperature and producing physical and chemical changes (for example, by generating pits). These are then thought to change the optical characteristics, recording information.

Other details of the method of recording information of the present invention are as set forth above for the optical information recording medium of the present invention.

EXAMPLES

The present invention will be described in detail below based on examples. However, the present invention is not limited to the examples.

<<Synthesis of azo dye compound>>

Synthesis of compound (AZO-4)

Compound (4)

Compound (2)

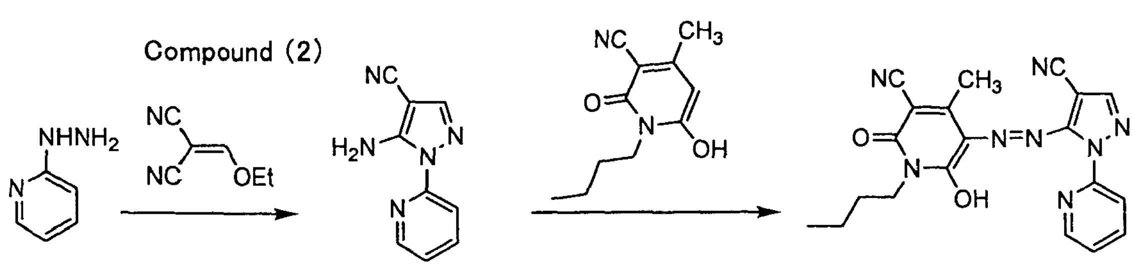

Compound (1)

Compound (3)

(AZO-4)

To a 100 mL eggplant-shaped flask were charged 3 g of compound (1), 3.36 g of compound (2), and 30 mL of ethanol and the mixture was hot refluxed for 4 hours. The mixture was returned to room temperature. The crystals that had formed were filtered out and washed with ethanol, yielding 4.2 g of compound (3). The compound was identified by 300 MHz $^1$H-NMR. $^1$H-NMR (DMSO-d6) [ppm]: δ 8.47 (d), 8.1-8.2 (s), 8.04 (t), 7.79 (t), 7.34 (d)

Next, 2 mL of sulfuric acid was poured into a 100 mL triangular flask and 9 mL of acetic acid was gradually added dropwise with ice cooling. After the gradual dropwise addition of 1.4 mL of 40 percent nitrosyl sulfate, 1.2 g of compound (3) was gradually added while maintaining 0 to 5°C and the mixture was stirred for 15 minutes. To this acidic solution was gradually added 20 mL of methanol solution containing 1.34 g of compound (4) with ice cooling, and the mixture was stirred for 1 hour. The mixture was returned to room temperature and stirred for 2 hours, after which the precipitate was filtered out and dried, yielding 1.6 g of compound (AZO-4). The compound was identified by 300 MHz $^1$H-NMR. $^1$H-NMR (DMSO-d6) [ppm]; δ 8.64(d), 8.40(s), 8.18(t), 8.04(t), 7.57(dd), 3.90(t), 1.65-1.50(m), 1.30-1.41(m), 1.95(t)

Example compound (C-1) was synthesized by the similar method as used to synthesize above-described example compound (AZO-4). Various azo dyes can be synthesized by the same method.

Synthesis of compound (M-1)

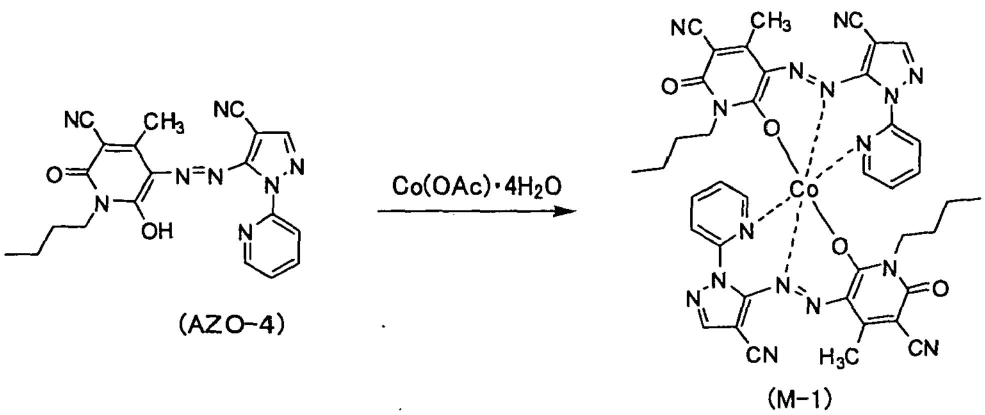


(AZO-4)

(M-1)

To a 50 mL eggplant-shaped flask were charged 300 mg of compound (AZO-4) and 10 mL of methanol, and 0.31 mL of triethyleneamine was added dropwise while stirring. The mixture was stirred for 10 minutes, 186 mg of Co $(OAc)_2 \cdot 4H_2O$ was added, and hot refluxing was conducted for 3 hours. The mixture was returned to room temperature. The precipitate was filtered out, washed with methanol, and dried, yielding 0.28 g of compound (M-1). The identification of the compound was confirmed by MALDI-MS. $[M-H^+]$=863

Synthesis of compound (M-2)

The $Co(OAc)_2 \cdot 4H_2O$ employed in the synthesis of example compound (M-1) was replaced with $Ni(OAc)_2 \cdot 4H_2O$ and a similar reaction was conducted to synthesize compound (M-2).
The identification of the compound was confirmed by MALDI-MS. $[M-H^+]$=862

Synthesis of compound (M-3)

The $Co(OAc)_2 \cdot 4H_2O$ employed in the synthesis of compound (M-1) above was replaced with $Cu(OAc)_2 \cdot H_20$ and a similar reaction was conducted to synthesize compound (M-3). The identification of the compound was confirmed by MALDI-MS. $[M-H^+]$=867

Synthesis of compound (M-4)

The $Co(OAc)_2 \cdot 4H_2O$ employed in the synthesis of compound (M-1) above was replaced with $FeCl_2 \cdot 4H_2O$ and a similar reaction was conducted to synthesize compound (M-4). The identification of the compound was confirmed by MALDI-MS. $[M-H^+]$=860

Compounds (M-5), (M-6), (M-8), (M-9), (M-10), (M-17), (M-18), (M-19) (M-20), (M-23), (M-26), and (M-30) were synthesized by the similar method as in the synthesis of above-described compounds (M-1) to (M-4). The compounds were identified by MALDI-MS or ESI-MS to confirm that the targeted compounds had been obtained. Similarly, various azo metal complex dyes can be synthesized. Compound identification can be conducted by MALDI-MS or ESI-MS.

Details of synthesis of the azo dye denoted by example compound (AZO-14) will be described below. However, the present invention is not limited to the following method.

Synthesis of compound (AZO-14)

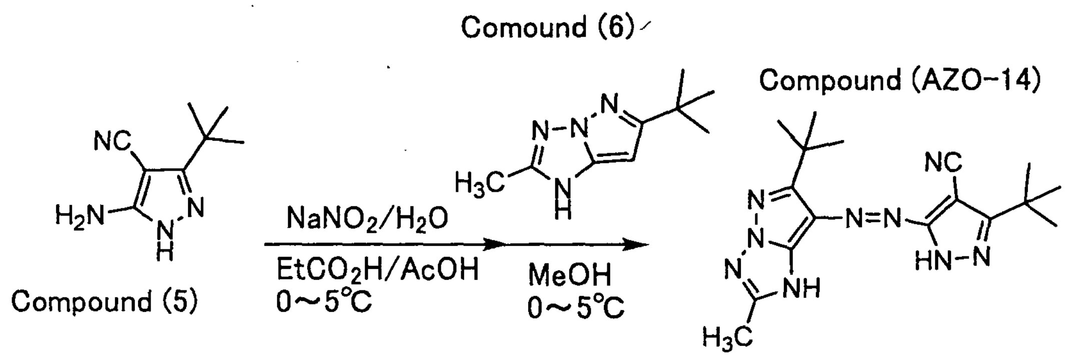


To a 100 mL triangular flask were charged 2.6 mL of acetic acid and 4 mL of propionic acid, after which 3.7 mL of (35 to 37 percent) hydrochloric acid was gradually added dropwise with ice cooling. The mixture was cooled to 0 to 5˚C in an ice bath and 2 mL of an aqueous solution in which 0.92 g of $NaNO_2$ was dissolved (cooled to equal to or lower t than 5˚C) was gradually added dropwise. Compound (5) was added while maintaining a temperature of 0 to 5˚C and the mixture was stirred for 15 minutes at 0 to 5˚C. To this acidic solution was gradually added a 40 mL methanol solution containing 2.2 g of compound (6) that had been maintained at 0 to 5˚C in an ice bath, and the mixture was stirred for 1 hour. The mixture was returned to room temperature and stirred for 2 hours. The precipitate was filtered out and washed with a minimal quantity of methanol. The solid obtained was purified by silica gel chromatography using ethyl acetate as eluent, yielding 0.8 g of compound (AZO-14). The compound was identified by 300 MHz $^1$H-NMR. $^1$H-NMR(DMSO-d6)[ppm] ; δ13.70(1H,br), 13.5(1H,s), 2.46(3H,s), 1.51(9H,s), 1.44(9H,s)

Synthesis of compound (M-39)

To a 50 mL eggplant-shaped flask were charged 1 g of compound (AZO-14) and 20 mL of methanol, and 1.6 mL of triethylamine was added dropwise while stirring. The mixture was stirred for 10 minutes, 0.56 g of $Cu(OAC)_2{\cdot}H_2O$ was added, and the mixture was hot refluxed for 1 hour. After adding 50 mL of distilled water, the mixture was returned to room temperature. The precipitate was filtered out, washed with distilled water, and dried, yielding 1.1 g of compound (M-39).

Compound (M-39) was identified by ESI-MS and MALDI-MS. The ESI-MS measurement was conducted by HPLC (TSK GEL ODS-80 Ts 2.0 x 150 mm, eluent: mixed solution of methanol containing 10 mM ammonium acetate/water).

Result of ESI-MS

Compound (M-39):m/z=1725(nega),891(nega), 862(nega), 830(nega), 415(posi)

Result of MALDI-MS

Compound (M-39): m/z=893(nega), 829(nega), 102(posi)

Differences of the numeric values between the ESI-MS results and the MALDI-MS results were attributed to differences in the intensity of the isotope peaks detected during ionization or differences in the solution (principally, the presence or absence of ammonium acetate) during measurement.

Compound (M-39) was also subjected to ESR analysis. This confirmed that in a powder state, the compound had the structure in which three nitrogen atoms interact with a copper ion. It was also confirmed that, in the recording layer (amorphous film), the compound had the same coordinate structure as in the powder state. Since the dye was present in solid form in the recording layer, a structure of Cu ions:azo dye anions of 1:1 was adopted in the same manner as in the powder state. In the solution (tetrahydrofuran - methylene chloride), a structure differing from that of the solid state was confirmed. Synthesis of Compound (M-41)

To a 50 mL eggplant-shaped flask were charged 500 mg of compound (M-39) and 15 mL of methanol. While stirring, a solution in which 320 mg of compound (3) was dissolved in 10 mL of methanol was added and the mixture was hot refluxed for 3 hours. After adding 20 mL of distilled water, the mixture was returned to room temperature and the precipitate was filtered out. The solid obtained was dissolved again in methanol, the insoluble matter produced was filtered out, distilled water was added to the filtrate, and re-precipitation was conducted. The precipitate was filtered out, washed with distilled water, and dried, yielding 570 mg of compound (M-41). The compound was identified by MALDI-MS. m/z=893(nega), 831(nega), 494(posi)

(M-40) and (M-42) to (M-53) were synthesized by the similar method as used to synthesize above-described compounds (M-39) and (M-41). The compounds were identified by MALDI-MS.

Various cation-containing azo metal complex dyes can be synthesized by the above-described method. The compounds can be identified by MALDI-MS, ESI-MS, and ESR.

<<Evaluation of the properties of the azo dye compounds>>

1. Measurement and analysis of refractive index n and attenuation coefficient k

Dye coating liquids of the example compounds shown in Table 3 were prepared by the same methods as the recording layer coating liquid, described further below. The dye-containing coating liquids that were obtained were coated by spin coating to a glass sheet 1.1 mm in thickness under conditions of 23˚G and 50 percent RH while varying the rotational speed from 500 to 1,000 rpm. The refractive index n and attenuation coefficient k at 405 nm of the dye films were measured and analyzed with a spectral ellipsometer (Model M-2000, made by J. A. Woollam Japan Corp.)

2. Measurement of thermal decomposition temperature

The example compounds shown in Table 3 were subjected to TG/DTA measurement. The measurement was conducted by raising the temperature by 10˚C/minute over a range of from 30 to 550˚C under an $N_2$ gas flow (flow rate 200 mL/min) with an EXSTAR 6000 made by Seiko Instruments, Inc., and reading the temperature at the point where the mass reduction rate reached 10 percent.

3. Mass reduction rate in the main reduction process

Figs. 3 to 6 show the results of TG/TDA measurement of example compounds (M-9), (M-39), (M-50), and (C-1) obtained in 2. above. The mass reduction rates in the main reduction process can be obtained from each of the Figures. From Fig. 3 showing the TG/TDA measurement result of example compound (M-9), it is revealed that the thermal decomposition temperature of example compound (M-9) is 321 ˚C and the mass reduction rate in the main reduction process is 29 percent. From Fig. 4 showing the TG/TDA measurement result of example compound (M-39), it is revealed that the thermal decomposition temperature of example compound (M-39) is 275 ˚C and the mass reduction rate in the main reduction process is 21 percent. From Fig.5 showing the TG/TDA measurement result of example compound (M-50), it is revealed that the thermal decomposition temperature of example compound (M-50) is 321 ˚C and the mass reduction rate in the main reduction process is 24 percent. From Fig. 6 showing the TG/TDA measurement result of example compound (C-1), it is revealed that the thermal decomposition temperature of example compound (C-1) is 321 ˚C and the mass reduction rate in the main reduction process is 17 percent. The mass reduction rates in the main reduction process were obtained for example compounds (M-26), (M-40), (M-41), (M-42), (M-43) and (M-44) by the same method.

4. Measurement of total amount Q of heat generated in the main reduction process

Example compounds (M-9), (M-39), (M-50), and (C-1) were sealed in closed cells made of SUS. A DSC device (DSC 6200R made by Seiko Instruments, Inc.) was employed to raise the temperature 10˚C/minute over a range from 30 to 550˚C, and the amount of heat generated in the main reduction process as calculated by TG/TDA above was determined. Figs. 7 to 10 give the DSC measurement results. From Fig. 7 showing the DSC measurement result of example compound (M-9), it is revealed that the amount of heat generated in the main reduction process of example compound (M-9) is 303 J/g. From Fig. 8 showing the DSC measurement result of example compound (M-39), it is revealed that the amount of heat generated in the main reduction process of example compound (M-39) is 232 J/g. From Fig. 9 showing the DSC measurement result of example compound (M-50), it is revealed that the amount of heat generated in the main reduction process of example compound (M-50) is 308 J/g. From Fig. 10 showing the DSC measurement result of example compound (C-1), it is revealed that the amount of heat generated in the main reduction process of example compound (C-1) is 339 J/g. The total amount of heat generated in the main reduction process of example compounds (M-26), (M-41), (M-42), (M-43), and (M-44) was determined by the same method.
The above results are given in Table 3.

Table 3

| | Attenuation coefficient k at a wavelength of 405nm | Refractive index n at a wavelength of 405nm | Thermal decomposition temperature (˚C) | Mass reduction rate in the main reduction process (%) | Total amount Q of heat generated in the main reduction process (J/g) |
|---|---|---|---|---|---|
| (M-9) | 0.24 | 1.46 | 321 | 29 | 303 |
| (M-39) | 0.28 | 1.47 | 275 | 21 | 232 |
| (M-50) | 0.23 | 1.56 | 321 | 24 | 308 |
| (C-1) | 0.17 | 1.48 | 321 | 17 | 339 |
| (M-26) | 0.26 | 1.73 | 208 | 30 | 275 |
| (M-40) | 0.21 | 1.51 | 305 | 19 | - |
| (M-41) | 0.30 | 1.56 | 313 | 15 | 363 |
| (M-42) | 0.26 | 1.49 | 332 | 22 | 386 |
| (M-43) | 0.20 | 1.48 | 311 | 42 | 307 |
| (M-44) | 0.22 | 1.57 | 300 | 21 | 203 |
| (M-1) | 0.18 | 1. 46 | 336 | 25 | 525 |
| (M-6) | 0.15 | 1. 44 | 246 | 25 | 419 |
| (M-8) | 0.16 | 1. 43 | 242 | 28 | - |
| (M-10) | 0.19 | 1. 55 | 93 | 50 | 536 |

<<Preparation of the ultraviolet radiation-curable composition>>

The ultraviolet radiation-curable composition employed as bonding agent to form the bonding layer can be prepared by adding polyfunctional monomer and a thickening agent to monofunctional monomer, then adding a photopolymerization initiator, and rendering the mixture uniform by stirring in a dark location. The method of preparing will be described below for the example of ultraviolet radiation-curable composition F. Ultraviolet radiation-curable compositions A to E can also be similarly prepared.

1. Preparation example: ultraviolet radiation-curable composition F

Monofunctional monomer in the form of 2-ethylhe>xyl acrylate (21 g: made by Wako Pure Chemical Industries, Ltd.), polyfunctional monomer in the form of a crosslinking agent obtained by adding 40 moles of ethylene oxide to 1 mole of glycerin and then reacting the product with acrylate chloride (0.5 g of NK ESTHER ASO 40EO made by Shin-Nakamura Chemical Co., Ltd.), thickening agent in the form of polybutyl acrylate (7 g, made by Aldrich Corp., Mw = 101,000, Mn = 38,000), and photopolymerization initiator in the form of 1-hydroxycyclohexylphenylketone (0.5 g, made by Wako Pure Chemical Industries, Ltd.) were stirred form 3 hours in a dark location and left standing overnight to obtain ultraviolet radiation-curable composition F.

2. Viscosity measurement

The viscosity of the ultraviolet radiation-curable compositions A to F that had been obtained, and SD-640 and SD-661, made by Dainippon Ink and Chemicals, Inc., were measured at 25˚C with a Model R500 viscometer made by Toki Sangyo Co., Ltd. The results are given in Table 4.

<<Preparation of an optical information recording medium>>

Example 1

(Preparation of the support)

An injection-molded support 1.1 mm in thickness, 120 mm in outer diameter, 15 mm in inner diameter, comprised of polycarbonate resin, and having spiral pregrooves (track pitch: 320 nm; groove width (groove (concave portion) width): 190 nm; groove depth: 47 nm; groove tilt angle: 65˚; wobble amplitude: 20 nm) was prepared. The stamper employed in injection molding was mastered by laser cutting (351 nm).

(Formation of the reflective layer)

An ANC light reflective layer (Ag: 98.1 at%, Nd: 0.7 at%, Cu: 0.9 at%) was formed as a vacuum-formed film layer 60 nm in thickness by DC sputtering in an argon atmosphere using a Cube manufactured by Unaxis Corp. on the support. The thickness of the light reflective layer was adjusted by means of the sputtering time.

(Formation of the recordable layer)

A 1 g quantity of example compound (M-39) was added to and dissolved in 100 mL of 2,2,3,3-tetrafluoropropanol to prepare a dye-containing coating liquid. The dye-containing coating liquid that had been prepared was coated on the light reflective layer under conditions of 23˚C and 50 percent RH while varying the rotational speed from 500 to 2,200 rpm by spin coating to form a recordable recording layer. The recordable recording layer was 40 nm in thickness on grooves and 15 nm in thickness on lands.

After forming the recordable recording layer, annealing was conducted in a clean oven. In the annealing process, the support was supported while creating a gap with spacers in the vertical stack pole and maintained for 1 hour at 80˚C.

(Forming the barrier layer)

Subsequently, a barrier layer 10 nm in thickness comprised of $Nb_2O_5$ was formed by DC sputtering in an argon atmosphere with a Cube made by Unaxis Corp. on the recordable recording layer.

The medium on which the barrier layer had been formed was placed on a spin coating device and ultraviolet radiation-curable composition F was coated in the form of a ring in the vicinity of 30 mm of the inner circumference. After positioning a polycarbonate film (Teijin Pureace, 90 micrometers in thickness) with an inner diameter of 15 mm and an outer diameter of 120 mm from above, the assembly was rotated at a rotational speed of 2,000 to 8,000 rpm. In this manner, centrifugal force was used to extend the bonding agent out to the outer circumference, yielding a bonding agent layer of uniform thickness. The sample was transferred to a UV irradiation table and irradiated with UV radiation to cure the UV bonding agent. The UV lamp employed for curing was a 4.2-inch SPIRAL LAMP made by Xenon Corporation; a flashing light, providing 0.5 s of illumination with each flash, was illuminated multiple times to cure the bonding agent. The distance between the lamp surface and sample surface was about 35 mm. The ultraviolet radiation exposure level was 2,000 mJ/cm$^2$. The thickness of the bonding layer formed was 10 micrometers.
The optical information recording medium of Example 1 was prepared in this manner.

Examples 2 to 6

With the exceptions that the ultraviolet radiation-curable compositions shown in Table 4 were employed instead of ultraviolet radiation-curable composition F and the period of irradiation with ultraviolet radiation to cure the composition was changed to vary the ultraviolet radiation exposure level, optical information recording media were prepared by the same method as in Example 1.

Ultraviolet radiation exposure level

The ultraviolet radiation exposure level used to cure the bonding layer was measured as follows.
Measurement was conducted with an exposure illumination intensity measuring device in the form of a Model EC-100FL made by Ushio Inc. set to cumulative light level measurement mode. A polycarbonate film (Teijin Pureace, thickness: 90 micrometers) was placed on the light-receiving element of the measuring device, which was placed on a UV radiation illumination element. Light flashing for an exposure period of 0.5 s each flash was irradiated 3, 6, and 10 times and the cumulative light level was measured each time. Plotting of the relation between the exposure time and the cumulative

light level revealed a good linear relation between exposure time and cumulative light level. Accordingly, the slope of an approximate straight line passing through the origin was adopted as the exposure level per unit time, and the product of the exposure level per unit time and the exposure period was adopted as the exposure level. The results are given in Table 4. The light-receiving element of the measuring device had a radius of 40 mm. Thus, the values given in Table 4 were obtained using measurement results for a radius of 40 mm as representative values, and there was a possibility of variation in the in-plane intensity due to the lamp.
Since this measuring device measured relative values, the measured values were obtained without unit. However, the numeric values given in Table 4 have been converted to energy and expressed in units of $mJ/cm^2$. This is because the cumulative light level when irradiated for 3 s without positioning a polycarbonate film approximately matched the manufacturer's data (measured as energy in units of $mJ/cm^2$).

Measurement of gel ratio

The gel ratio of the bonding layer following curing was measured by the following method for the optical information recording media of Examples 2 to 6 and Comparative Examples 1 and 2.
Cuts were made with a knife in the outer circumference rim portion on the film side of the polycarbonate films of the various media prepared to partially separate the film locally, and from there, the entire film was peeled off the support. There were some portions in which the reflective layer came off on the film side, but in most cases, the reflective layer separated at the boundary with the bonding agent. The support with reflective layer and film with bonding layer were thus separated. The bonding layer on the film was scraped off with a metal spatula to obtain a cured bonding layer sample. For some of Examples and Comparative Examples, depending on the quantity of cured bonding layer sample obtained, this operation was conducted on multiple pieces of media to ensure the quantity required for weight measurement.
The weight W1 of the cured bonding layer sample obtained was measured, the sample was immersed in a methyl ethyl ketone solution that was 100-fold weight W1, heating was conducted for 8 hours in a heating furnace at 80°C, and the uncured portion was dissolved out. The supernatant solution of the solution was removed within 10 minutes of the conclusion of heating, natural drying was conducted for 48 hours or more in an environment of 25°C and 50 percent RH, and the sample was heat dried for 3 hours in a heating furnace at 100°C to obtain sample from which the uncured portion had been dissolved out. The weight W2 after dissolving out the uncured portion was measured. While stationary, the supernatant solution was removed with a pipet or the like by aspiration. 80 to 90 percent of the supernatant solution was removed, and the remainder was vaporized by natural drying and heat drying. Some of the dissolved out portion remained, but priority was given to not removing undissolved portions that had precipitated, and care was exercised not to aspirate the precipitate.
The gel ratio was calculated from the following equation:

$$\text{Gel ratio (\%)} = 100 - (W1-W2)/W1 \times 100$$

A gel ratio attaining 90 percent was considered to indicate adequately advanced curing.
The results are given in Table 4.
Table 4

| | Ultraviolet radiation-curable composition | Viscosity (mPa·s) | Exposure level of Ultraviolet radiation ($mJ/cm^2$) | Gel ratio (%) |
|---|---|---|---|---|
| Example 1 | F | 56 | 2000 | Not measured |
| Example 2 | SD-661 made by Dainippon Ink and Chemicals, Inc. | 552 | 500 | 93 |
| Example 3 | C | 182 | 750 | 100 |
| Example 4 | D | 219 | 500 | 94 |
| Example 5 | E | 108 | 2000 | 100 |
| Example 6 | B | 181 | 1500 | 100 |

(continued)

| | Ultraviolet radiation-curable composition | Viscosity (mPa·s) | Exposure level of Ultraviolet radiation (mJ/cm$^2$) | Gel ratio (%) |
|---|---|---|---|---|
| Comp. Ex. 1 | SD-640 made by Dainippon Ink and Chemicals, Inc. | 222 | 500 | 100 |
| Comp. Ex. 2 | A | 75 | 500 | 100 |

<<Measurement of the glass transition temperature and storage modulus of elasticity of the bonding layer>>

(1) Preparation of a sample for use in measuring dynamic viscoelastic behavior

Ultraviolet radiation-curable compositions A to F, and SD-640 and SD-661, made by Dainippon Ink and Chemicals, Inc., were coated on glass supports and cured by irradiation with ultraviolet radiation at the exposure levels indicated in Table 4 in a nitrogen atmosphere with an M02-L31 metal halide lamp (made by Eyegraphics Co., Ltd., with cold mirror, lamp output 120 W/cm) to obtain samples for measurement (samples 1 to 6 and comparative samples 1 and 2).

(2) Measurement of glass transition temperature (Tg)

The cured coatings obtained were cut to measure 2 cm vertically and 0.5 cm horizontally and the dynamic viscoelastic behavior was measured at a frequency of 1 Hz with a dynamic viscoelasticity measuring device: DVA-200 (made by IT Instrument Control Co., Ltd.) (rate of temperature increase: 5˚C/min). The measurement mode was set to tension mode or shear mode (see Table 5). The storage modulus of elasticity at 30˚C was obtained in the same manner. The measurement results are given in Table 5.

(3) Measurement of glass transition temperature (DSC)

The glass transition temperature (DSC) of cured coatings obtained in the same manner as in (2) was measured by SC/DSC. The measurement results are given in Table 5. The measurement method will be described below.
DSC device: Using a DSC 6200R made by Seiko Instruments, Inc., the samples were sealed in closed cells made of SUS, the temperature was raised 10˚C/minute over a range of -100 to 100˚C, and a first glass transition temperature was determined. The temperature was then dropped 50˚C/minute from 100 to -100˚C, the temperature was raised 10˚C/minute over the range -100 to 100˚C, and a second glass transition temperature was determined. This point was referred to as the glass transition temperature (DSC).
To measure the glass transition temperature and storage modulus of elasticity, the cured coatings in the samples employed for measurement were formed somewhat thicker than in the bonding layer in the optical information recording media of Examples and Comparative Examples. Table 5 shows the thickness of the cured coatings of samples 2 to 6 and comparative samples 1 and 2. However, since neither the glass transition temperature nor the storage modulus of elasticity is affected by coating thickness, the results shown in Table 5 can be deemed to be evaluation results for the corresponding Examples and Comparative Examples.
Table 5

| | Ultraviolet radiation-curable composition | Cured coating thickness (μm) | Measurement mode | Glass transition temperature (tanδ) (˚C) | Storage modulus of elasticity (MPa) | Glass transition temperature (DSC) (˚C) |
|---|---|---|---|---|---|---|
| Sample 1 | F | Not measured | Shear mode | -53 | 0.01 | -63 |
| Sample 2 | SD-661 made by Dainippon Ink and Chemicals, Inc. | 719 | Tension mode | 15 5 | 14 | -3.6 |
| Sample 3 | C | 445 | Tension mode | -11 | 7.5 | -17 |

(continued)

| | Ultraviolet radiation-curable composition | Cured coating thickness (μm) | Measurement mode | Glass transition temperature (tanδ) (˚C) | Storage modulus of elasticity (MPa) | Glass transition temperature (DSC) (˚C) |
|---|---|---|---|---|---|---|
| Sample 4 | D | 372 | Tension mode | -17 | 28 | -26 |
| Sample 5 | E | 612 | Tension mode | -31 | 1.35 | -43 |
| Sample 6 | B | 217 | Tension mode | 25 | 27.5 | 7.7 |
| Comparative sample 1 | SD-640 made by Dainippon Ink and Chemicals, Inc. | 394 | Tension mode | 99 | 2600 | 58 |
| Comparative sample 2 | A | 810 | Tension mode | 64 | 2190 | 51 |

<<Evaluation of recording characteristics>>

1. Evaluation of C/N (carrier/noise ratio)

A 0.16 micrometer signal (2T) was recorded on and reproduced from the prepared optical information recording media at a clock frequency of 66 MHz and a linear speed of 4.92 m/s with an apparatus for evaluating recorded and reproduced information (DDU1000 made by Pulstech Corp.) equipped with a 403 nm laser and an NA 0.85 pickup, and the output was measured with a spectral analyzer (FSP-3 made by Rohde-Schwarz). Peak output observed in the vicinity of 16 MHz following recording was adopted as the carrier output, and the output at the same frequency before recording was adopted as the noise output. The output following recording minus the output prior to recording was taken as the C/N value. Recording was conducted on grooves. The recording power ranged from 2 to 8 mW and the reproducing power was 0.3 mW. The recording powers at which the C/N value reached 25 dB were shown in Table 6. A recording power of equal to or lower than 4 mW at which the C/N value reached 25 dB was considered to be a good recording sensitivity. Fig. 11 shows the relation between the 2T recording C/N ratio and the recording power for Example 4 in which ultraviolet radiation-curable composition D was employed, Example 5 in which ultraviolet radiation-curable composition E was employed, and Comparative Example 1 in which SD-640 made by Dainippon Ink and Chemicals, Inc. was employed.

Table 6

| | Recording layer dye | Ultraviolet radiation-curable composition | Recording sensitivity Recording power at which the C/N value reached 25 dB (mW) |
|---|---|---|---|
| Example 1 | Ex. Compound (M-39) | F | 2.2 |
| Example 2 | Ex. Compound (M-39) | SD-661 made by Dainippon Ink and Chemicals, Inc. | 3.7 |
| Example 3 | Ex. Compound (M-39) | C | 2.5 |
| Example 4 | Ex. Compound (M-39) | D | 3.0 |
| Example 5 | Ex. Compound (M-39) | E | 2.4 |
| Example 6 | Ex. Compound (M-39) | B | 3.4 |
| Comp. Ex. 1 | Ex. Compound (M-39) | SD-640 made by Dainippon Ink and Chemicals, Inc. | 5.0 |
| Comp. Ex. 1 | Ex. Compound (M-39) | A | 4.5 |

With the exception that Example Compound (M-9), (M-50), or (C-1) was employed instead of Example Compound (M-39), optical information recording media were prepared by the same method as Examples 1 to 6, Comparative Examples 1 and 2. The optical information recording media obtained were evaluated in the same manner as set forth above, confirming that media employing ultraviolet radiation-curable compositions A-F, SD-640 and SD-661 made by Dainippon Ink and Chemicals, Inc. were employed exhibited good recording sensitivity. Evaluation of 2.9 T signal waveform

A roughly 0.16 micrometer signal (9 T signal) was recorded on and reproduced from the optical information recording media of Examples 3 to 5 and Comparative Example 1 at a linear speed of 4.92 m/s and clock frequency of 66 MHz with a recording and reproduction evaluating device (made by Pulstec Industrial Co., Ltd.: DDU 1000) comprising a 403 nm laser and NA 0.85 pick-ups, and the output was measured with a spectrum analyzer (Rohde - Schwarz, Model FSP-3). Recording was conducted over grooves. In this process, measurements were made while increasing the peak power level used in recording from 2.0 mW to 10.0 mW in increments of 0.5 mW. The recording power at which the waveform most closely approximated a rectangular waveform was selected as the optimal recording power. The fact that the 9 T signal waveform approached a rectangular waveform was extremely important in reducing recorded signal reading errors.

A roughly 0.72 micrometer signal (9 T signal) was recorded and reproduced and the output waveform was measured at the above-described optimal recording power with a model DL7440 oscilloscope made by Yokogawa Electric Corporation. The waveform employed was an average waveform obtained by picking up and averaging 200 waveforms.

Fig. 12 is a descriptive drawing of 9 T signal waveforms. In Fig. 12, Figs. P and R show images of poor 9 T waveforms, and Fig. Q shows the image of a good 9 T waveform. The horizontal axis denotes times and the vertical axis denotes reflected signal voltage. The waveforms obtained were roughly divided into groups schematically, yielding the waveforms of Figs. P and Q in Fig. 12. When both Figs. P and Q can be obtained in the process of increasing the recording power, there is a point at which, it is possible to achieve a waveform close to that of Fig. Q between the respective recording powers. Figs. 13 to 16 show 9 T signal waveforms that were obtained. As shown in Fig. 16, in the optical information recording medium of Comparative Example 1, which had a bonding layer with a glass transition temperature exceeding 25˚C, almost no amplitude appeared in the front half of the recorded portion (region of short time/ns). By contrast, adequate amplitude was achieved in the front half of the recorded portions and good 9 T signal waveforms were exhibited by the optical information recording media of Examples 3 to 5, which had bonding layers with glass transition temperatures of equal to or lower than 25˚C, as shown in Figs. 13 to 15. Optical information recording media prepared by the same method as in Examples 3 to 5, with the exception that Example Compounds (M-9), (M-50), and (C-1) were employed, were also confirmed to exhibit good 9 T signal waveforms.

The same recording characteristic evaluation was conducted for optical information recording media prepared by the same method as Example 5 with the exception that Example Compound (M-39) was replaced with Example Compounds (M-1), (M-6), (M-8), (M-10), (M-26), (M-40), (M-41), (M-42), (M-43), (M-44) and (M-50). These optical information recording media were also confirmed to exhibit good recording sensitivity and good 9 T signal waveforms. Further, 9 T recording was conducted on optical information recording media in which Example Compounds (M-1), (M-6), (M-8), (M-10), (M-44) and (M-50) were employed, the media were reproduced 200 thousands times with a reproduction beam having power of 0.6 mW, and the reproduced signal waveforms were observed. Almost no change was observed in the 9 T signal waveform after reproduction of 200 thousands times and good reproduction durability was confirmed.

From the fact that the following comparative compounds (A) and (B) exhibited significant change in the waveform in the same condition as mentioned above, it was confirmed that the comparative compounds had poor reproduction durability.

Comparative compound (A): compound described in Japanese Unexamined Patent Publication (KOKAI) Nos. 2005-297406 and 2005-297407

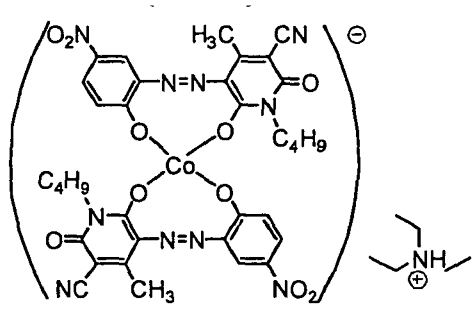

Comparative compound (B): compound described in Japanese Unexamined Patent Publication (KOKAI) No.

2006-306070

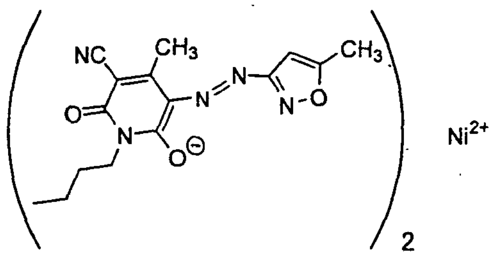

Table 7

| | Attenuation coefficient k at a wavelength of 405 nm | Refractive index n at a wavelength of 405 nm | Thermal decomposition temperature (˚C) | Mass reduction rate in the main reduction process (%) | Total quantity Q of heat generated in the main reduction process (J/g) |
|---|---|---|---|---|---|
| Comparative compound (A) | Greater than 0.30 | - | 331 | 33 | 800 |
| Comparative compound (B) | 0.53 | 1.34 | 271 | 17 | - |

From the above results, it was proven that both good recording characteristics and reproduction durability, that had been difficult to achieve, could be achieved by the optical information recording medium of the present invention.

The optical information recording medium of the present invention is suitable for use as a Blu-ray optical information recording medium for recording information with the irradiation of a short-wavelength laser beam.

Although the present invention has been described in considerable detail with regard to certain versions thereof, other versions are possible, and alterations, permutations and equivalents of the version shown will become apparent to those skilled in the art upon a reading of the specification and study of the drawings. Also, the various features of the versions herein can be combined in various ways to provide additional versions of the present invention. Furthermore, certain terminology has been used for the purposes of descriptive clarity, and not to limit the present invention. Therefore, any appended claims should not be limited to the description of the preferred versions contained herein and should include all such alterations, permutations, and equivalents as fall within the true spirit and scope of the present invention.

Having now fully described this invention, it will be understood to those of ordinary skill in the art that the methods of the present invention can be carried out with a wide and equivalent range of conditions, formulations, and other parameters without departing from the scope of the invention or any embodiments thereof.

Unless otherwise stated, a reference to a compound or component includes the compound or component by itself, as well as in combination with other compounds or components, such as mixtures of compounds.

As used herein, the singular forms "a," "an," and "the" include the plural reference unless the context clearly dictates otherwise.

Additionally, the recitation of numerical ranges within this specification is considered to be a disclosure of all numerical values and ranges within that range. For example, if a range is from about 1 to about 50, it is deemed to include, for example, 1, 7, 34, 46.1, 23.7, or any other value or range within the range.

## Claims

**1.** An optical information recording medium comprising a recording layer on a surface of a support, wherein
the surface of the support has pregrooves comprised of plural grooves and lands positioned between adjacent grooves,
the pregrooves have a track pitch ranging from 50 to 500 nm,

a reflective layer, the recording layer, a barrier layer, and a cover layer are positioned in this order on the surface of the support, and a layer formed by curing an ultraviolet radiation-curable composition is positioned between the barrier layer and the cover layer, the layer having a glass transition temperature of equal to or lower than 25˚C,
the recording layer ranges in thickness from 1 to 100 nm on the lands and from 5 to 150 nm on the grooves,
the recording layer comprises at least one azo dye compound selected from the group consisting of an azo compound and an azo metal complex compound comprising an azo compound and a metal ion or metal oxide ion, and
the azo dye compound has an attenuation coefficient ranging from 0.15 to 0.3 at a wavelength of 405 nm.

**2.** The optical information recording medium according to claim 1, wherein the azo dye compound has a refractive index ranging from 1.45 to 1.75 at a wavelength of 405 nm.

**3.** The optical information recording medium according to claim 1 or 2, wherein the azo dye compound has a thermal decomposition property such that a mass reduction rate is equal to or greater than 10 percent in a main reduction process in thermal mass spectrometry.

**4.** The optical information recording medium according to claim 3, wherein the azo dye compound exhibits a total quantity of heat generated in the main reduction process ranging from -200 to 500 J/g.

**5.** The optical information recording medium according to any of claims 1 to 4, wherein the azo dye compound has a thermal decomposition temperature ranging from 250 to 350˚C.

**6.** The optical information recording medium according to any of claims 1 to 5, wherein the metal ion comprised in the azo metal complex compound is a copper ion.

**7.** The optical information recording medium according to any of claims 1 to 6, wherein a ratio of the thickness on the lands and the thickness on the grooves, the thickness on the lands/the thickness on the grooves, of the recording layer ranges from 0.1 to 1.

**8.** The optical information recording medium according to any of claims 1 to 7, wherein the ultraviolet radiation-curable composition comprises 20 to 99 weight parts of monofunctional (meth)acrylate and 1 to 80 weight parts of polyfunctional (meth)acrylate per 100 weight parts of the ultraviolet radiation-curable composition.

**9.** The optical information recording medium according to any of claims 1 to 8, wherein information is recorded by irradiation of a laser beam having a wavelength ranging from 390 to 440 nm.

**10.** A method of recording information onto the recording layer comprised in the optical information recording medium according to any of claims 1 to 9 by irradiation of a laser beam having a wavelength ranging from 390 to 440 nm onto the optical information recording medium.

Fig. 1

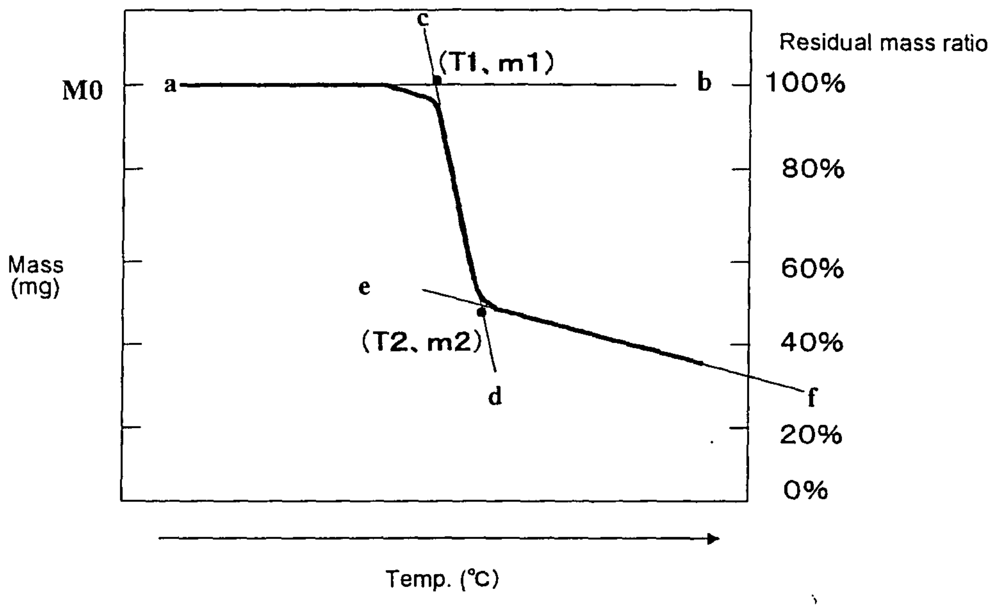

c
(T1、m1)
M0
a
b
100%
Residual mass ratio
80%
Mass
(mg)
60%
e
(T2、m2)
40%
d
f
20%
0%
Temp. (℃)

Fig. 2

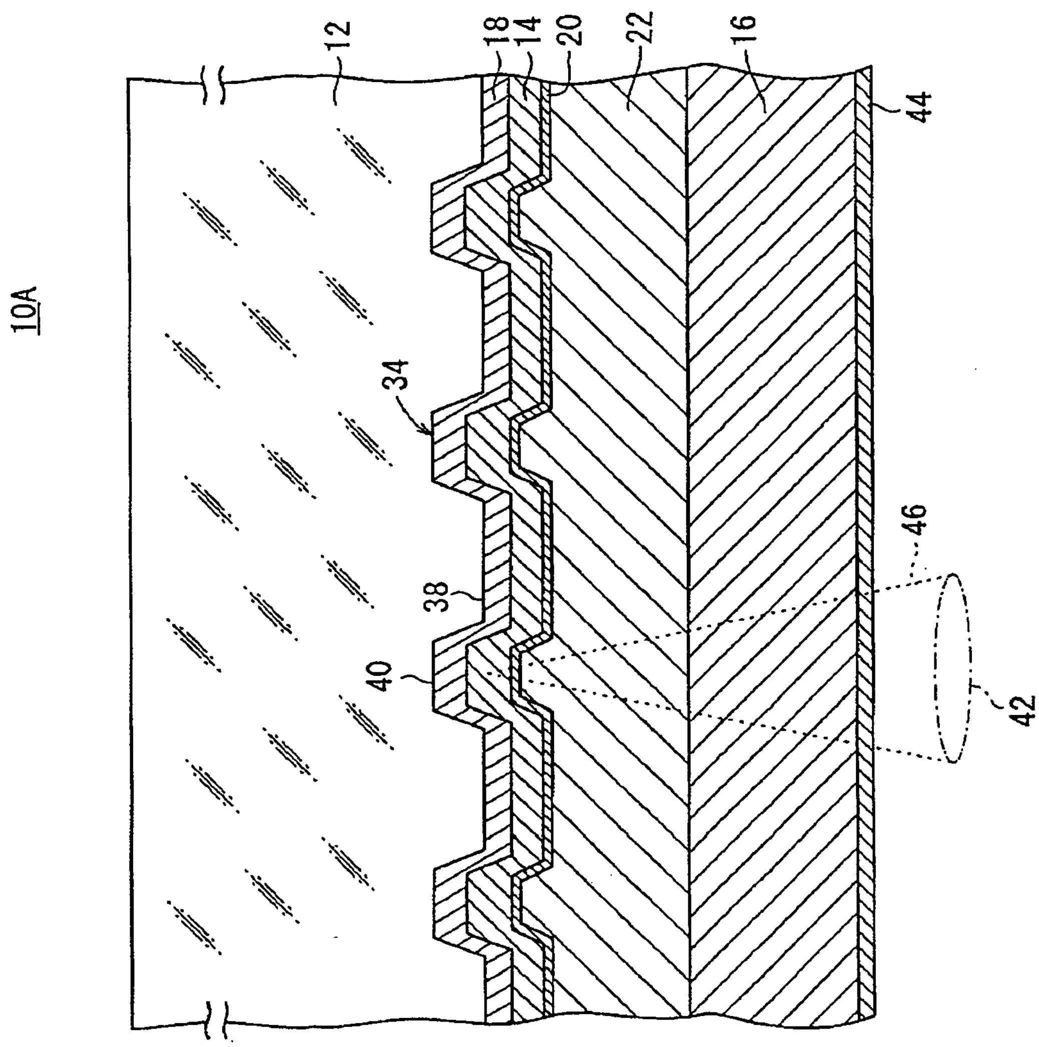

# Fig. 3

## TG/TDA measurement result of (M-9)

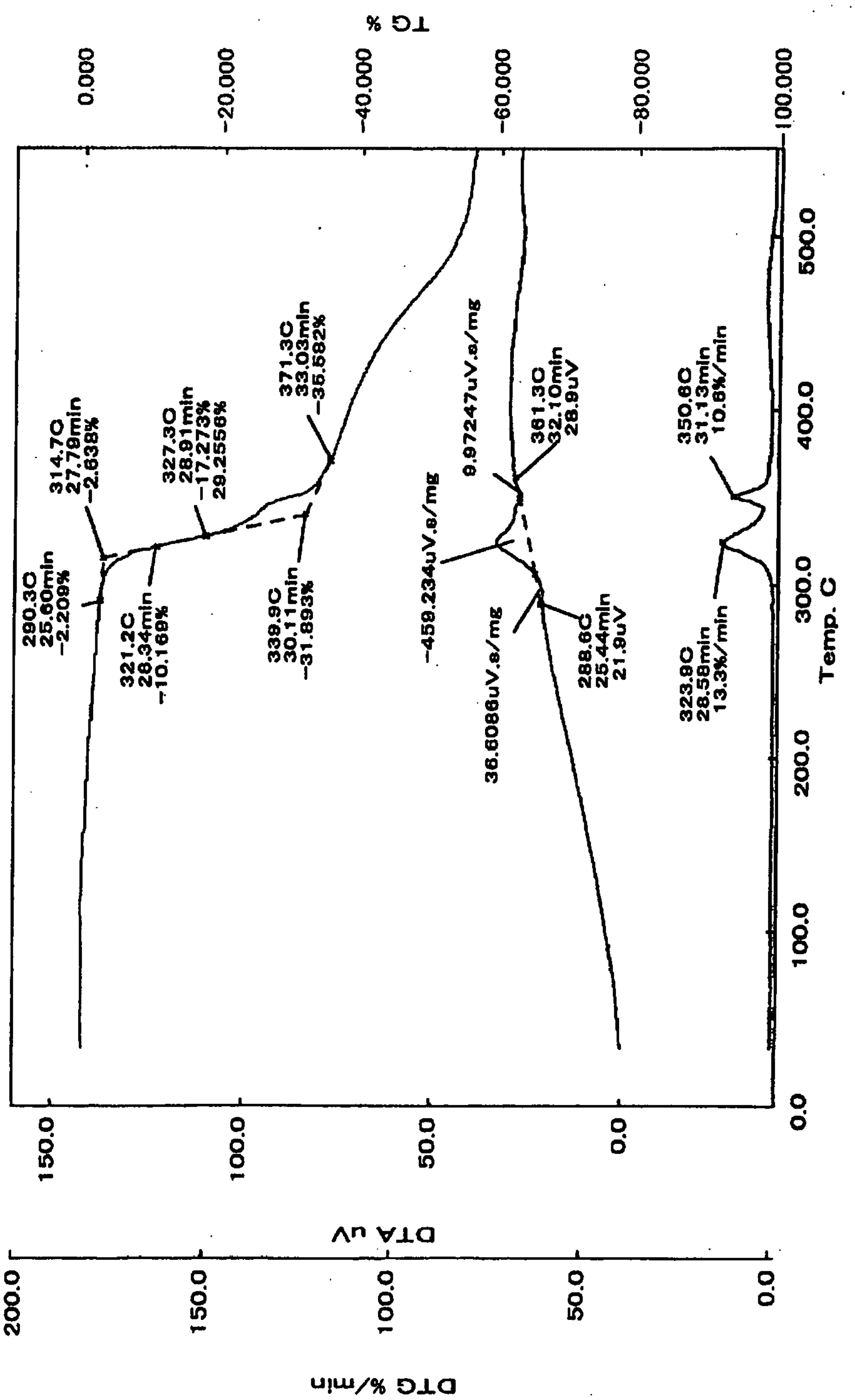

Fig. 4

TG/TDA measurement result of (M-39)

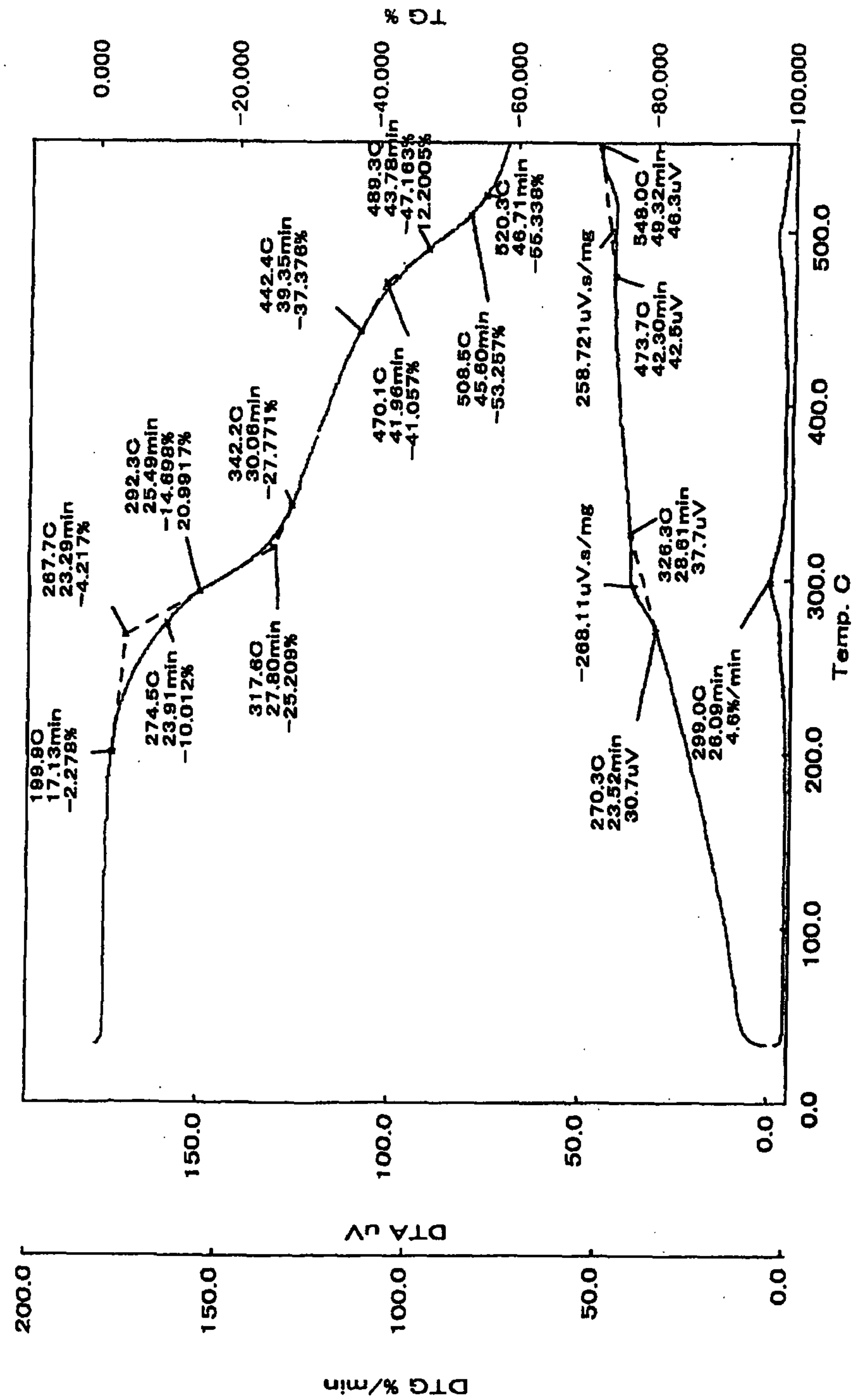

# Fig. 5

## TG/TDA measurement result of (M-50)

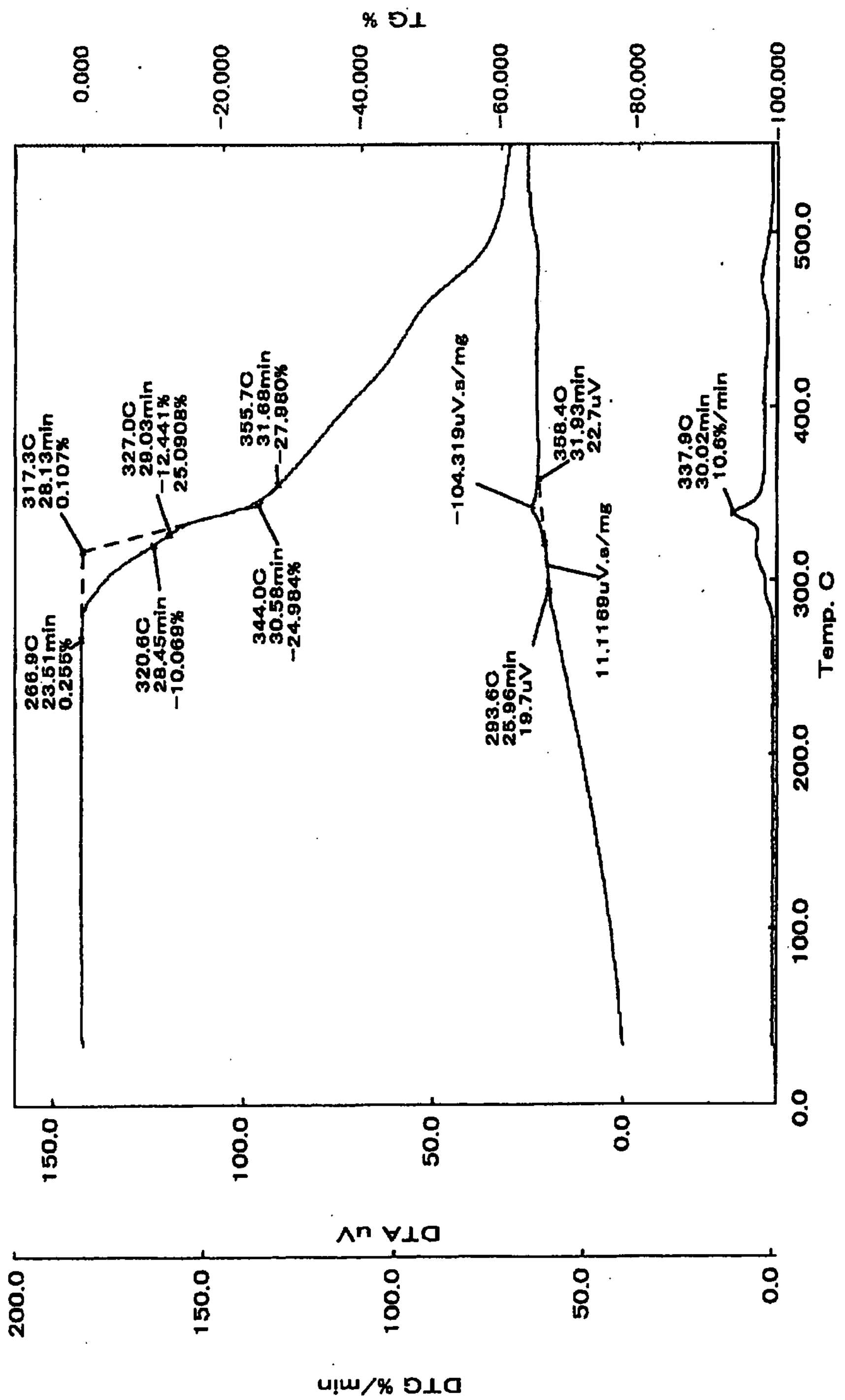

Fig. 6

TG/TDA measurement result of (C-1)

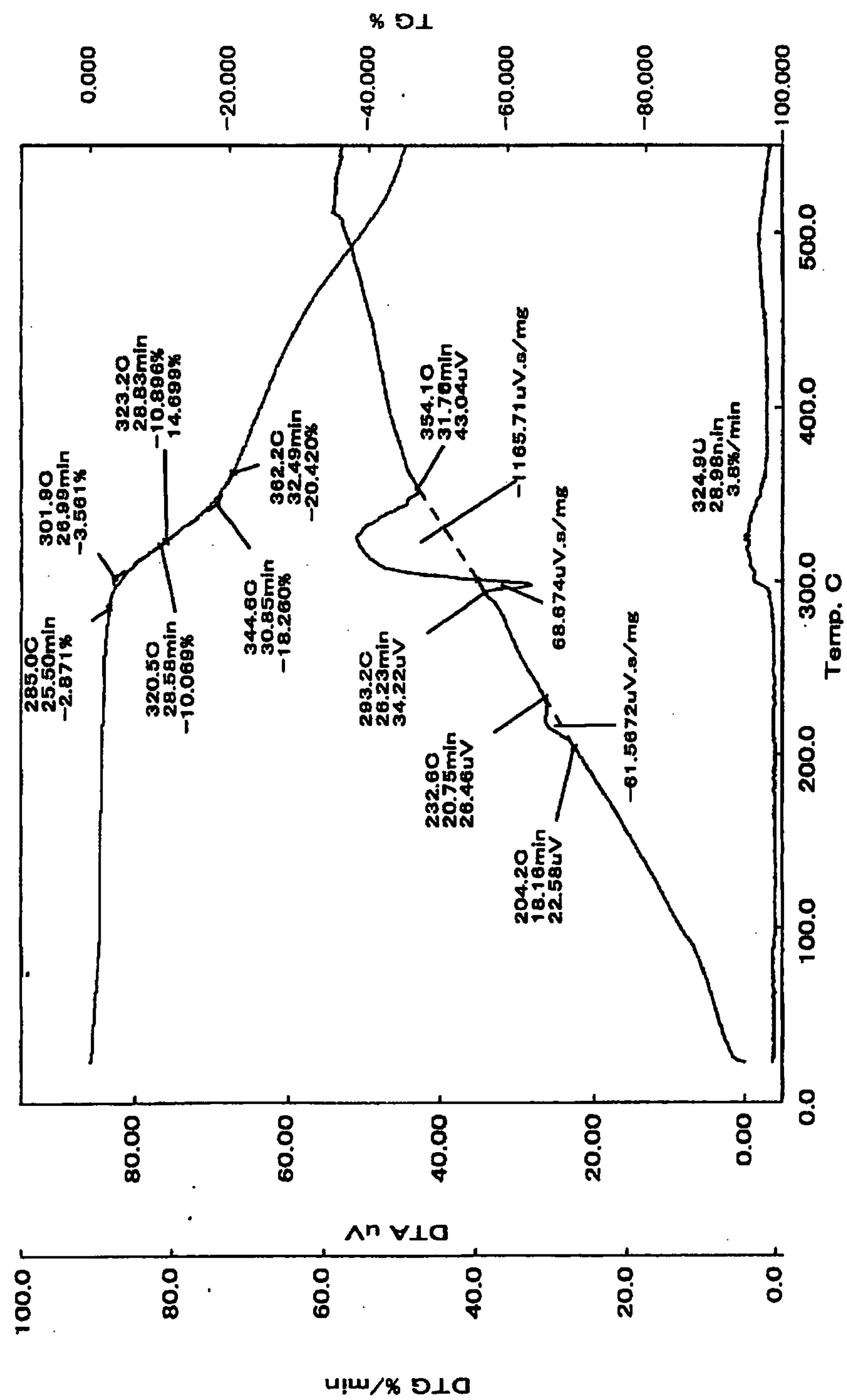

Fig. 7

DSC measurement result of (M-9)

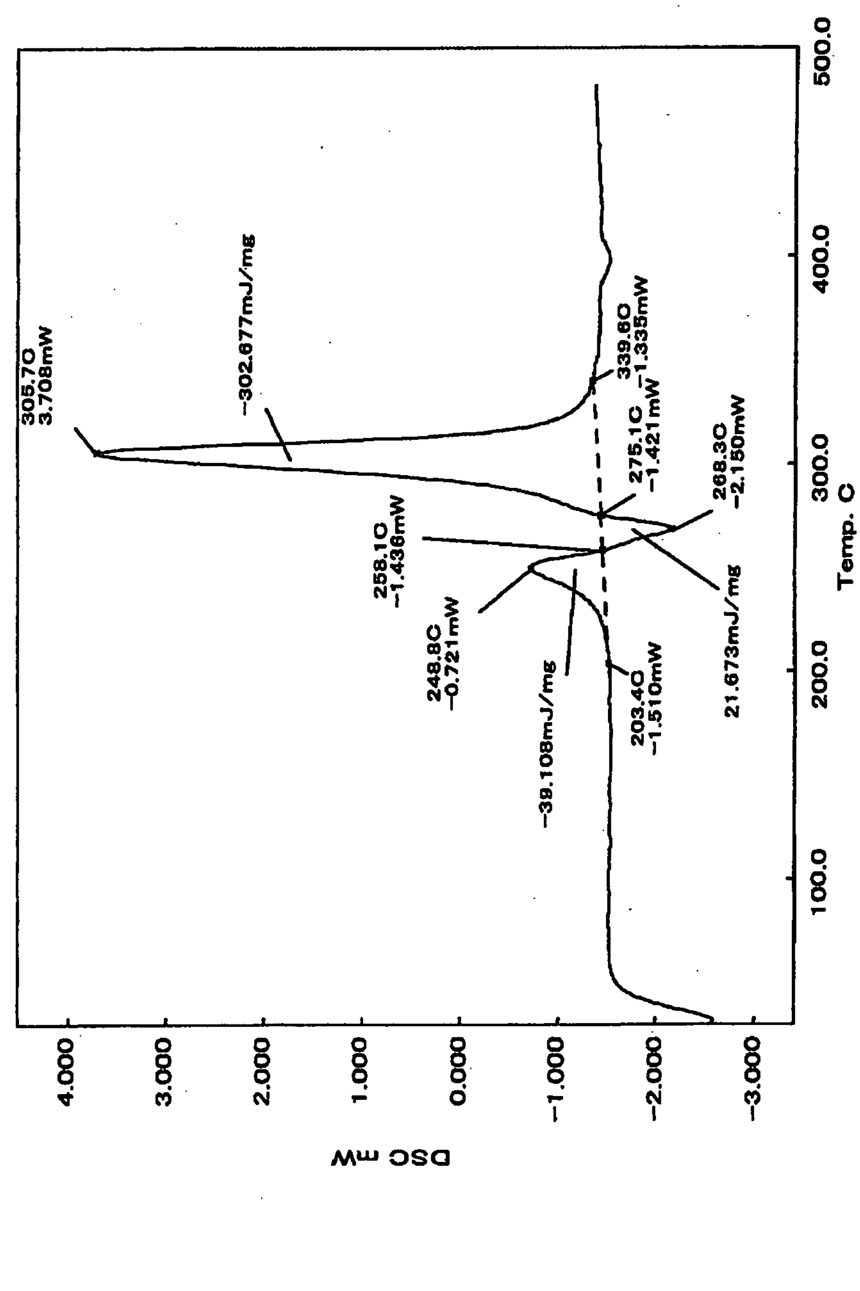

Fig. 8

DSC measurement result of (M-39)

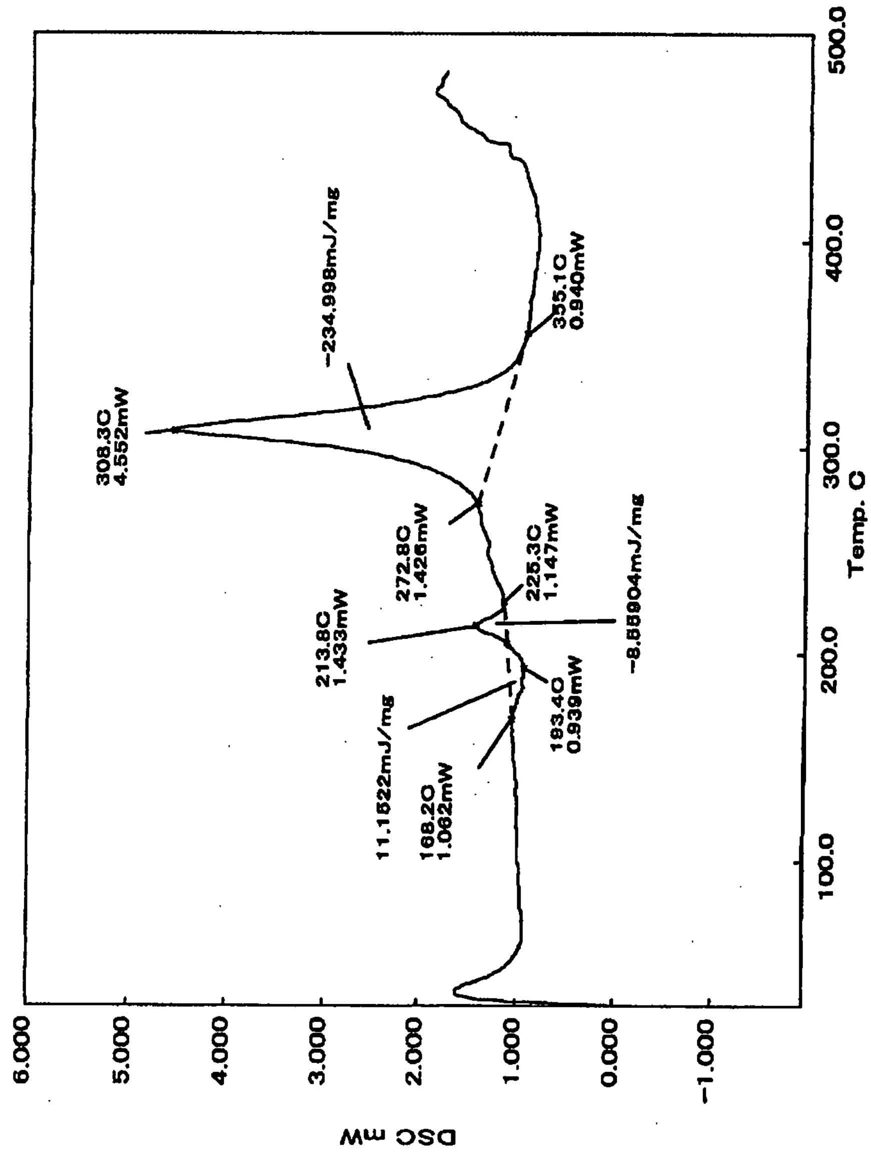

Fig. 9

DSC measurement result of (M-50)

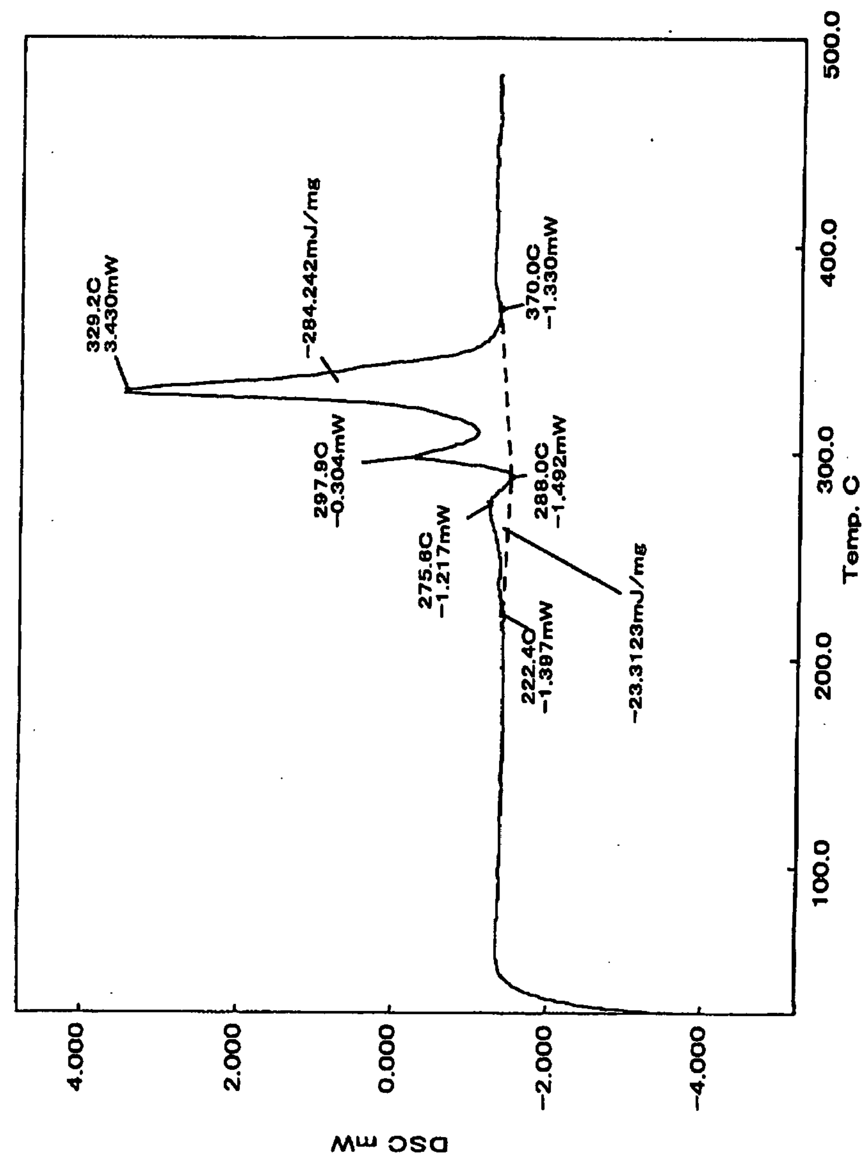

Fig. 10

DSC measurement result of (C-1)

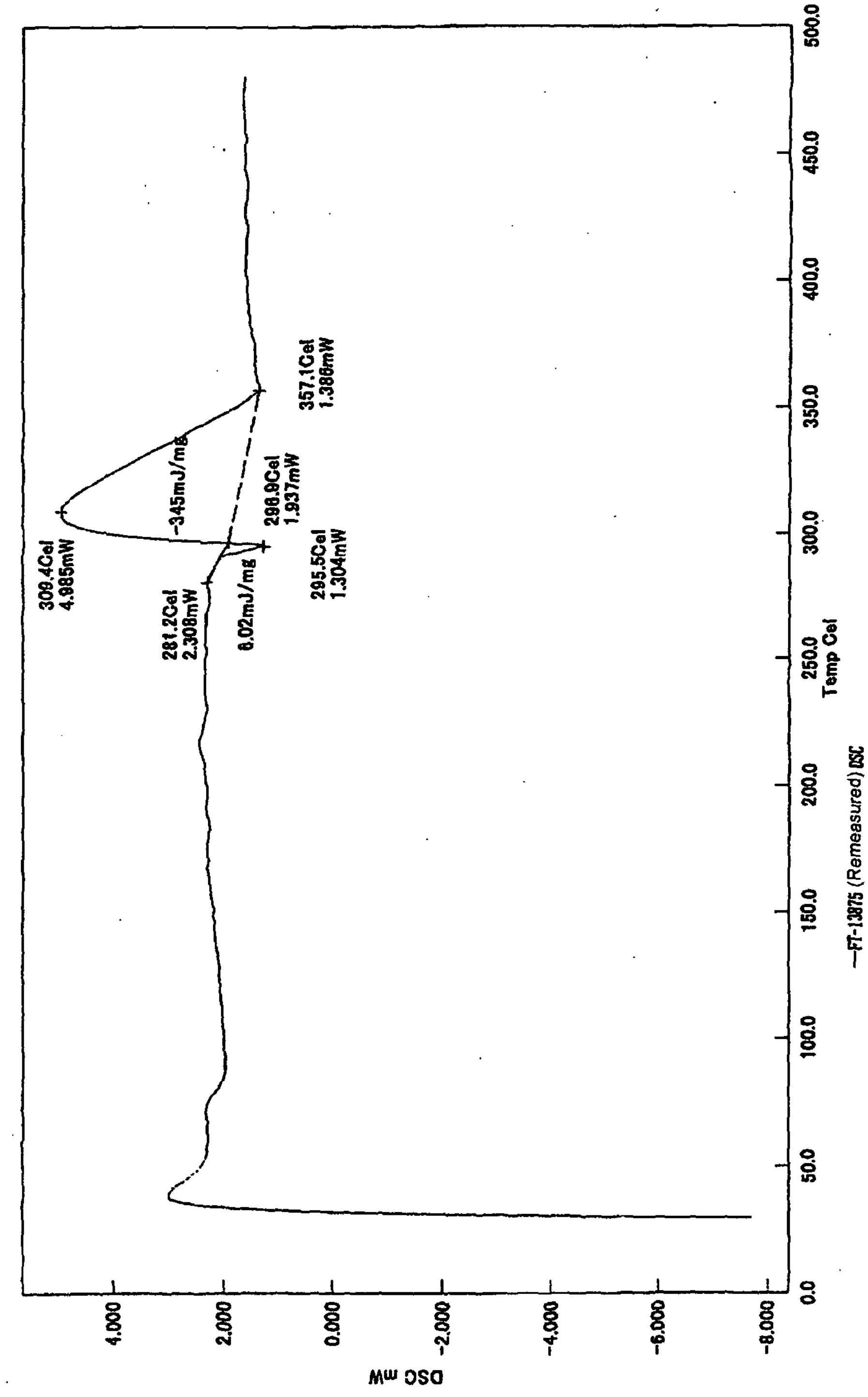

Fig. 11

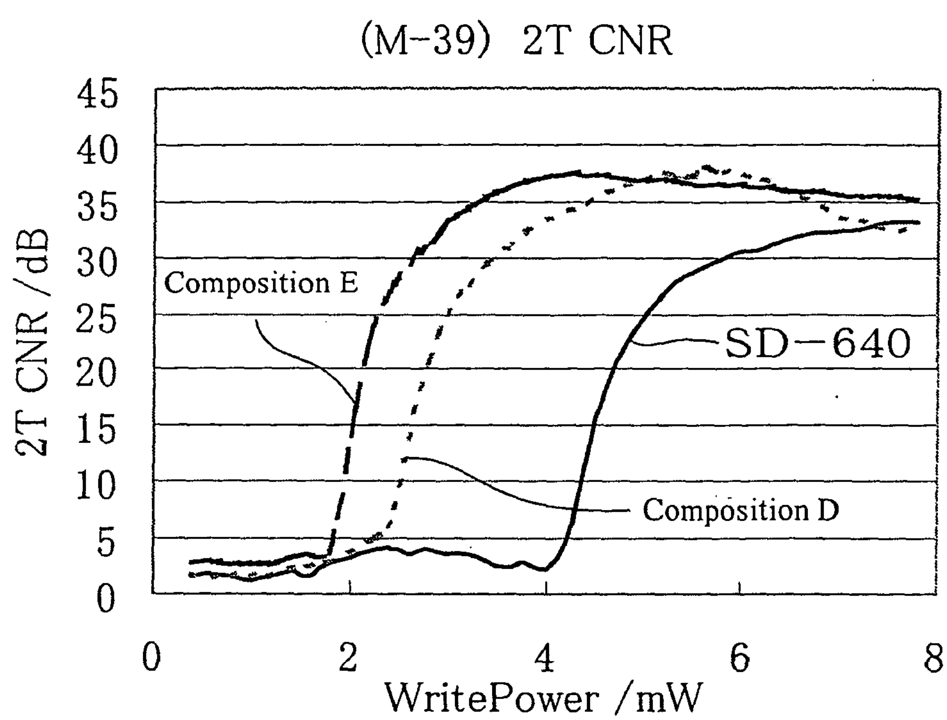
(M-39) 2T CNR
45
40
35
30
25
20
15
10
5
0
2T CNR /dB
Composition E
SD-640
Composition D
0
2
4
6
8
WritePower /mW

Fig. 12

Fig. P

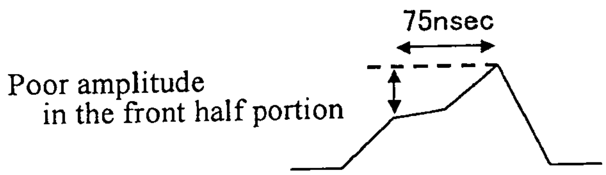


Fig. Q

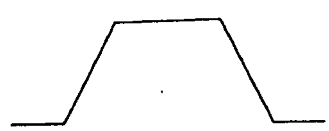

Fig. R

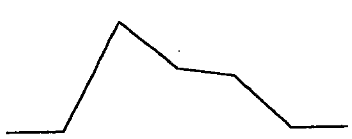

Fig. 13

9T signal waveform in Example 3

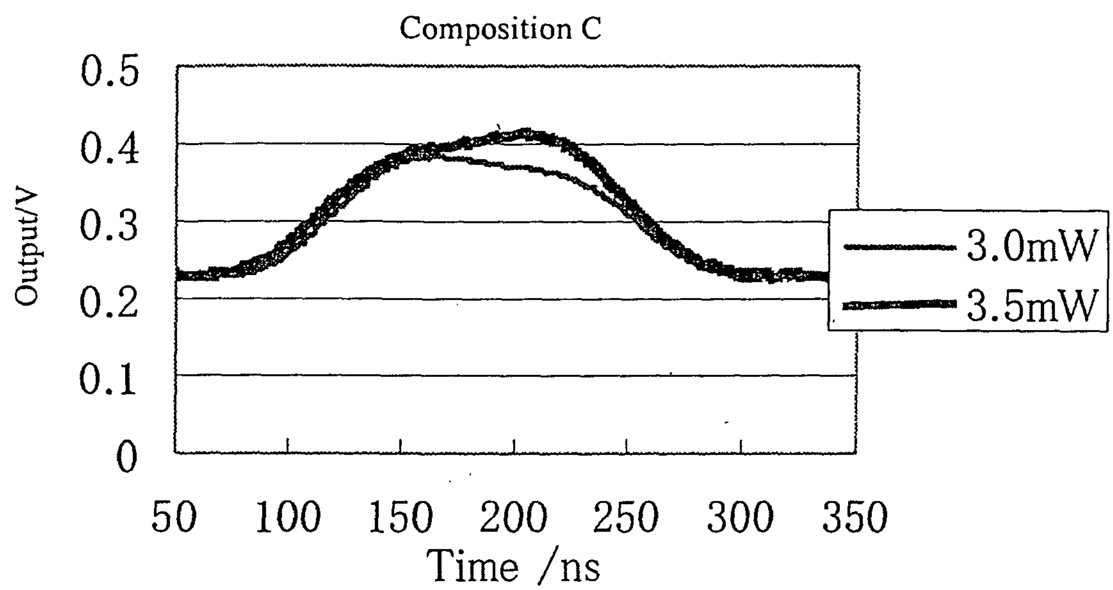


Fig. 14

9T signal waveform in Example 4

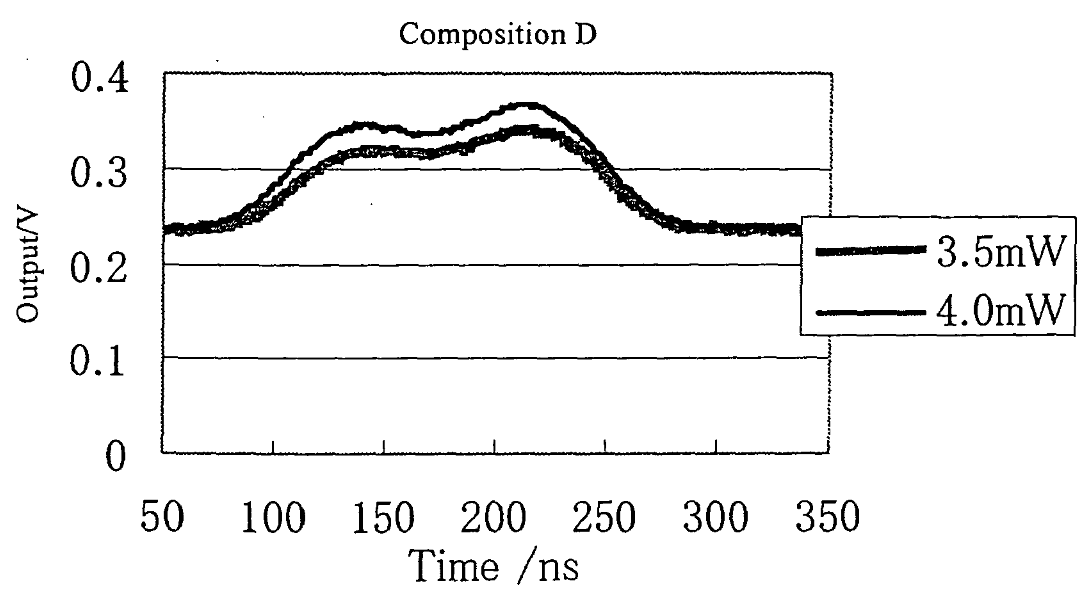

Fig. 15

9T signal waveform in Example 5

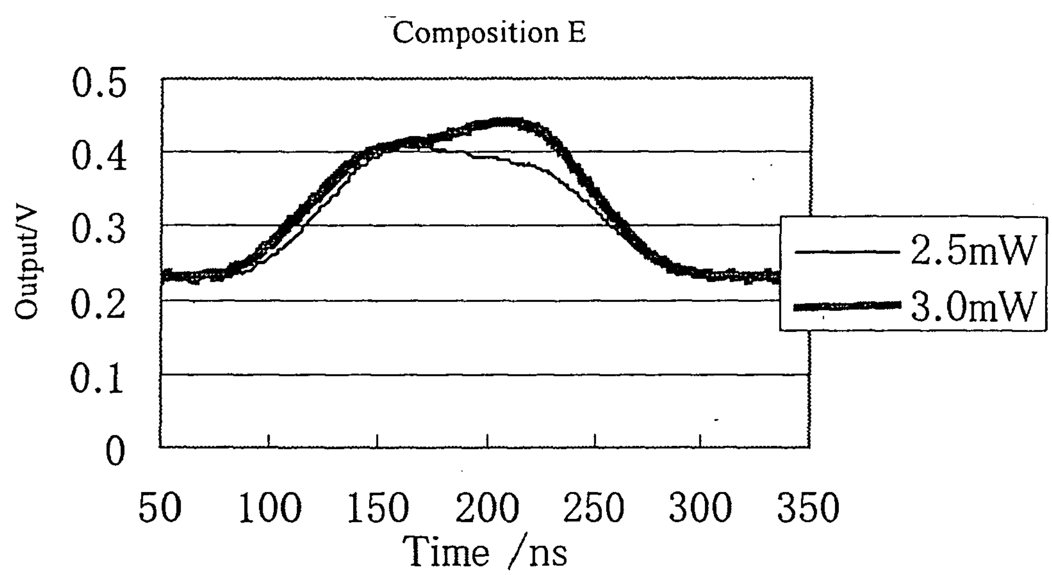


Fig. 16

9T signal waveform in Comp. Ex. 1

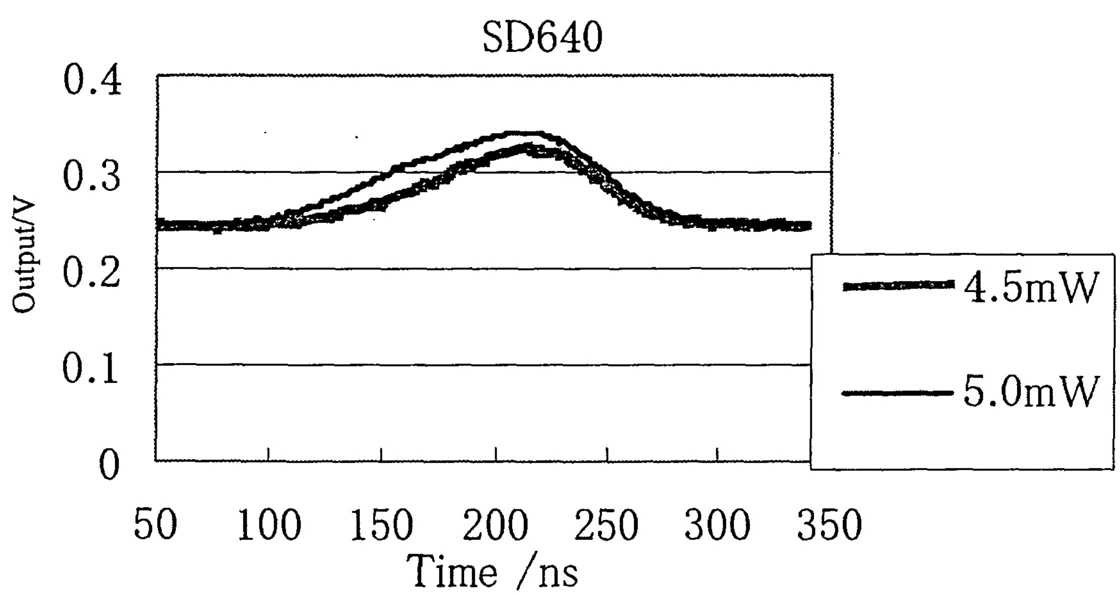

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11310728 A
- JP 11130970 A
- JP 2002274040 A
- JP 2000168237 A
- JP 2001158862 A
- JP 2006142789 A
- JP 2006306070 A
- EP 1864822 A1
- JP 2005297406 A
- US 20050227178 A1
- JP 2005297407 A
- US 20050226135 A1
- JP 2007026541 A
- US 20060204706 A1
- JP 61036362 A
- JP 2006057076 A
- JP 10151861 A
- JP 58175693 A
- JP 59081194 A
- JP 60018387 A
- JP 60019586 A
- JP 60019587 A
- JP 60035054 A
- JP 60036190 A
- JP 60036191 A
- JP 60044554 A
- JP 60044555 A
- JP 60044389 A
- JP 60044390 A
- JP 60054892 A
- JP 60047069 A
- JP 63209995 A
- JP 4025492 A
- JP 1038680 A
- JP 6026028 A
- DE 350399

### Non-patent literature cited in the description

- *Journal of the Japanese Chemical Society,* October 1992, 1141